# EUROPEAN PATENT APPLICATION

(11) **EP 4 447 501 A1**
(43) Date of publication of application: **16.10.2024**
(21) Application number: 23739883.9
(22) Date of filing: 05.01.2023
(51) Int. Cl.: H04W 4/06

(54) **COMMUNICATION METHOD AND COMMUNICATION APPARATUS**

(30) Priority: 11.01.2022 CN 202210029089; 25.04.2022 CN 202210442943
(71) Applicant: Huawei Technologies Co., Ltd., Shenzhen, Guangdong 518129 (CN)
(72) Inventor: LIU, Nannan, Shenzhen, Guangdong 518129 (CN); LI, Bingzhao, Shenzhen, Guangdong 518129 (CN); XIE, Xi, Shenzhen, Guangdong 518129 (CN)
(74) Representative: Goddar, Heinz J.
(86) International application number: PCT/CN2023/070730
(87) International publication number: WO 2023/134539

(57) **Abstract**

Embodiments of this application provide a communication method and a communication apparatus. The communication method includes: If a preset condition is satisfied, a terminal device skips sending first channel state information CSI at first time, where the preset condition includes at least one of the following: The first time does not belong to active time of a first discontinuous reception DRX and that the first time does not belong to active time of a second DRX set; the first time does not belong to active time of a first DRX and that the first time belongs to active time of a third DRX set; neither a first timer nor a second timer set is run at the first time; or a first timer is not run but a third timer set is run at the first time. In this technical solution, the terminal device can report CSI when a unicast DRX and a multicast DRX coexist.

## Description

This application claims priority to Chinese Patent Application No. 202210029089.9, filed with the China National Intellectual Property Administration on January 11, 2022 and entitled "COMMUNICATION METHOD AND COMMUNICATION APPARATUS", and claims priority to Chinese Patent Application No. 202210442943.4, filed with the China National Intellectual Property Administration on April 25, 2022 and entitled "COMMUNICATION METHOD AND COMMUNICATION APPARATUS", which are incorporated herein by reference in their entireties.

### TECHNICAL FIELD

Embodiments of this application relate to the communication field, and more specifically, to a communication method and a communication apparatus.

### BACKGROUND

In a wireless communication system, discontinuous reception (discontinuous reception, DRX) is introduced, to reduce power consumption of a terminal device while effective data transmission is ensured.

When a network device configures a DRX function for the terminal device, the terminal device may be enabled to enter a sleep state at some moments, so that the terminal device does not need to continuously monitor a physical downlink control channel (physical downlink control channel, PDCCH). When the terminal device needs to monitor the PDCCH, the terminal device may be woken up from the sleep state, to reduce the power consumption of the terminal device to some extent.

In a conventional technology, there is only a solution for how the terminal device reports channel state information CSI based on a unicast DRX. However, how the terminal device reports the CSI when the unicast DRX and a multicast DRX coexist becomes a technical problem that needs to be resolved.

### SUMMARY

Embodiments of this application provide a communication method and a communication apparatus, to implement CSI reporting of a terminal device when a unicast DRX and a multicast DRX coexist.

According to a first aspect, a communication method is provided, and includes: If a preset condition is satisfied, a terminal device skips sending first channel state information CSI at first time, where the preset condition includes any one or more of the following:
a first condition, where the first condition is that the first time does not belong to active time of a first discontinuous reception DRX and that the first time does not belong to active time of a second DRX set;
a second condition, where the second condition is that the first time does not belong to active time of a first DRX and that the first time belongs to active time of a third DRX set;
a third condition, where the third condition is that neither a first timer nor a second timer set is run at the first time;
a fourth condition, where the fourth condition is that a first timer is not run but a third timer set is run at the first time;
a tenth condition, where the tenth condition is that a first timer is not run at the first time and that the first time does not belong to active time of a fourth DRX set;
an eleventh condition, where the eleventh condition is that a first timer is not run at the first time and that the first time belongs to active time of a fifth DRX set;
a twelfth condition, where the twelfth condition is that the first time does not belong to active time of a first DRX and that a fourth timer set is not run; or
a thirteenth condition, where the thirteenth condition is that the first time does not belong to active time of a first DRX and that a fifth timer set is run, where
the first DRX is for controlling monitoring of control information specific to the terminal device;
the second DRX set includes at least one multicast DRX, the at least one multicast DRX includes a first multicast DRX, and the first multicast DRX is for controlling monitoring of control information related to a first multicast service;
the third DRX set includes at least one multicast DRX, the at least one multicast DRX includes a second multicast DRX, and the second multicast DRX is for controlling monitoring of control information related to a second multicast service;
the fourth DRX set includes at least one multicast DRX, the at least one multicast DRX includes a fourth multicast DRX, and the fourth multicast DRX is for controlling monitoring of control information related to a fifth multicast service;
the fifth DRX set includes at least one multicast DRX, the at least one multicast DRX includes a fifth multicast DRX, and the fifth multicast DRX is for controlling monitoring of control information related to a sixth multicast service;
during running of the first timer, the terminal device monitors the control information specific to the terminal device;
the second timer set includes at least one multicast timer, the at least one multicast timer includes a third multicast timer, and during running of the third multicast timer, the terminal device monitors control information related to a third multicast service;
the third timer set includes at least one multicast timer, the at least one multicast timer includes a fourth multicast timer, and during running of the fourth multicast timer, the terminal device monitors control information related to a fourth multicast service;
the fourth timer set includes at least one multicast timer, the at least one multicast timer includes a fifth multicast timer, and during running of the fifth multicast timer, the terminal device monitors control information related to a seventh multicast service; and
the fifth timer set includes at least one multicast timer, the at least one multicast timer includes a sixth multicast timer, and during running of the sixth multicast timer, the terminal device monitors control information related to an eighth multicast service.

In this way, if the preset condition is satisfied, the terminal device skips sending CSI at the first time. Accordingly, the terminal device may send the CSI or may skip sending the CSI beyond the preset condition. This technical solution provides a plurality of implementations of reporting the CSI by the terminal device.

With reference to the first aspect, in an implementation of the first aspect, the preset condition includes the first condition, and that a terminal device skips sending first CSI at first time includes: For a first cell set, the terminal device skips sending the first CSI at the first time, where the first cell set includes at least one cell, and the first cell set is associated with the first DRX.

When the preset condition includes the first condition, for the first cell set, the terminal device skips sending the CSI at the first time.

With reference to the first aspect, in an implementation of the first aspect, the first cell set includes a second cell set, where the second cell set is associated with the second DRX set, and the second cell set includes at least one cell.

With reference to the first aspect, in an implementation of the first aspect, the preset condition includes the second condition, and that a terminal device skips sending first CSI at first time includes: For a third cell set, the terminal device skips sending the first CSI at the first time, where the third cell set includes at least one cell, and the third cell set is not associated with the third DRX set.

When the first time does not belong to the active time of the first DRX, but belongs to the active time of the third DRX set, for the third cell set that is not associated with the third DRX set, the terminal device skips sending the first CSI at the first time.

With reference to the first aspect, in an implementation of the first aspect, the third cell set is associated with the first DRX.

With reference to the first aspect, in an implementation of the first aspect, the first cell set includes the third cell set.

With reference to the first aspect, in an implementation of the first aspect, the third cell set is not associated with a fifth multicast service set, where the fifth multicast service set includes at least one multicast service, the at least one multicast service includes a ninth multicast service, and no multicast DRX is configured for the ninth multicast service.

In this embodiment of this application, when no multicast DRX is configured in a multicast joined by the terminal device, the terminal device may also report the CSI.

With reference to the first aspect, in an implementation of the first aspect, the fifth multicast service set is associated with the first DRX.

With reference to the first aspect, in an implementation of the first aspect, the preset condition includes the third condition, and that a terminal device skips sending first CSI at first time includes: For the first cell set, the terminal device skips sending the first CSI at the first time.

With reference to the first aspect, in an implementation of the first aspect, the first cell set includes a fourth cell set, where the fourth cell set is associated with the second timer set, and the fourth cell set includes at least one cell.

With reference to the first aspect, in an implementation of the first aspect, the preset condition includes at least one of the first condition, the third condition, the tenth condition, and the twelfth condition, and the preset condition further includes: A multicast DRX is configured for a tenth multicast service, where the tenth multicast service includes a multicast service joined by the terminal device.

In this embodiment of this application, multicast DRXes are configured for all multicast services joined by the terminal device, so that the terminal device can report the CSI based on the multicast DRXes.

With reference to the first aspect, in an implementation of the first aspect, the tenth multicast service is associated with the first DRX.

With reference to the first aspect, in an implementation of the first aspect, the preset condition includes the fourth condition, and that a terminal device skips sending first CSI at first time includes: For a fifth cell set, the terminal device skips sending the first CSI at the first time, where the fifth cell set includes at least one cell, and the fifth cell set is not associated with the third timer set.

With reference to the first aspect, in an implementation of the first aspect, the fifth cell set is associated with the first timer or the first DRX.

With reference to the first aspect, in an implementation of the first aspect, the first cell set includes the fifth cell set.

With reference to the first aspect, in an implementation of the first aspect, the fifth cell set is not associated with a seventh multicast service set, where the seventh multicast service set includes at least one multicast service, the at least one multicast service includes an eleventh multicast service, and no multicast DRX is configured for the eleventh multicast service.

In this embodiment of this application, when no multicast DRX is configured in the multicast joined by the terminal device, the terminal device may also report the CSI.

With reference to the first aspect, in an implementation of the first aspect, the seventh multicast service set is associated with the first DRX.

With reference to the first aspect, in an implementation of the first aspect, the preset condition includes the tenth condition, and that a terminal device skips sending first CSI at first time includes: For the first cell set, the terminal device skips sending the first CSI at the first time, where the first cell set includes the at least one cell, and the first cell set is associated with the first DRX.

In this embodiment of this application, if the first timer is not run, for the first cell set or a cell that is associated with the first DRX, the terminal device skips sending the CSI.

With reference to the first aspect, in an implementation of the first aspect, the first cell set includes an eighth cell set, where the eighth cell set is associated with the fourth DRX set, and the eighth cell set includes at least one cell.

In this embodiment of this application, when any multicast DRX in the fourth DRX set is not run, the terminal device skips sending the CSI in the eighth cell set or a cell that is associated with the fourth DRX set.

With reference to the first aspect, in an implementation of the first aspect, the preset condition includes the eleventh condition, and that a terminal device skips sending first CSI at first time includes: For a ninth cell set, the terminal device skips sending the first CSI at the first time, where the ninth cell set includes at least one cell, and the ninth cell set is not associated with the fifth DRX set.

In this embodiment of this application, the first time belongs to the active time of the fifth DRX set, and for the ninth cell set or a cell that is not associated with the fifth DRX set, the terminal device skips sending the CSI.

With reference to the first aspect, in an implementation of the first aspect, the ninth cell set is associated with the first DRX.

With reference to the first aspect, in an implementation of the first aspect, the first cell set includes the ninth cell set.

With reference to the first aspect, in an implementation of the first aspect, the ninth cell set is not associated with an eighth multicast service set, where the eighth multicast service set includes at least one multicast service, the at least one multicast service includes a twelfth multicast service, and no multicast DRX is configured for the twelfth multicast service.

In this embodiment of this application, when no multicast DRX is configured in the multicast joined by the terminal device, the terminal device may also report the CSI.

With reference to the first aspect, in an implementation of the first aspect, the eighth multicast service set is associated with the first DRX.

With reference to the first aspect, in an implementation of the first aspect, the preset condition includes the twelfth condition, and that a terminal device skips sending first CSI at first time includes: For the first cell set, the terminal device skips sending the first CSI at the first time.

With reference to the first aspect, in an implementation of the first aspect, the first cell set includes a tenth cell set, where the tenth cell set is associated with the fourth timer set, and the tenth cell set includes at least one cell.

In this embodiment of this application, if a fourth timer is not run at the first time, the terminal device skips sending the CSI in a cell or a cell set that is associated with the fourth timer.

With reference to the first aspect, in an implementation of the first aspect, the preset condition includes the thirteenth condition, and that a terminal device skips sending first CSI at first time includes: For an eleventh cell set, the terminal device skips sending the first CSI at the first time, where the eleventh cell set includes at least one cell, and the eleventh cell set is not associated with the fifth timer set.

In this embodiment of this application, if the fifth timer set is run at the first time, the terminal device skips sending the CSI in a first cell that is not associated with the fifth timer set.

With reference to the first aspect, in an implementation of the first aspect, the eleventh cell set is associated with the first timer or the first DRX.

With reference to the first aspect, in an implementation of the first aspect, the first cell set includes the eleventh cell set.

With reference to the first aspect, in an implementation of the first aspect, the eleventh cell set is not associated with a ninth multicast service set, where the ninth multicast service set includes at least one multicast service, the at least one multicast service includes a thirteenth multicast service, and no multicast DRX is configured for the thirteenth multicast service.

In this embodiment of this application, when no multicast DRX is configured in the multicast joined by the terminal device, the terminal device may also report the CSI.

With reference to the first aspect, in an implementation of the first aspect, the ninth multicast service set is associated with the first DRX.

With reference to the first aspect, in an implementation of the first aspect, the first CSI includes any one or more of the following:
semi-persistent CSI; periodic CSI; CSI configured on a physical uplink shared channel PUSCH; semi-persistent CSI configured on a PUSCH; CSI configured on a physical uplink control channel PUCCH; periodic CSI configured on a PUCCH; semi-persistent CSI configured on a PUCCH; CSI that is layer 1 reference signal received power L1-RSRP; CSI that is not L1-RSRP; periodic CSI that is L1-RSRP; periodic CSI that is not L1-RSRP; CSI that is configured on a PUCCH and that is L1-RSRP; CSI that is configured on a PUCCH and that is not L1-RSRP; periodic CSI that is configured on a PUCCH and that is L1-RSRP; or periodic CSI that is configured on a PUCCH and that is not L1-RSRP.

With reference to the first aspect, in an implementation of the first aspect, that a terminal device skips sending first CSI at first time includes any one or more of the following:

The terminal device skips sending CSI on the PUCCH; the terminal device skips sending the periodic CSI on the PUCCH; the terminal device skips sending the semi-persistent CSI on the PUCCH; the terminal device skips sending the semi-persistent CSI on the PUSCH; the terminal device skips sending CSI on the PUSCH; the terminal device skips sending, on the PUCCH, the CSI that is the L1-RSRP; the terminal device skips sending, on the PUCCH, the CSI that is not the L1-RSRP; the terminal device skips sending, on the PUCCH, the periodic CSI that is the L1-RSRP; or the terminal device skips sending, on the PUCCH, the periodic CSI that is not the L1-RSRP.

With reference to the first aspect, in an implementation of the first aspect, the preset condition includes the third condition and/or the fourth condition, and the preset condition further includes:

The terminal device obtains first information, where the first information indicates the terminal device to send the CSI during running of a unicast timer and/or during running of a multicast timer.

In this technical solution, a network device may indicate the terminal device to send the CSI at specific time.

With reference to the first aspect, in an implementation of the first aspect, the preset condition includes at least one of the third condition, the fourth condition, the twelfth condition, and the thirteenth condition, and the method and/or the preset condition further include/includes: The terminal device obtains eighth information, where the eighth information indicates the terminal device to send the CSI during the running of the multicast timer.

In this technical solution, the network device may indicate the terminal device to send the CSI during the running of the multicast timer.

With reference to the first aspect, in an implementation of the first aspect, the preset condition includes the tenth condition and/or the eleventh condition, and the method and/or the preset condition further include/includes: The terminal device obtains first information, where the first information indicates the terminal device to send the CSI during running of a unicast timer.

In this technical solution, a network device may indicate the terminal device to send the CSI during the running of the unicast timer.

With reference to the first aspect, in an implementation of the first aspect, the preset condition further includes any one or more of the following: The terminal device does not obtain second information, where the second information includes information related to a wake-up signal; the first time is not within duration corresponding to the first timer; or the first timer is started or restarted.

With reference to the first aspect, in an implementation of the first aspect, the preset condition includes the first condition and/or the second condition, and the preset condition further includes any one or more of the following: The terminal device obtains second information, where the second information includes information related to a wake-up signal; the first time is within duration corresponding to the first timer; or the first timer is not started or not restarted.

With reference to the first aspect, in an implementation of the first aspect, the preset condition further includes:
The terminal device does not obtain third information; and/or the terminal device does not obtain fourth information, where the third information indicates to report the periodic CSI that is the L1-RSRP or the CSI that is the L1-RSRP, and the fourth information indicates to report the periodic CSI that is not the L1-RSRP or the CSI that is not the L1-RSRP.

In this technical solution, the terminal device may transmit a specific type of CSI based on received information.

With reference to the first aspect, in an implementation of the first aspect, the method and/or the preset condition further include/includes:
The terminal device obtains fifth information, where the fifth information indicates the terminal device to send the CSI based on a multicast DRX.

In this technical solution, the network device may indicate the terminal to send the CSI based on the multicast DRX.

With reference to the first aspect, in an implementation of the first aspect, the method and/or the preset condition further include/includes:
The terminal device sends sixth information to a network device, where the sixth information indicates that the terminal device can or cannot send the CSI based on the multicast DRX; and/or
the terminal device sends seventh information to the network device, where the seventh information indicates that the terminal device prefers or does not prefer sending the CSI based on the multicast DRX.

In this technical solution, the terminal device may report, to the network device, a capability of or a preference for sending the CSI by the terminal device.

According to a second aspect, a communication method is provided, and includes:

If a preset condition is satisfied, a network device skips receiving first CSI at first time, where the preset condition includes at least one of the following:
a first condition, where the first condition is that the first time does not belong to active time of a first DRX and that the first time does not belong to active time of a second DRX set;
a second condition, where the second condition is that the first time does not belong to active time of a first DRX and that the first time belongs to active time of a third DRX set;
a second condition, where the second condition is that neither a first timer nor a second timer set is run at the first time;
a fourth condition, where the fourth condition is that a first timer is not run but a third timer set is run at the first time;
a tenth condition, where the tenth condition is that a first timer is not run at the first time and that the first time does not belong to active time of a fourth DRX set;
an eleventh condition, where the eleventh condition is that a first timer is not run at the first time and that the first time belongs to active time of a fifth DRX set;
a twelfth condition, where the twelfth condition is that the first time does not belong to active time of a first DRX and that a fourth timer set is not run; or
a thirteenth condition, where the thirteenth condition is that the first time does not belong to active time of a first DRX and that a fifth timer set is run, where
the first DRX is for controlling monitoring of control information specific to a terminal device;
the first DRX is for controlling the monitoring of the control information specific to the terminal device;
the second DRX set includes at least one multicast DRX, the at least one multicast DRX includes a first multicast DRX, and the first multicast DRX is for controlling monitoring of control information related to a first multicast service;
the third DRX set includes at least one multicast DRX, the at least one multicast DRX includes a second multicast DRX, and the second multicast DRX is for controlling monitoring of control information related to a second multicast service;
the fourth DRX set includes at least one multicast DRX, the at least one multicast DRX includes a fourth multicast DRX, and the fourth multicast DRX is for controlling monitoring of control information related to a fifth multicast service;
the fifth DRX set includes at least one multicast DRX, the at least one multicast DRX includes a fifth multicast DRX, and the fifth multicast DRX is for controlling monitoring of control information related to a sixth multicast service;
during running of the first timer, the terminal device monitors the control information specific to the terminal device;
the second timer set includes at least one multicast timer, the at least one multicast timer includes a third multicast timer, and during running of the third multicast timer, the terminal device monitors control information related to a third multicast service;
the third timer set includes at least one multicast timer, the at least one multicast timer includes a fourth multicast timer, and during running of the fourth multicast timer, the terminal device monitors control information related to a fourth multicast service;
the fourth timer set includes at least one multicast timer, the at least one multicast timer includes a fifth multicast timer, and during running of the fifth multicast timer, the terminal device monitors control information related to a seventh multicast service; and
the fifth timer set includes at least one multicast timer, the at least one multicast timer includes a sixth multicast timer, and during running of the sixth multicast timer, the terminal device monitors control information related to an eighth multicast service.

With reference to the second aspect, in an implementation of the second aspect, the preset condition includes the first condition, and that a network device skips receiving first CSI at first time includes:
For a first cell set, the network device skips receiving the first CSI at the first time, where the first cell set includes at least one cell, and the first cell set is associated with the first DRX.

With reference to the second aspect, in an implementation of the second aspect, the first cell set includes a second cell set, where the second cell set is associated with the second DRX set, and the second cell set includes at least one cell.

With reference to the second aspect, in an implementation of the second aspect, the preset condition includes the second condition, and that a network device skips receiving first CSI at first time includes:
For a third cell set, the network device skips receiving the first CSI at the first time, where the third cell set includes at least one cell, and the third cell set is not associated with the third DRX set.

With reference to the second aspect, in an implementation of the second aspect, the third cell set is associated with the first DRX.

With reference to the second aspect, in an implementation of the second aspect, the first cell set includes the third cell set.

With reference to the second aspect, in an implementation of the second aspect, the third cell set is not associated with a fifth multicast service set, where the fifth multicast service set includes at least one multicast service, the at least one multicast service includes a ninth multicast service, and no multicast DRX is configured for the ninth multicast service.

With reference to the second aspect, in an implementation of the second aspect, the fifth multicast service set is associated with the first DRX.

With reference to the second aspect, in an implementation of the second aspect, the preset condition includes the third condition, and that a network device skips receiving first CSI at first time includes: For the first cell set, the network device skips receiving the first CSI at the first time.

With reference to the second aspect, in an implementation of the second aspect, the first cell set includes a fourth cell set, where the fourth cell set is associated with the second timer set, and the fourth cell set includes at least one cell.

With reference to the second aspect, in an implementation of the second aspect, the preset condition includes at least one of the first condition, the third condition, the tenth condition, and the twelfth condition, and the preset condition further includes: A multicast DRX is configured for a tenth multicast service, where the tenth multicast service includes a multicast service joined by the terminal device.

With reference to the second aspect, in an implementation of the second aspect, the tenth multicast service is associated with the first DRX.

With reference to the second aspect, in an implementation of the second aspect, the preset condition includes the fourth condition, and that a network device skips receiving first CSI at first time includes: For a fifth cell set, the network device skips receiving the first CSI at the first time, where the fifth cell set includes at least one cell, and the fifth cell set is not associated with the third timer set.

With reference to the second aspect, in an implementation of the second aspect, the fifth cell set is associated with the first timer set or the first DRX.

With reference to the second aspect, in an implementation of the second aspect, the first cell set includes the fifth cell set.

With reference to the second aspect, in an implementation of the second aspect, the fifth cell set is not associated with a seventh multicast service set, where
the seventh multicast service set includes at least one multicast service, the at least one multicast service includes an eleventh multicast service, and no multicast DRX is configured for the eleventh multicast service.

With reference to the second aspect, in an implementation of the second aspect, the seventh multicast service set is associated with the first DRX.

With reference to the second aspect, in an implementation of the second aspect, the preset condition includes the tenth condition, and that the terminal device skips sending the first CSI at the first time includes: For the first cell set, the terminal device skips sending the first CSI at the first time, where the first cell set includes the at least one cell, and the first cell set is associated with the first DRX.

With reference to the second aspect, in an implementation of the second aspect, the first cell set includes an eighth cell set, where the eighth cell set is associated with the fourth DRX set, and the eighth cell set includes at least one cell.

With reference to the second aspect, in an implementation of the second aspect, the preset condition includes the eleventh condition, and that the terminal device skips sending the first CSI at the first time includes: For a ninth cell set, the terminal device skips sending the first CSI at the first time, where the ninth cell set includes at least one cell, and the ninth cell set is not associated with the fifth DRX set.

With reference to the second aspect, in an implementation of the second aspect, the ninth cell set is associated with the first DRX.

With reference to the second aspect, in an implementation of the second aspect, the first cell set includes the ninth cell set.

With reference to the second aspect, in an implementation of the second aspect, the ninth cell set is not associated with an eighth multicast service set, where the eighth multicast service set includes at least one multicast service, the at least one multicast service includes a twelfth multicast service, and no multicast DRX is configured for the twelfth multicast service.

With reference to the second aspect, in an implementation of the second aspect, the eighth multicast service set is associated with the first DRX.

With reference to the second aspect, in an implementation of the second aspect, the preset condition includes the twelfth condition, and that the terminal device skips sending the first CSI at the first time includes: For the first cell set, the terminal device skips sending the first CSI at the first time.

With reference to the second aspect, in an implementation of the second aspect, the first cell set includes a tenth cell set, where the tenth cell set is associated with the fourth timer set, and the tenth cell set includes at least one cell.

With reference to the second aspect, in an implementation of the second aspect, the preset condition includes the thirteenth condition, and that the terminal device skips sending the first CSI at the first time includes: For an eleventh cell set, the terminal device skips sending the first CSI at the first time, where the eleventh cell set includes at least one cell, and the eleventh cell set is not associated with the fifth timer set.

With reference to the second aspect, in an implementation of the second aspect, the eleventh cell set is associated with the first timer or the first DRX.

With reference to the second aspect, in an implementation of the second aspect, the first cell set includes the eleventh cell set.

With reference to the second aspect, in an implementation of the second aspect, the eleventh cell set is not associated with a ninth multicast service set, where the ninth multicast service set includes at least one multicast service, the at least one multicast service includes a thirteenth multicast service, and no multicast DRX is configured for the thirteenth multicast service.

With reference to the second aspect, in an implementation of the second aspect, the ninth multicast service set is associated with the first DRX.

With reference to the second aspect, in an implementation of the second aspect, the first CSI includes any one or more of the following:
semi-persistent CSI; periodic CSI; CSI configured on a physical uplink shared channel PUSCH; semi-persistent CSI configured on a PUSCH; CSI configured on a physical uplink control channel PUCCH; periodic CSI configured on a PUCCH; semi-persistent CSI configured on a PUCCH; CSI that is layer 1 reference signal received power L1-RSRP; CSI that is not L1-RSRP; periodic CSI that is L1-RSRP; periodic CSI that is not L1-RSRP; CSI that is configured on a PUCCH and that is L1-RSRP; CSI that is configured on a PUCCH and that is not L1-RSRP; periodic CSI that is configured on a PUCCH and that is L1-RSRP; or periodic CSI that is configured on a PUCCH and that is not L1-RSRP.

With reference to the second aspect, in an implementation of the second aspect, that a network device skips receiving first CSI at first time includes any one or more of the following:

The network device skips receiving CSI on a PUCCH; the network device skips receiving periodic CSI on a PUCCH; the network device skips receiving semi-persistent CSI on a PUCCH; the network device skips receiving semi-persistent CSI on a PUSCH; the network device skips receiving CSI on a PUSCH; the network device skips receiving, on a PUCCH, CSI that is L1-RSRP; the network device skips receiving, on a PUCCH, CSI that is not L1-RSRP; the network device skips receiving, on a PUCCH, periodic CSI that is L1-RSRP; or the network device skips receiving, on a PUCCH, periodic CSI that is not L1-RSRP.

With reference to the second aspect, in an implementation of the second aspect, when the preset condition includes the third condition and/or the fourth condition, the method further includes:

The network device sends first information, where the first information indicates the terminal device to send the CSI during running of the first timer and/or during running of a multicast timer.

With reference to the second aspect, in an implementation of the second aspect, the preset condition includes at least one of the third condition, the fourth condition, the twelfth condition, and the thirteenth condition, and the method and/or the preset condition further include/includes: The terminal device obtains eighth information, where the eighth information indicates the terminal device to send the CSI during the running of the multicast timer.

With reference to the second aspect, in an implementation of the second aspect, the preset condition includes the tenth condition and/or the eleventh condition, and the method and/or the preset condition further include/includes: The terminal device obtains first information, where the first information indicates the terminal device to send the CSI during running of a unicast timer.

With reference to the second aspect, in an implementation of the second aspect, the preset condition further includes any one or more of the following: The network device does not send second information, where the second information includes information related to a wake-up signal; the first time is not within duration corresponding to the first timer; or the first timer is started or restarted.

With reference to the second aspect, in an implementation of the second aspect, when the preset condition includes the first condition and/or the second condition, the preset condition further includes any one or more of the following: The network device sends second information, where the second information includes information related to a wake-up signal; the first time is within duration corresponding to the first timer; or the first timer is not started or not restarted.

With reference to the second aspect, in an implementation of the second aspect, the preset condition further includes: The network device does not send third information; and/or the network device does not send fourth information, where the third information indicates the terminal device to report the periodic CSI that is the L1-RSRP or the CSI that is the L1-RSRP, and the fourth information indicates the terminal device to report the periodic CSI that is not the L1-RSRP or the CSI that is not the L1-RSRP.

With reference to the second aspect, in an implementation of the second aspect, the method and/or the preset condition further include/includes:

The network device sends fifth information, where the fifth information indicates the terminal device to send the CSI based on a multicast DRX.

With reference to the second aspect, in an implementation of the second aspect, the method and/or the preset condition further include/includes:
the network device receives sixth information sent by the terminal device, where the sixth information indicates that the terminal device can or cannot send the CSI based on the multicast DRX; and/or the network device receives seventh information sent by the terminal device, where the seventh information indicates that the terminal device prefers or does not prefer sending the CSI based on the multicast DRX.

According to a third aspect, a communication apparatus is provided, and includes:
a processing unit, where the processing unit is configured to: if a preset condition is satisfied, control the communication apparatus to skip sending first channel state information CSI at first time, where the preset condition includes any one or more of the following:
a first condition, where the first condition is that the first time does not belong to active time of a first discontinuous reception DRX and that the first time does not belong to active time of a second DRX set;
a second condition, where the second condition is that the first time does not belong to active time of a first DRX and that the first time belongs to active time of a third DRX set;
a third condition, where the third condition is that neither a first timer nor a second timer set is run at the first time;
a fourth condition, where the fourth condition is that a first timer is not run but a third timer set is run at the first time;
a tenth condition, where the tenth condition is that a first timer is not run at the first time and that the first time does not belong to active time of a fourth DRX set;
an eleventh condition, where the eleventh condition is that a first timer is not run at the first time and that the first time belongs to active time of a fifth DRX set;
a twelfth condition, where the twelfth condition is that the first time does not belong to active time of a first DRX and that a fourth timer set is not run; or
a thirteenth condition, where the thirteenth condition is that the first time does not belong to active time of a first DRX and that a fifth timer set is run, where
the first DRX is for controlling monitoring of control information specific to the terminal device;
the second DRX set includes at least one multicast DRX, the at least one multicast DRX includes a first multicast DRX, and the first multicast DRX is for controlling monitoring of control information related to a first multicast service;
the third DRX set includes at least one multicast DRX, the at least one multicast DRX includes a second multicast DRX, and the second multicast DRX is for controlling monitoring of control information related to a second multicast service;
the fourth DRX set includes at least one multicast DRX, the at least one multicast DRX includes a fourth multicast DRX, and the fourth multicast DRX is for controlling monitoring of control information related to a fifth multicast service;
the fifth DRX set includes at least one multicast DRX, the at least one multicast DRX includes a fifth multicast DRX, and the fifth multicast DRX is for controlling monitoring of control information related to a sixth multicast service;
during running of the first timer, the terminal device monitors the control information specific to the terminal device;
the second timer set includes at least one multicast timer, the at least one multicast timer includes a third multicast timer, and during running of the third multicast timer, the terminal device monitors control information related to a third multicast service;
the third timer set includes at least one multicast timer, the at least one multicast timer includes a fourth multicast timer, and during running of the fourth multicast timer, the terminal device monitors control information related to a fourth multicast service;
the fourth timer set includes at least one multicast timer, the at least one multicast timer includes a fifth multicast timer, and during running of the fifth multicast timer, the terminal device monitors control information related to a seventh multicast service; and
the fifth timer set includes at least one multicast timer, the at least one multicast timer includes a sixth multicast timer, and during running of the sixth multicast timer, the terminal device monitors control information related to an eighth multicast service.

With reference to the third aspect, in an implementation of the third aspect, the preset condition includes the first condition, and the processing unit is specifically configured to:
for a first cell set, skip, for the communication apparatus, sending the first CSI at the first time, where the first cell set includes at least one cell, and the first cell set is associated with the first DRX.

With reference to the third aspect, in an implementation of the third aspect, the first cell set includes a second cell set, where the second cell set is associated with the second DRX set, and the second cell set includes at least one cell.

With reference to the third aspect, in an implementation of the third aspect, the preset condition includes the second condition, and the processing unit is specifically configured to: for a third cell set, skip, for the communication apparatus, sending the first CSI at the first time, where the third cell set includes at least one cell, and the third cell set is not associated with the third DRX set.

With reference to the third aspect, in an implementation of the third aspect, the third cell set is associated with the first DRX.

With reference to the third aspect, in an implementation of the third aspect, the first cell set includes the third cell set.

With reference to the third aspect, in an implementation of the third aspect, the third cell set is not associated with a fifth multicast service set, where the fifth multicast service set includes at least one multicast service, the at least one multicast service includes a ninth multicast service, and no multicast DRX is configured for the ninth multicast service.

With reference to the third aspect, in an implementation of the third aspect, the fifth multicast service set is associated with the first DRX.

With reference to the third aspect, in an implementation of the third aspect, the preset condition includes the third condition, and the processing unit is specifically configured to:
for the first cell set, skip, for the communication apparatus, sending the first CSI at the first time, where the first cell set includes the at least one cell, and the first cell set is associated with the first DRX.

With reference to the third aspect, in an implementation of the third aspect, the first cell set includes a fourth cell set, where the fourth cell set is associated with the second timer set, and the fourth cell set includes at least one cell.

With reference to the third aspect, in an implementation of the third aspect, the preset condition includes at least one of the first condition, the third condition, the tenth condition, and the twelfth condition, and the preset condition further includes: A multicast DRX is configured for a tenth multicast service, where the tenth multicast service includes a multicast service joined by the terminal device.

With reference to the third aspect, in an implementation of the third aspect, the tenth multicast service is associated with the first DRX.

With reference to the third aspect, in an implementation of the third aspect, the preset condition includes the fourth condition, and the processing unit is specifically configured to:
for a fifth cell set, skip, for the communication apparatus, sending the first CSI at the first time.

With reference to the third aspect, in an implementation of the third aspect, the fifth cell set is associated with the first timer or the first DRX.

With reference to the third aspect, in an implementation of the third aspect, the first cell set includes the fifth cell set.

With reference to the third aspect, in an implementation of the third aspect, the fifth cell set is not associated with a seventh multicast service set, where the seventh multicast service set includes at least one multicast service, the at least one multicast service includes an eleventh multicast service, and no multicast DRX is configured for the eleventh multicast service.

With reference to the third aspect, in an implementation of the third aspect, the seventh multicast service set is associated with the first DRX.

With reference to the third aspect, in an implementation of the third aspect, the preset condition includes the tenth condition, and the processing unit is specifically configured to: for the first cell set, skip, for the terminal device, sending the first CSI at the first time, where the first cell set includes the at least one cell, and the first cell set is associated with the first DRX.

With reference to the third aspect, in an implementation of the third aspect, the first cell set includes an eighth cell set, where the eighth cell set is associated with the fourth DRX set, and the eighth cell set includes at least one cell.

With reference to the third aspect, in an implementation of the third aspect, the preset condition includes the eleventh condition, and the processing unit is specifically configured to: for a ninth cell set, skip, for the terminal device, sending the first CSI at the first time, where the ninth cell set includes at least one cell, and the ninth cell set is not associated with the fifth DRX set.

With reference to the third aspect, in an implementation of the third aspect, the ninth cell set is associated with the first DRX.

With reference to the third aspect, in an implementation of the third aspect, the first cell set includes the ninth cell set.

With reference to the third aspect, in an implementation of the third aspect, the ninth cell set is not associated with an eighth multicast service set, where the eighth multicast service set includes at least one multicast service, the at least one multicast service includes a twelfth multicast service, and no multicast DRX is configured for the twelfth multicast service.

With reference to the third aspect, in an implementation of the third aspect, the eighth multicast service set is associated with the first DRX.

With reference to the third aspect, in an implementation of the third aspect, the preset condition includes the twelfth condition, and the processing unit is specifically configured to: for the first cell set, skip, for the terminal device, sending the first CSI at the first time.

With reference to the third aspect, in an implementation of the third aspect, the first cell set includes a tenth cell set, where the tenth cell set is associated with the fourth timer set, and the tenth cell set includes at least one cell.

With reference to the third aspect, in an implementation of the third aspect, the preset condition includes the thirteenth condition, and the processing unit is specifically configured to: for an eleventh cell set, skip, for the terminal device, sending the first CSI at the first time, where the eleventh cell set includes at least one cell, and the eleventh cell set is not associated with the fifth timer set.

With reference to the third aspect, in an implementation of the third aspect, the eleventh cell set is associated with the first timer or the first DRX.

With reference to the third aspect, in an implementation of the third aspect, the first cell set includes the eleventh cell set.

With reference to the third aspect, in an implementation of the third aspect, the eleventh cell set is not associated with a ninth multicast service set, where the ninth multicast service set includes at least one multicast service, the at least one multicast service includes a thirteenth multicast service, and no multicast DRX is configured for the thirteenth multicast service.

With reference to the third aspect, in an implementation of the third aspect, the ninth multicast service set is associated with the first DRX.

With reference to the third aspect, in an implementation of the third aspect, the first CSI includes any one or more of the following:
semi-persistent CSI; periodic CSI; CSI configured on a physical uplink shared channel PUSCH; semi-persistent CSI configured on a PUSCH; CSI configured on a physical uplink control channel PUCCH; periodic CSI configured on a PUCCH; semi-persistent CSI configured on a PUCCH; CSI that is layer 1 reference signal received power L1-RSRP; CSI that is not L1-RSRP; periodic CSI that is L1-RSRP; periodic CSI that is not L1-RSRP; CSI that is configured on a PUCCH and that is L1-RSRP; CSI that is configured on a PUCCH and that is not L1-RSRP; periodic CSI that is configured on a PUCCH and that is L1-RSRP; or periodic CSI that is configured on a PUCCH and that is not L1-RSRP.

With reference to the third aspect, in an implementation of the third aspect, the processing unit is specifically configured to:
skip, for the communication apparatus, sending CSI on the PUCCH; skip, for the communication apparatus, sending the periodic CSI on the PUCCH; skip, for the communication apparatus, sending the semi-persistent CSI on the PUCCH; skip, for the communication apparatus, sending the semi-persistent CSI on the PUSCH; skip, for the communication apparatus, sending CSI on the PUSCH; skip, for the communication apparatus, sending, on the PUCCH, the CSI that is the L1-RSRP; skip, for the communication apparatus, sending, on the PUCCH, the CSI that is not the L1-RSRP; skip, for the communication apparatus, sending, on the PUCCH, the periodic CSI that is the L1-RSRP; or skip, for the communication apparatus, sending, on the PUCCH, the periodic CSI that is not the L1-RSRP.

With reference to the third aspect, in an implementation of the third aspect, the preset condition includes the third condition and/or the fourth condition, and the communication apparatus further includes:
a transceiver unit, configured to obtain first information, where the first information indicates the communication apparatus to send the CSI during running of a unicast timer and/or during running of a multicast timer.

With reference to the third aspect, in an implementation of the third aspect, the preset condition includes at least one of the third condition, the fourth condition, the twelfth condition, and the thirteenth condition, and the communication apparatus further includes:
the transceiver unit, configured to obtain eighth information, where the eighth information indicates the terminal device to send the CSI during the running of the multicast timer.

With reference to the third aspect, in an implementation of the third aspect, the preset condition includes the tenth condition and/or the eleventh condition, and the communication apparatus further includes:
a transceiver unit, configured to obtain first information, where the first information indicates the terminal device to send the CSI during running of a unicast timer.

With reference to the third aspect, in an implementation of the third aspect, the preset condition further includes any one or more of the following:

The communication apparatus does not obtain second information, where the second information includes information related to a wake-up signal; the first time is not within duration corresponding to the first timer; or the first timer is started or restarted.

With reference to the third aspect, in an implementation of the third aspect, the preset condition includes the first condition and/or the second condition, and the preset condition further includes any one or more of the following:

The communication apparatus obtains second information, where the second information includes information related to a wake-up signal; the first time is within duration corresponding to the first timer; or the first timer is not started or not restarted.

With reference to the third aspect, in an implementation of the third aspect, the preset condition further includes:

The communication apparatus does not obtain third information; and/or the communication apparatus does not obtain fourth information, where the third information indicates to report the periodic CSI that is the L1-RSRP or the CSI that is the L1-RSRP, and the fourth information indicates to report the periodic CSI that is not the L1-RSRP or the CSI that is not the L1-RSRP.

With reference to the third aspect, in an implementation of the third aspect, the transceiver unit is further configured to:
obtain fifth information, where the fifth information indicates the communication apparatus to send the CSI based on a multicast DRX.

With reference to the third aspect, in an implementation of the third aspect, the transceiver unit is further configured to:
send sixth information to a network device, where the sixth information indicates that the communication apparatus can or cannot send the CSI based on the multicast DRX; and/or
send seventh information to the network device, where the seventh information indicates that the communication apparatus prefers or does not prefer sending the CSI based on the multicast DRX.

According to a fourth aspect, a communication apparatus is provided, and includes a module configured to implement the communication method according to any one of the first aspect and the possible implementations of the first aspect or any one of the second aspect and the possible implementations of the second aspect.

According to a fifth aspect, a communication apparatus is provided, and includes at least one processor. The at least one processor is coupled to at least one memory. The at least one processor is configured to execute a computer program or instructions stored in the at least one memory, so that the communication method according to any one of the first aspect and the possible implementations of the first aspect or any one of the second aspect and the possible implementations of the second aspect is performed.

According to a sixth aspect, a chip is provided. The chip includes a processor and a communication interface. The communication interface is configured to receive a signal, and transmit the signal to the processor. The processor processes the signal, so that the communication method according to any one of the first aspect and the possible implementations of the first aspect is performed.

According to a seventh aspect, a chip is provided. The chip includes a processor and a communication interface. The communication interface is configured to receive a signal, and transmit the signal to the processor. The processor processes the signal, so that the communication method according to any one of the second aspect and the possible implementations of the second aspect is performed.

According to an eighth aspect, a computer-readable storage medium is provided. The computer-readable storage medium stores computer instructions. When the computer instructions are run on a computer, the communication method according to any one of the first aspect and the possible implementations of the first aspect is enabled to be performed.

According to a ninth aspect, a computer-readable storage medium is provided. The computer-readable storage medium stores computer instructions. When the computer instructions are run on a computer, the communication method according to any one of the second aspect and the possible implementations of the second aspect is enabled to be performed.

According to a tenth aspect, a computer program product is provided, and includes computer instructions. When the computer instructions are run on a computer, the communication method according to any one of the first aspect and the possible implementations of the first aspect is enabled to be performed.

According to an eleventh aspect, a computer program product is provided, and includes computer instructions. When the computer instructions are run on a computer, the communication method according to any one of the second aspect and the possible implementations of the second aspect is enabled to be performed.

### BRIEF DESCRIPTION OF DRAWINGS

FIG. 1 is a schematic diagram of a network architecture to which an embodiment of this application is applicable;
FIG. 2a is a schematic diagram of another network architecture to which an embodiment of this application is applicable;
FIG. 2b is a schematic diagram of still another network architecture to which an embodiment of this application is applicable;
FIG. 3 is a schematic diagram of a DRX cycle according to an embodiment of this application;
FIG. 4 is a schematic diagram of a communication method according to an embodiment of this application;
FIG. 5 is a schematic diagram of another communication method according to an embodiment of this application;
FIG. 6 is a schematic diagram of a communication apparatus according to an embodiment of this application; and
FIG. 7 is a schematic diagram of another communication apparatus according to an embodiment of this application.

### DESCRIPTION OF EMBODIMENTS

The following describes technical solutions in embodiments in this application with reference to accompanying drawings.

In the descriptions of this application, unless otherwise specified, "/" means "or". For example, A/B may represent A or B. "And/or" in this specification describes only an association relationship between associated objects and represents that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference either. In this application, the word such as "example" or "for example" is for representing giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or a new radio (new radio, NR) system, and a future communication system. This is not limited herein.

A communication method in embodiments of this application may be applied to a next generation radio access network (next generation radio access network, NG-RAN) system, may be applied to the LTE system, may be applied to a system such as 6G or 7G that may appear in the future, or may be applied to a central unit (central unit, CU)-distribution unit (distributed unit, DU) structure. This is not limited in embodiments of this application.

Terminal device: The terminal device is a device with a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, including but not limited to the following scenarios: cellular communication, device-to-device (device-to-device, D2D) communication, vehicle to everything (vehicle to everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self driving (self driving), telemedicine (telemedicine), a smart grid (smart grid), smart furniture, smart office, smart wearables, smart transportation, a smart city (smart city), an uncrewed aerial vehicle, and a robot. The terminal device may be sometimes referred to as user equipment (user equipment, UE), a terminal, an access station, a UE station, a remote station, a wireless communication device, a user apparatus, or the like.

Network device: The network device includes, for example, an access network device and/or a core network device. The access network device is a device with a wireless transceiver function, and is configured to communicate with the terminal device. The access network device includes but is not limited to a base station (BTS, NodeB, eNodeB/eNB, or gNodeB/gNB) in the communication system, a transmission reception point (transmission reception point, TRP), a subsequently evolved base station in 3GPP, an access node in a Wi-Fi system, a wireless relay node, a wireless backhaul node, or the like. The base station may be a macro base station, a micro base station, a picocell base station, a small cell, a relay station, or the like. A plurality of base stations may support the foregoing networks using a same access technology, or may support the foregoing networks using different access technologies. The base station may include one or more co-site or non-co-site transmission reception points. The network device may alternatively be a radio controller, a central unit (central unit, CU), and/or a distributed unit (distributed unit, DU) in a cloud radio access network (cloud radio access network, CRAN) scenario. The network device may alternatively be a server, a wearable device, a vehicle-mounted device, or the like. For example, a network device in a V2X technology may be a road side unit (road side unit, RSU). The following describes the access network device by using an example in which the access network device is the base station. A plurality of network devices in the communication system may be base stations of a same type, or may be base stations of different types. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement a core network function in systems in different access technologies may be different. This is not limited in this application. The 5G system is used as an example. The core network device includes an access and mobility management function (access and mobility management function, AMF), a session management function (session management function, SMF), a user plane function (user plane function, UPF), or the like.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which is also referred to as a main memory). An operating system may be any one or more computer operating systems that implement service processing by using a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal device or the network device, or a function module that is in the terminal device or the network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel and various other media that can store, include, and/or carry instructions and/or data.

The terms "system" and "network" may be used interchangeably in embodiments of this application.

The following further describes the technical solutions in this application in detail with reference to the accompanying drawings of this specification.

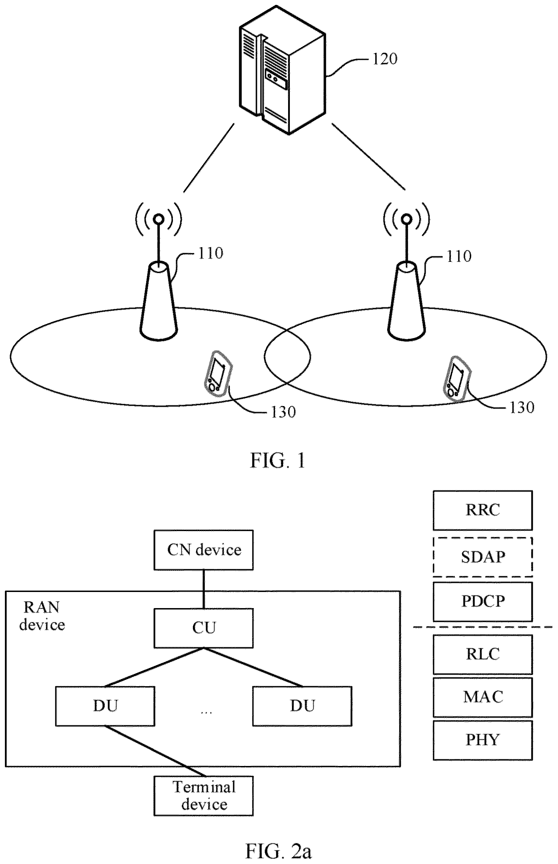

FIG. 1 is a schematic diagram of a communication system to which an embodiment of this application is applicable. As shown in FIG. 1, a terminal device 130 may access a wireless network, to obtain a service of an external network (for example, the internet) through the wireless network, or communicate with another device through the wireless network, for example, may communicate with another terminal device. The wireless network includes a radio access network (radio access network, RAN) device 110 and a core network (core network, CN) device 120. The RAN device 110 is configured to enable the terminal device 130 to access the wireless network, and the CN device 120 is configured to manage the terminal device and provide a gateway for communicating with the external network. It should be understood that a quantity of devices in the communication system shown in FIG. 1 is merely used as an example. Embodiments of this application are not limited thereto. During actual application, the communication system may further include more terminal devices 130 and more RAN devices 110, and may further include another device.

FIG. 2a is a schematic diagram of another network architecture to which an embodiment of this application is applicable. As shown in FIG. 2a, the network architecture includes a CN device, a RAN device, and a terminal device. The RAN device includes a baseband apparatus and a radio frequency apparatus. The baseband apparatus may be implemented by one node, or may be implemented by a plurality of nodes. The radio frequency apparatus may be independently implemented remotely from the baseband apparatus, or may be integrated into the baseband apparatus, or some functions are independently implemented and some functions are integrated into the baseband apparatus. For example, in an LTE communication system, a RAN device (eNB) includes a baseband apparatus and a radio frequency apparatus. The radio frequency apparatus may be remotely disposed relative to the baseband apparatus. For example, a remote radio unit (remote radio unit, RRU) is a remote radio unit disposed relative to a BBU.

Communication between the RAN device and the terminal device complies with a specific protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include functions of protocol layers such as the PDCP layer, the RLC layer, the MAC layer, and the physical layer. In a possible implementation, a service data adaptation protocol (service data adaptation protocol, SDAP) layer may be further included above the PDCP layer.

The RAN device may implement functions of protocol layers such as RRC, PDCP, RLC, and MAC by using one node or a plurality of nodes. For example, in an evolved structure, the RAN device may include a CU and a DU, and a plurality of DUs may be controlled by one CU in a centralized manner. As shown in FIG. 2a, the CU and the DU may be divided based on a protocol layer of a wireless network. For example, functions of the PDCP layer and a protocol layer above the PDCP layer are set on the CU, and functions of protocol layers, for example, the RLC layer and the MAC layer, below PDCP are set on the DU.

Division based on the protocol layer is merely an example, and division may alternatively be performed based on another protocol layer such as the RLC layer. Functions of the RLC layer and protocol layers above the RLC layer are set on the CU, and functions of protocol layers below the RLC layer are set on the DU. Alternatively, division is performed at a protocol layer. For example, some functions of the RLC layer and functions of protocol layers above the RLC layer are set on the CU, and a remaining function of the RLC layer and functions of protocol layers below the RLC layer are set on the DU. In addition, division may alternatively be performed in another manner. For example, division is performed based on a delay. A function whose processing time needs to satisfy a delay requirement is set on the DU, and a function whose processing time does not need to satisfy the delay requirement is set on the CU.

In addition, the radio frequency apparatus may be not placed in the DU but is integrated independently, or may be integrated into the DU, or a part is placed remotely from the DU and a remaining part is integrated into the DU. This is not limited herein.

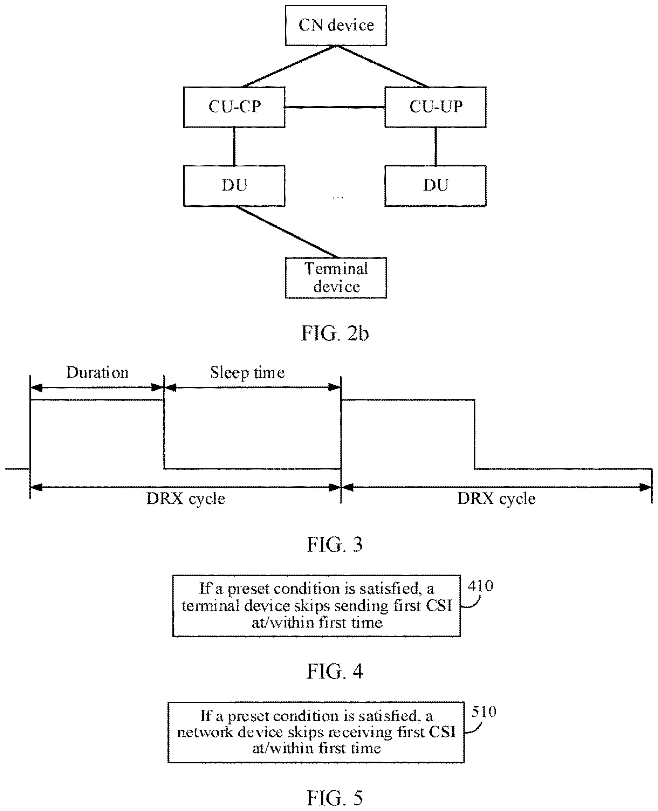

FIG. 2b is a schematic diagram of another network architecture to which an embodiment of this application is applicable. Relative to the network architecture shown in FIG. 2a, in FIG. 2b, a control plane (CP) and a user plane (UP) of a CU may be further separated and implemented as different entities: a control plane (control plane, CP) CU entity (namely, a CU-CP entity) and a user plane (user plane, UP) CU entity (namely, a CU-UP entity).

In the foregoing network architecture, signaling generated by the CU may be sent to a terminal device via a DU, or signaling generated by a terminal device may be sent to the CU via a DU. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario. For example, signaling of an RRC layer or a PDCP layer is finally processed as signaling of a PHY layer and sent to the terminal device, or is converted from received signaling of a PHY layer. In this architecture, it may also be considered that the signaling of the RRC layer or the PDCP layer is sent by the DU, or is sent by the DU and a radio frequency apparatus.

The network architecture shown in FIG. 1, FIG. 2a, or FIG. 2b is applicable to communication systems in various radio access technologies (radio access technologies, RATs). For example, the communication system may be the LTE communication system, may be a 5G (which is also referred to as new radio (new radio, NR)) communication system, may be a transition system between the LTE communication system and a 5G communication system, or certainly may be a future communication system, where the transition system may also be referred to as a 4.5G communication system. The network architectures and service scenarios described in embodiments of this application are intended to describe the technical solutions in embodiments of this application more clearly, and do not constitute a limitation on the technical solutions provided in embodiments of this application. A person of ordinary skill in the art may know that, with evolution of the communication network architectures and emergence of new service scenarios, the technical solutions provided in embodiments of this application are also applicable to similar technical problems. For example, the present invention may be applicable to a broadcast multicast scenario.

An apparatus in the following embodiments of this application may be located in a terminal device or a network device based on a function implemented by the apparatus. When the foregoing CU-DU structure is used, the network device may be a CU node, a DU node, or a RAN device including a CU node and a DU node.

A multicast or a multicast service mentioned in embodiments of this application may be a multicast and broadcast service (multicast and broadcast service, or multicast/broadcast service, MBS) in a new radio (new radio, NR) system. The MBS is introduced in the 3GPP to effectively use a resource of a mobile communication network, and provides, in the mobile communication network, a point-to-multipoint service for sending data to a plurality of users by a data source, to implement network resource sharing and improve utilization of the resource, especially an air interface resource. The NR MBS supports the multicast and a broadcast.

In embodiments of this application, the "multicast" may alternatively be replaced with a term such as "multicast". Accordingly, a multicast service may alternatively be replaced with a multicast service.

A same service and/or same content data may be provided for a group of/a plurality of terminal devices simultaneously through the multicast.

The multicast may be specific to a group of specific terminal devices, and the terminal devices may need to perform a "group joining process".

Accordingly, a unicast may be understood as providing the same service and/or the same content data for one terminal device simultaneously. The unicast may be understood as: A piece of data needs to be separately sent to each device if the data needs to be sent to a plurality of devices.

In a wireless communication system, to further reduce power consumption of the terminal device while effective data transmission is ensured, a discontinuous reception (discontinuous reception, DRX) function is introduced to control behavior of monitoring a physical downlink control channel PDCCH by the terminal device. When the network device configures the DRX function for the terminal device, the terminal device may be enabled to enter a sleep state at some moments, so that the terminal device does not need to continuously monitor the physical downlink control channel PDCCH. When the terminal device needs to monitor the PDCCH, the terminal device may be woken up from the sleep state, to reduce the power consumption of the terminal device to some extent.

The following briefly describes a DRX with reference to FIG. 3. FIG. 3 is a schematic diagram of a DRX cycle according to an embodiment of this application. As shown in FIG. 3, the DRX cycle (DRX cycle) may include duration (for example, on-duration) or wake-up time (for example, on-duration), and sleep time (for example, opportunity for DRX). The on-duration time period is duration for which a terminal device waits, after being woken up, to receive a PDCCH. In this period of time, the terminal device monitors the PDCCH. If the terminal device can successfully decode the PDCCH, the terminal device may remain in a wake-up state, or prolong active time. The opportunity for DRX time period is sleep time of the terminal device. In this period of time, the terminal device does not need to monitor the PDCCH, to reduce power consumption. It may be understood that longer sleep time of the terminal device indicates lower power consumption of the terminal device, but accordingly, indicates a higher delay of service transmission of the terminal device.

The DRX function of the terminal device may be configured by the network device. It should be understood that, even if the network device configures the DRX function for the terminal device, the terminal device may monitor the PDCCH according to a requirement of another media access control MAC layer process. That is, when the another MAC layer process requires the terminal device to keep monitoring the PDCCH, the terminal device needs to continuously monitor the PDCCH regardless of a current DRX status.

### (1) Unicast DRX:

When no DRX group is configured (or in other words, in R15), a DRX parameter is configured by the network device for a MAC entity of each terminal device or for the terminal device. That is, a MAC entity of one terminal device uses one set of DRX parameters.

In a carrier aggregation (carrier aggregation, CA) scenario, the terminal device uses a same set of DRX parameters and runs one DRX for all active cells.

In a multi-radio dual connectivity (multi-radio dual connectivity, MR-DC) scenario, a master node (master node, MN) and a secondary node (secondary node, SN) separately correspond to the MAC entity of the terminal device. Therefore, the terminal device has two independent sets of DRX parameters and runs two DRXes for the MN and the SN. In other words, the terminal device uses one set of DRX parameters and runs one DRX for all active serving cells in a master cell group (master cell group, MCG), and uses another set of DRX parameters and runs another DRX for all active serving cells in a secondary cell group (secondary cell group, SCG).

When no DRX group is configured, active time of the DRX may include any one or more of the following: running time of drx-onDurationTimer; running time of drx-InactivityTimer; running time of drx-RetransmissionTimerDL; running time of drx-RetransmissionTimerUL; running time of drx-RetransmissionTimerSL; running time of drx-RetransmissionTimer-DL-PTM corresponding to the multicast; time while a scheduling request SR is sent on a PUCCH and the SR is waiting for processing; time while a PDCCH that is scrambled by using a C-RNTI and that indicates new transmission has not been received after a RAR is successfully received in a non-contention-based random access process (that is, after non-contention-based RA succeeds), or the like.

The network device controls a DRX operation by configuring the following parameters by using an RRC message:
- drx-onDurationTimer: a period of time at a beginning of a DRX cycle, where a location at which drx-onDurationTimer is started may be calculated based on a parameter configured by a base station and a formula specified in a protocol.
- drx-InactivityTimer: a period of time after a PDCCH occasion in which scheduling of new uplink or downlink transmission is indicated. The terminal device receives a PDCCH that indicates that there is new uplink or downlink transmission (namely, the scheduling of the new transmission), and starts or restarts drx-InactivityTimer.
- drx-RetransmissionTimerDL: maximum duration until DL retransmission is received. If drx-HARQ-RTT-TimerUL expires and data is not successfully decoded, drx-RetransmissionTimerDL is started.
- drx-RetransmissionTimerUL: maximum duration until a grant for UL retransmission is received. In the first symbol after drx-HARQ-RTT-TimerUL expires, drx-RetransmissionTimerUL is started for a corresponding HARQ process.
- drx-HARQ-RTT-TimerDL: minimum duration before the MAC entity expects to receive DL assignment for HARQ retransmission. The terminal device receives a PDCCH that indicates that there is downlink transmission, or the terminal device receives data in configured downlink assignment; and starts or restarts drx-HARQ-RTT-TimerDL.
- drx-HARQ-RTT-TimerUL: minimum duration before the MAC entity expects to receive a UL HARQ retransmission grant. The terminal device sends a MAC protocol data unit (protocol data unit, PDU) in a configured uplink grant, or the terminal device receives a PDCCH that indicates UL transmission; and starts or restarts drx-HARQ-RTT-TimerUL.
- drx-RetransmissionTimerSL: maximum duration until a grant for SL retransmission is received.
- drx-HARQ-RTT-TimerSL: minimum duration before the grant for the SL retransmission is expected to be received.

Compared with R15, in the R16 standard protocol, a function of a DRX group and a function of DCI with CRC scrambled by power saving radio network temporary identifier (power saving radio network temporary identifier, PS-RNTI) (DCI with CRC scrambled by PS-RNTI, DCP) are added to the unicast DRX.

The following briefly describes the DRX group and the DCP.

DRX group: In one MAC entity, different DRX groups are distinguished for different frequency ranges. In other words, DRX groups are distinguished for a frequency range (frequency range, FR) 1 and an FR 2. That is, a concept of a secondary DRX group is introduced for a cell in the FR 2.

For a cell/a DRX group in the FR 1, there is one set of parameters of drx-onDurationTimer and drx-InactivityTimer separately; and for the cell/a DRX group in the FR 2, there is one set of parameters of drx-onDurationTimer and drx-InactivityTimer separately. Another DRX parameter is common.

Each DRX group runs one DRX. That is, in the MAC entity, there may be two DRX groups, and two DRXes are run.

When the DRX group is configured, active time of the DRX group may include any one or more of the following: running time of drx-onDurationTimer of the DRX group; running time of drx-InactivityTimer of the DRX group; running time of drx-RetransmissionTimerDL corresponding to the DRX group (or of any cell in the DRX group); running time of drx-RetransmissionTimerUL corresponding to the DRX group (or of any cell in the DRX group); running time of drx-RetransmissionTimerSL corresponding to the DRX group (or of any cell in the DRX group); running time of drx-RetransmissionTimer-DL-PTM corresponding to a multicast corresponding to the DRX group; the time while the scheduling request SR is sent on the PUCCH and the SR is waiting for processing; the time while the PDCCH that is scrambled by using the C-RNTI and that indicates the new transmission has not been received after the RAR is successfully received in the non-contention-based random access process (that is, after the non-contention-based RA succeeds), or the like.

DCP: When the network device configures the function of the DCP for the terminal device, the terminal device monitors, before drx-onDurationTimer is started, DCI with CRC scrambled by PS-RNTI, to determine whether to start drx-onDurationTimer, thereby further reducing the power consumption of the terminal device.

For example, when the function of the DCP is configured for the terminal device, the terminal device may determine, based on the following several manners, whether to start drx-onDurationTimer.

Manner 1: If the network device configures ps-wakeup for the terminal device, and the terminal device does not detect DCI scrambled by using the PS-RNTI, the terminal device may start drx-onDurationTimer.

Manner 2: If the network device does not configure ps-wakeup for the terminal device, the terminal device detects DCI scrambled by using the PS-RNTI, and the DCI indicates the terminal device to wake up, the terminal device starts drx-onDurationTimer.

### (2) Multicast DRX:

The multicast DRX and the unicast DRX are independent, a multicast DRX parameter may be per (per) group RNTI (group RNTI) G-RNTI and/or group configured scheduling RNTI (group configured scheduling RNTI, G-CS-RNTI), and the multicast DRX is run per G-RNTI and/or G-CS-RNTI.

Active time (active time) of each multicast DRX may include any one or more of the following: running time of drx-onDurationTimerPTM, drx-InactivityTimerPTM, or drx-RetransmissionTimerDL-PTM that is specific to the G-RNTI or the G-CS-RNTI.

A multicast DRX function may be described as follows:
The network device controls a multicast DRX operation by configuring the following parameters by using an RRC message:
▪ drx-onDurationTimerPTM: a period of time at a beginning of a DRX cycle, where a location at which drx-onDurationTimerPTM is started is calculated based on a parameter configured by the base station and a formula specified in the protocol.
▪ drx-InactivityTimerPTM: a period of time after a PDCCH occasion in which scheduling of new DL transmission is indicated. The terminal device receives a PDCCH that indicates that there is new uplink or downlink transmission (namely, the scheduling of the new transmission), and starts or restarts drx-InactivityTimerPTM.
▪ drx-RetransmissionTimerDL-PTM: maximum duration until DL retransmission is received. If drx-HARQ-RTT-TimerDL-PTM expires and data is not successfully decoded, drx-RetransmissionTimerDL-PTM is started.
▪ drx-HARQ-RTT-TimerDL-PTM: minimum duration before the DL retransmission is expected to be received, minimum duration before expected DL retransmission, or minimum duration before expected DL retransmission is received. The terminal device receives a PDCCH that indicates that there is downlink transmission, or the terminal device receives data in configured downlink assignment; and starts or restarts drx-HARQ-RTT-TimerDL-PTM.

### (3) CSI reporting:

The following briefly describes solutions in which the terminal device reports CSI to the network device in R15 and R16.

In R15 (or in other words, when no DCP monitoring is configured and no DRX group is configured), a solution in which the terminal device reports the CSI based on the unicast DRX includes any one or more of the following:
- If a symbol n is not within active time of the DRX, the terminal device skips sending semi-persistent CSI configured on a PUSCH; and the terminal device skips sending the CSI on the PUCCH; or
- if CSI-masking is configured for the terminal device, and drx-onDurationTimer is not run in a symbol n, the terminal device skips sending the CSI on the PUCCH.

In R16 (or in other words, when DCP monitoring is configured), a solution in which the terminal device reports the CSI based on the unicast DRX includes any one or more of the following:
- If the DCP monitoring is configured for the terminal device, a symbol n is in a time period of drx-onDurationTimer, drx-onDurationTimer in a current DRX cycle is not started, and the symbol n is not within active time of the DRX, the terminal device skips sending semi-persistent CSI configured on a PUSCH;
- if the DCP monitoring is configured for the terminal device, a symbol n is in a time period of drx-onDurationTimer, drx-onDurationTimer in a current DRX cycle is not started, the symbol n is not within active time of the DRX, and ps-TransmitPeriodicL1-RSRP is not configured with true for the terminal device, where that ps-TransmitPeriodicL1-RSRP is true indicates that the terminal device needs, in this case, to report periodic CSI that is L1-RSRP; and the terminal device skips sending, on the PUCCH, the periodic CSI that is the L1-RSRP;
- if the DCP monitoring is configured for the terminal device, a symbol n is in a time period of drx-onDurationTimer, drx-onDurationTimer in a current DRX cycle is not started, the symbol n is not within active time of the DRX, and ps-TransmitOtherPeriodicCSI is not configured with true for the terminal device, where that ps-TransmitOtherPeriodicCSI is true indicates that the terminal device needs, in this case, to report periodic CSI that is not L1-RSRP; and the terminal device skips sending, on the PUCCH, the periodic CSI that is not the L1-RSRP;
- if no DCP monitoring is configured for the terminal device, a symbol n is not in a time period of drx-onDurationTimer, or drx-onDurationTimer in a current DRX cycle is started; and the symbol n is not within active time of the DRX, the terminal device skips sending semi-persistent CSI configured on a PUSCH; and the terminal device skips sending the CSI on the PUCCH; or
- if no DCP monitoring is configured for the terminal device, a symbol n is not in a time period of drx-onDurationTimer, or drx-onDurationTimer in a current DRX cycle is started; and CSI-masking is configured for the terminal device, and drx-onDurationTimer is not run in the symbol n, the terminal device skips sending the CSI on the PUCCH.

In R16 (or in other words, when a DRX group is configured), another solution in which the terminal device reports the CSI based on the unicast DRX includes any one or more of the following:
- If a symbol n is not within the active time of the DRX group, the terminal device skips sending, in the DRX group, semi-persistent CSI configured on a PUSCH; and the terminal device skips sending the CSI on the PUCCH in the DRX group; or
- if CSI-masking is configured for the terminal device, and drx-onDurationTimer of the DRX group is not run in a symbol n, the terminal device skips sending the CSI on the PUCCH in the DRX group.

It should be noted that, for content related to the DRX and the CSI reporting, refer to 3GPP TS 38.321: "NR; Medium Access Control (MAC); Protocol specification". Details are not described herein again.

It can be learned that, in R15 and R16, there is no solution for how the terminal device reports the CSI when there is a multicast DRX, or in other words, when the unicast DRX and the multicast DRX coexist.

In a scenario in which no multicast DRX is configured for a part or all of multicasts received or joined by the terminal device, based on a conventional technology, if the unicast DRX is not within active time, or if neither the multicast DRX nor the unicast DRX is within active time, the terminal device does not report the CSI/an SRS, and cannot assist in scheduling of the base station. In the scenario in which no multicast DRX is configured for the part or all of the multicasts received or joined by the terminal device, how does the UE report the CSI to facilitate multicast scheduling of the base station?

In addition, if separate multicast CSI masking is configured for the multicast, how does the UE report the CSI?

In view of this, embodiments of this application provide a communication method and a communication apparatus, to report CSI when a unicast DRX and a multicast DRX coexist.

It should be noted that, in embodiments of this application, a terminal device is used as an example for description, or the terminal device may be replaced with a MAC entity of the terminal device or the like. This is not limited in this application.

In embodiments of this application, not sending may be understood as: not reporting.

In embodiments of this application, sending may be understood as: reporting.

In embodiments of this application, "not belonging to" is understood as: being not within.

In embodiments of this application, "belonging to" is understood as: being within.

In embodiments of this application, being associated may be understood as: corresponding.

It should be noted that, in embodiments of this application, that a preset condition includes a condition 1/2/3/4/10/11/12/13 may be understood as: if the preset condition includes the condition 1/2/3/4/10/11/12/13, or when the preset condition includes the condition 1/2/3/4/10/11/12/13.

With reference to FIG. 4 and FIG. 5, the following describes in detail communication methods and communication apparatuses provided in embodiments of this application.

FIG. 4 is a schematic diagram of a communication method according to an embodiment of this application. As shown in FIG. 4, the method 400 may include step 410.

410: If a preset condition is satisfied, a terminal device skips sending first channel state information CSI at first time, where the preset condition includes any one or more of a condition 1, a condition 2, a condition 3, a condition 4, a condition 10, a condition 11, a condition 12, or a condition 13.

It should be noted that the first time may be understood as a period of time, or may be understood as a time point or a moment. This is not limited in embodiments of this application. For example, the first time may alternatively be understood as any one or more of the following: one or more symbols, one or more slots, one or more subframes, one or more frames, or the like. For example, the first time may be understood as a symbol n. For example, the first time may also be referred to as a first moment.

It should be noted that the condition 1 is a first condition, the condition 2 is a second condition, the condition 3 is a third condition, the condition 4 is a fourth condition, the condition 10 is a tenth condition, the condition 11 is an eleventh condition, the condition 12 is a twelfth condition, and the condition 13 is a thirteenth condition.

Optionally, the first CSI may include any one or more of the following:
semi-persistent CSI;
periodic CSI;
CSI configured on a physical uplink shared channel PUSCH;
semi-persistent CSI configured on a PUSCH;
CSI configured on a physical uplink control channel PUCCH;
periodic CSI configured on a PUCCH;
semi-persistent CSI configured on a PUCCH;
CSI that is layer 1 reference signal received power L1-RSRP;
CSI that is not L1-RSRP;
periodic CSI that is L1-RSRP;
periodic CSI that is not L1-RSRP;
CSI that is configured on a PUCCH and that is L1-RSRP;
CSI that is configured on a PUCCH and that is not L1-RSRP;
periodic CSI that is configured on a PUCCH and that is L1-RSRP; or
periodic CSI that is configured on a PUCCH and that is not L1-RSRP.

Optionally, that a terminal device skips sending first CSI at first time may include: The terminal device skips sending the first CSI or CSI on the PUCCH at the first time; and/or the terminal device skips sending the first CSI or the CSI on the PUSCH at the first time.

Optionally, that a terminal device skips sending first CSI at first time may include any one or more of the following:

The terminal device skips sending the semi-persistent CSI;
the terminal device skips sending the periodic CSI;
the terminal device skips sending the CSI configured on the PUSCH;
the terminal device skips sending the semi-persistent CSI configured on the PUSCH;
the terminal device skips sending the CSI configured on the PUCCH;
the terminal device skips sending the periodic CSI configured on the PUCCH;
the terminal device skips sending the semi-persistent CSI configured on the PUCCH;
the terminal device skips sending the CSI that is the L1-RSRP;
the terminal device skips sending the CSI that is not the L1-RSRP;
the terminal device skips sending the periodic CSI that is the L1-RSRP;
the terminal device skips sending the periodic CSI that is not the L1-RSRP;
the terminal device skips sending the CSI that is configured on the PUCCH and that is the L1-RSRP;
the terminal device skips sending the CSI that is configured on the PUCCH and that is not the L1-RSRP;
the terminal device skips sending the periodic CSI that is configured on the PUCCH and that is the L1-RSRP;
the terminal device skips sending the periodic CSI that is configured on the PUCCH and that is not the L1-RSRP;
the terminal device skips sending CSI on the PUCCH;
the terminal device skips sending the periodic CSI on the PUCCH;
the terminal device skips sending the semi-persistent CSI on the PUCCH;
the terminal device skips sending CSI on the PUSCH;
the terminal device skips sending the semi-persistent CSI on the PUSCH;
the terminal device skips sending, on the PUCCH, the CSI that is the L1-RSRP;
the terminal device skips sending, on the PUCCH, the CSI that is not the L1-RSRP;
the terminal device skips sending, on the PUCCH, the periodic CSI that is the L1-RSRP; or
the terminal device skips sending, on the PUCCH, the periodic CSI that is not the L1-RSRP.

It should be noted that, in different conditions, the "first CSI" and/or "a terminal device skips sending first CSI at first time" may be different, or may be the same. This is not limited in this application.

Condition 1: The first time does not belong to active time of a first discontinuous reception DRX, and the first time does not belong to active time of a second DRX set.

The first DRX may be for controlling monitoring of control information specific to the terminal device.

It should be noted that the first DRX may alternatively be for controlling monitoring of control information that is not specific to the terminal device. This is not limited in this application.

For example, the first DRX may be for controlling monitoring of control information specific to any one or more of the following RNTIs: a cell RNTI (cell RNTI, C-RNTI), a cancellation indication RNTI (cancellation indication RNTI, CI-RNTI), a configured scheduling RNTI (configured scheduling RNTI, CS-RNTI), an interruption RNTI (interruption RNTI, INT-RNTI), a slot format indication RNTI (slot format indication RNTI, SFI-RNTI), a semi-persistent CSI RNTI (semi-persistent CSI RNTI, SP-CSI-RNTI), a transmit power control-physical uplink control channel-RNTI (transmit power control-PUCCH-RNTI, TPC-PUCCH-RNTI), a transmit power control-physical uplink shared channel-RNTI (transmit power control-PUSCH-RNTI, TPC-PUSCH-RNTI), a transmit power control-sounding reference signal-RNTI (transmit power control-sounding reference signal-RNTI, TPC-SRS-RNTI), an AI-RNTI, a sidelink RNTI (sidelink RNTI, SL-RNTI), a sidelink configured scheduling RNTI (sidelink configured scheduling RNTI, SLCS-RNTI), or a sidelink semi-persistent scheduling V2X RNTI (SL semi-persistent scheduling V-RNTI).

For example, the first DRX may be a unicast DRX or a DRX group (for example, one DRX group).

For example, the active time of the first DRX may include any one or more of the following: running time of an on-duration timer (for example, drx-onDurationTimer) corresponding to a unicast; running time of an inactivity timer (for example, drx-InactivityTimer) corresponding to a unicast; or running time of a retransmission timer corresponding to a unicast.

For example, the retransmission timer corresponding to the unicast may include any one or more of the following: a downlink retransmission timer (for example, drx-RetransmissionTimerDL), an uplink retransmission timer (for example, drx-RetransmissionTimerUL), or a sidelink retransmission timer (for example, drx-RetransmissionTimerSL).

For example, the on-duration timer corresponding to the unicast/an on-duration timer indicates duration for which the terminal device waits, after being woken up, to receive control information (for example, DCI).

For example, the inactivity timer corresponding to the unicast/an inactivity timer indicates a period of time after control information for scheduling new transmission or a period of time after new- transmission data.

For example, the retransmission timer corresponding to the unicast/a retransmission timer indicates duration for which a communication apparatus receives retransmission data/DCI and/or a retransmission resource.

For example, a downlink retransmission timer corresponding to the unicast/a downlink retransmission timer indicates duration for which the communication apparatus receives downlink retransmission data/DCI and/or a downlink retransmission resource.

For example, an uplink retransmission timer corresponding to the unicast/an uplink retransmission timer indicates duration for which the communication apparatus receives uplink retransmission data/DCI and/or an uplink retransmission resource.

For example, a sidelink retransmission timer corresponding to the unicast/a sidelink retransmission timer indicates duration for which the communication apparatus receives sidelink retransmission data/DCI and/or a sidelink retransmission resource.

Optionally, the active time of the first DRX may further include running time of a retransmission timer (for example, drx-RetransmissionTimerDL-PTM) corresponding to a multicast.

For example, the active time of the first DRX may include any one or more of the following: running time of an on-duration timer (for example, drx-onDurationTimer) corresponding to the DRX group; running time of an inactivity timer (for example, drx-InactivityTimer) corresponding to the DRX group; or running time of a retransmission timer corresponding to the DRX group.

Optionally, the active time of the first DRX may further include running time of a retransmission timer (for example, drx-RetransmissionTimerDL-PTM) corresponding to a multicast corresponding to the DRX group.

For example, the retransmission timer corresponding to the multicast indicates duration for which the communication apparatus receives retransmission data/DCI and/or a retransmission resource that correspond/corresponds to the multicast.

It should be noted that the active time of the first DRX may further include other time. This is not limited in this application. For example, for content of the active time of the first DRX, refer to 3GPP TS 38.321: "NR; Medium Access Control (MAC); Protocol specification".

The second DRX set may include at least one multicast DRX, the at least one multicast DRX may include a first multicast DRX, and the first multicast DRX may be for controlling monitoring of control information related to a first multicast service.

For example, the second DRX set may include: a DRX corresponding to a multicast/a multicast service received by the terminal device, or a DRX corresponding to a multicast/a multicast service joined by the terminal device.

For example, the second DRX set may include: a DRX/DRXes corresponding to any multicast/multicast service/all multicasts/multicast services received by the terminal device, or a DRX/DRXes corresponding to any multicast/multicast service/all multicasts/multicast services joined by the terminal device.

For example, the second DRX set is associated with a first multicast service set, and the first multicast service set may include the first multicast service.

For example, the first multicast service set may include: the multicast/the multicast service received by the terminal device, or the multicast/the multicast service joined by the terminal device.

For example, the first multicast service set may include: the any multicast/multicast service/all the multicasts/multicast services received by the terminal device, or the any multicast/multicast service/all the multicasts/multicast services joined by the terminal device.

For example, the first multicast service may be understood as: a multicast service associated with a first G-RNTI and/or a first G-CS-RNTI, or a multicast associated with the first G-RNTI and/or the first G-CS-RNTI.

For example, the control information related to the first multicast service may include/be understood as: control information associated with (or scrambled by using) the first G-RNTI and/or the first G-CS-RNTI, and/or control information scrambled by using a unicast RNTI (for example, the C-RNTI and/or the CS-RNTI).

It should be noted that the first multicast DRX may alternatively be for controlling monitoring of other control information. This is not limited in this application.

For example, active time of a multicast DRX may include any one or more of the following: running time of an on-duration timer (for example, drx-onDurationTimerPTM) corresponding to the multicast (for example, a G-RNTI and/or a G-CS-RNTI); running time of an inactivity timer (for example, drx-InactivityTimerPTM) corresponding to the multicast (for example, a G-RNTI and/or a G-CS-RNTI); or the running time of the retransmission timer (for example, drx-RetransmissionTimerDL-PTM) corresponding to the multicast (for example, a G-RNTI and/or a G-CS-RNTI).

For example, the on-duration timer corresponding to the multicast/the on-duration timer indicates the duration for which the terminal device waits, after being woken up, to receive the control information (for example, the DCI).

For example, the inactivity timer corresponding to the multicast indicates the period of time after the control information for scheduling the new transmission or the period of time after the new- transmission data.

For example, active time of the first multicast DRX may include any one or more of the following: running time of an on-duration timer (for example, drx-onDurationTimerPTM) corresponding to the first multicast service (or the first G-RNTI and/or the first G-CS-RNTI); running time of an inactivity timer (for example, drx-InactivityTimerPTM) corresponding to the first multicast service (or the first G-RNTI and/or the first G-CS-RNTI); or running time of a retransmission timer (for example, drx-RetransmissionTimerDL-PTM) corresponding to the first multicast service (or the first G-RNTI and/or the first G-CS-RNTI).

For example, the active time of the second DRX set may include any one or more of the following: active time of a DRX set corresponding to the first multicast service set, active time of a DRX set corresponding to a G-RNTI set and/or a G-CS-RNTI set that correspond/corresponds to the first multicast service set, or active time of a DRX set corresponding to a G-RNTI set and/or a G-CS-RNTI set that correspond/corresponds to the second DRX set.

For example, the active time of the second DRX set may include any one or more of the following: running time of drx-onDurationTimerPTM, drx-InactivityTimerPTM, or drx-RetransmissionTimerDL-PTM that is specific to the G-RNTI set and/or the G-CS-RNTI set that correspond/corresponds to the second DRX set.

It should be noted that the active time of the second DRX set/the multicast DRX/the first multicast DRX may further include other time. This is not limited in this application.

Optionally, the preset condition includes the condition 1, and "a terminal device skips sending first CSI at first time" may include: For a first cell set, the terminal device skips sending the first CSI at the first time.

The first cell set includes at least one cell, and the first cell set is associated with the first DRX.

For example, the first DRX is the DRX group (for example, a first DRX group). The first cell set is a cell set corresponding to the DRX group (for example, the first DRX group).

It should be noted that "for a first cell set, the terminal device skips sending the first CSI at the first time" may include/be understood as any one of the following: The terminal device skips sending the CSI (for example, the first CSI) in the first cell set at the first time; or the terminal device skips sending, at the first time, CSI (for example, the first CSI) specific to the first cell set.

It should be noted that, for "the terminal device skips sending the CSI (for example, the first CSI) in the first cell set at the first time", whether the terminal device sends, in another cell or cell group, the CSI specific to the first cell set is not limited in this application.

It should be noted that, for "the terminal device skips sending, at the first time, CSI (for example, the first CSI) specific to the first cell set", whether the terminal device sends, in the first cell set, CSI specific to another cell or cell set is not limited in this application.

It should be noted that, in explanations related to "for a first cell set, the terminal device skips sending the first CSI at the first time", the "first cell set" may include/be understood as/be replaced with: the first DRX. For example, "for a first cell set" may include/be understood as: for the first DRX. For example, "in the first cell set" may include/be understood as: in the first DRX. For example, "specific to the first cell set" may include/be understood as: specific to the first DRX.

Optionally, the first cell set includes a second cell set.

For example, the second cell set is a subset of the first cell set, or the second cell set is equal to the first cell set.

The second cell set is associated with the second DRX set, and the second cell set includes at least one cell.

It may be understood that the second DRX set is associated with the first DRX.

For example, the second DRX set may include: a DRX corresponding to a multicast/a multicast service received by the terminal device and associated with the first cell set/the first DRX, a DRX corresponding to a multicast/a multicast service joined by the terminal device and associated with the first cell set/the first DRX, or a DRX corresponding to a multicast/a multicast service associated with the first cell set/the first DRX.

For example, the second DRX set may include: a DRX/DRXes corresponding to any multicast/multicast service/all multicasts/multicast services received by the terminal device and associated with the first cell set/the first DRX, a DRX/DRXes corresponding to any multicast/multicast service/all multicasts/multicast services joined by the terminal device and associated with the first cell set/the first DRX, or a DRX/DRXes corresponding to any multicast/multicast service/all multicasts/multicast services associated with the first cell set/the first DRX.

For example, the first multicast service set may include: the multicast/the multicast service received by the terminal device and associated with the first cell set/the first DRX, the multicast/the multicast service joined by the terminal device and associated with the first cell set/the first DRX, or the multicast/the multicast service associated with the first cell set/the first DRX.

For example, the first multicast service set may include: the any multicast/multicast service/all the multicasts/multicast services received by the terminal device and associated with the first cell set/the first DRX, the any multicast/multicast service/all the multicasts/multicast services joined by the terminal device and associated with the first cell set/the first DRX, or the any multicast/multicast service/all the multicasts/multicast services associated with the first cell set/the first DRX.

For example, the second DRX set may include/be a multicast DRX set associated with the first DRX, or a multicast DRX set corresponding to a multicast service set associated with the first cell set.

For example, the terminal device includes/has two DRX groups, the first DRX group corresponds to three cells: a cell 1, a cell 2, and a cell 3, and a second DRX group corresponds to three cells: a cell 4, a cell 5, and a cell 6. The terminal device receives a multicast 1 in the cell 1. If the first time is within neither active time of the first DRX group nor active time of a multicast DRX corresponding to the multicast 1, for the first DRX group/the first cell set, the terminal device skips sending the first CSI at the first time. The first DRX is the first DRX group, the second DRX set is the multicast DRX corresponding to the multicast 1, the first cell set is the cell 1, the cell 2, and the cell 3, and the second cell set is the cell 1.

For example, the terminal device includes/has two DRX groups, the first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and the terminal device receives a multicast 2 in the cell 2. If the first time is within neither active time of the first DRX group nor active time of a multicast DRX corresponding to the multicast 1 and active time of a multicast DRX corresponding to the multicast 2, for the first DRX group/the first cell set, the terminal device skips sending the first CSI at the first time. The first DRX is the first DRX group, the second DRX set is the multicast DRX corresponding to the multicast 1 and the multicast DRX corresponding to the multicast 2, the first cell set is the cell 1, the cell 2, and the cell 3, and the second cell set is the cell 1 and the cell 2.

For example, the terminal device includes/has two DRX groups, the first DRX group corresponds to three cells: a cell 1, a cell 2, and a cell 3, and a second DRX group corresponds to three cells: a cell 4, a cell 5, and a cell 6. The terminal device receives a multicast 1 in the cell 1, the terminal device receives a multicast 2 in the cell 2, and the terminal device receives a multicast 4 in the cell 4. If the first time is within neither active time of the first DRX group nor active time of a multicast DRX corresponding to the multicast 1 and active time of a multicast DRX corresponding to the multicast 2, for the first DRX group/the first cell set, the terminal device skips sending the first CSI at the first time. The first DRX is the first DRX group, the second DRX set is the multicast DRX corresponding to the multicast 1 and the multicast DRX corresponding to the multicast 2, the first cell set is the cell 1, the cell 2, and the cell 3, and the second cell set is the cell 1 and the cell 2.

In some embodiments, whether the first time belongs to the active time of the first DRX may be determined by the terminal device.

Optionally, that the first time does not belong to the active time of the first DRX includes: The terminal device determines that the first time does not belong to the active time of the first DRX.

Optionally, that the terminal device determines that the first time does not belong to the active time of the first DRX may include:

(1) The terminal device may determine, based on or by considering any one or more of a grant, assignment, a DRX command MAC CE, or a long DRX command MAC CE that is received at second time and/or before the second time, and/or based on or by considering a scheduling request sent at the second time and/or before the second time, that the first time does not belong to the active time of the first DRX; and/or

(2) the terminal device may determine, based on or by considering the any one or more of the grant, the assignment, the DRX command MAC CE, or the long DRX command MAC CE that is received at the second time and/or before the second time, and/or based on or by considering the scheduling request sent at the second time and/or before the second time, that the first time does not belong to the active time of the first DRX, where the received grant and assignment may be a grant and assignment that are received in the first cell set.

Optionally, the grant includes a unicast-related grant.

Optionally, the assignment includes unicast-related assignment.

Optionally, the DRX command MAC CE includes a unicast-related DRX command MAC CE.

Optionally, the long DRX command MAC CE includes a unicast-related long DRX command MAC CE.

Optionally, the scheduling request includes a unicast-related scheduling request.

The second time is determined based on the first time and first duration.

For example, an interval between the second time and the first time is the first duration, and the second time is before the first time.

For example, the first duration may be a parameter configured by a network device, may be calculated based on a formula or an algorithm, or may be specified in a protocol. This is not limited in this embodiment of this application. For example, the first duration is 4 ms.

In some embodiments, whether the first time belongs to the active time of the second DRX set may be determined by the terminal device.

Optionally, that the first time does not belong to the active time of the second DRX set includes: The terminal device determines that the first time does not belong to the active time of the second DRX set.

Optionally, that the terminal device determines that the first time does not belong to the active time of the second DRX set may include:
(1) The terminal device may determine, based on or by considering any one or more of assignment (for example, received multicast-related assignment), a multicast-related DRX command MAC CE, or a multicast-related long DRX command MAC CE that is received at third time and/or before the third time, that the first time does not belong to the active time of the second DRX set; and/or
(2) the terminal device may determine, based on or by considering the any one or more of the assignment (for example, the received multicast-related assignment), the multicast-related DRX command MAC CE, or the multicast-related long DRX command MAC CE that is received at the third time and/or before the third time, that the first time does not belong to the active time of the second DRX set, where the received assignment (for example, the received multicast-related assignment) may be assignment received in the second cell set or the first cell set, and/or received assignment related to the first multicast service set; optionally, the multicast-related DRX command MAC CE may be a multicast-related DRX command MAC CE received in the second cell set, and/or a DRX command MAC CE related to the first multicast service set; and optionally, the multicast-related long DRX command MAC CE may be a multicast-related long DRX command MAC CE received in the second cell set, and/or a long DRX command MAC CE related to the first multicast service set.

It should be noted that the unicast-related long DRX command MAC CE and the multicast-related long DRX command MAC CE may be the same, or may be different. This is not limited in this embodiment of this application.

It should be noted that the unicast-related DRX command MAC CE and the multicast-related DRX command MAC CE may be the same, or may be different. This is not limited in this embodiment of this application.

It should be noted that, in this embodiment of this application, the multicast-related assignment may include: assignment/data received in a unicast manner (for example, through scheduling of DCI scrambled by using the C-RNTI or the CS-RNTI), and/or assignment/data received in a multicast manner (for example, through scheduling of DCI scrambled by using the G-RNTI or the G-CS-RNTI).

The third time is determined based on the first time and second duration.

For example, an interval between the third time and the first time is the second duration, and the third time is before the first time.

Likewise, the second duration may be a parameter configured by the network device, may be calculated based on a formula or an algorithm, or may be specified in a protocol. This is not limited in this embodiment of this application. For example, the second duration is 4 ms.

It should be noted that the third time and the second time may be the same, or may be different. This is not limited in this embodiment of this application.

It should be noted that the second duration and the first duration may be the same, or may be different. This is not limited in this embodiment of this application.

In another embodiment, optionally, that the first time does not belong to the active time of the first DRX and that the first time does not belong to the active time of the second DRX set include: The terminal device determines that the first time does not belong to the active time of the first DRX and that the first time does not belong to the active time of the second DRX set.

Optionally, that the terminal device determines that the first time does not belong to the active time of the first DRX and that the first time does not belong to the active time of the second DRX set includes:
(1) The terminal device may determine, based on or by considering any one or more of a grant, assignment, a DRX command MAC CE, a long DRX command MAC CE, a multicast-related DRX command MAC CE, or a multicast-related long DRX command MAC CE that is received at fifth time and/or before the fifth time, and/or based on or by considering a scheduling request sent at the fifth time and/or before the fifth time, that the first time does not belong to the active time of the first DRX and that the first time does not belong to the active time of the second DRX set; and/or
(2) the terminal device may determine, based on or by considering the any one or more of the grant, the assignment, the DRX command MAC CE, the long DRX command MAC CE, the multicast-related DRX command MAC CE, or the multicast-related long DRX command MAC CE that is received at the fifth time and/or before the fifth time, and/or based on or by considering the scheduling request sent at the fifth time and/or before the fifth time, that the first time does not belong to the active time of the first DRX and that the first time does not belong to the active time of the second DRX set, where the received grant and assignment may be a grant and assignment received in the first cell set or the second cell set.

Optionally, the grant includes a unicast-related grant.

Optionally, the assignment includes unicast-related assignment and/or multicast-related assignment.

Optionally, the DRX command MAC CE includes a unicast-related DRX command MAC CE.

Optionally, the long DRX command MAC CE includes a unicast-related long DRX command MAC CE.

Optionally, the scheduling request includes a unicast-related scheduling request.

The fifth time is determined based on the first time and fourth duration.

For example, an interval between the fifth time and the first time is the fourth duration, and the fifth time is before the first time.

It should be understood that the fourth duration may be a parameter configured by the network device, may be calculated based on a formula or an algorithm, or may be specified in a protocol. This is not limited in this embodiment of this application. For example, the fourth duration is 4 ms.

Optionally, the preset condition includes the condition 1, and the first CSI may be/include/be replaced with second CSI.

The second CSI may include any one or more of the following:
the semi-persistent CSI;
the periodic CSI;
the CSI configured on the physical uplink shared channel PUSCH;
the semi-persistent CSI configured on the PUSCH;
the CSI configured on the physical uplink control channel PUCCH;
the periodic CSI configured on the PUCCH; or
the semi-persistent CSI configured on the PUCCH.

Optionally, the preset condition includes the condition 1, and "a terminal device skips sending first CSI at first time" may be/include/be replaced with: The terminal device skips sending the second CSI at the first time.

Optionally, that the terminal device skips sending the second CSI at the first time may include any one or more of the following:

The terminal device skips sending the semi-persistent CSI;
the terminal device skips sending the periodic CSI;
the terminal device skips sending the CSI configured on the PUSCH;
the terminal device skips sending the semi-persistent CSI configured on the PUSCH;
the terminal device skips sending the CSI configured on the PUCCH;
the terminal device skips sending the periodic CSI configured on the PUCCH;
the terminal device skips sending the semi-persistent CSI configured on the PUCCH;
the terminal device skips sending the CSI on the PUCCH;
the terminal device skips sending the periodic CSI on the PUCCH;
the terminal device skips sending the semi-persistent CSI on the PUCCH;
the terminal device skips sending the CSI on the PUSCH; or
the terminal device skips sending the semi-persistent CSI on the PUSCH.

For example, if the condition 1 is satisfied, the terminal device skips sending the first CSI or the second CSI at the first time.

For example, if the condition 1 is satisfied, for the first cell set, the terminal device skips sending the first CSI or the second CSI at the first time.

For example, if the symbol n is within neither the active time of the unicast DRX nor the active time of the multicast DRX, the terminal device skips sending the semi-persistent CSI configured on the PUSCH; and/or the terminal device skips sending the CSI on the PUCCH.

For example, if the symbol n is within neither active time of a DRX group nor active time of a multicast DRX associated with the DRX group, for the DRX group or in the DRX group, the terminal device skips sending the semi-persistent CSI configured on the PUSCH; and/or the terminal device skips sending the CSI on the PUCCH.

Optionally, the preset condition includes the condition 1, and the preset condition may further include a condition 5.

Optionally, the preset condition includes the condition 1, and the method 400 in this application may further include that a condition 5 is satisfied.

The condition 5 may include any one or more of the following:

The terminal device does not obtain second information, where the second information includes information related to a wake-up signal;
the first time is not within duration corresponding to a first timer; or
the first timer is started or restarted.

For example, not obtaining may be understood as: Obtaining fails or receiving fails.

For example, the wake-up signal may include/be understood as/be replaced with: a power saving signal.

For example, a form of the wake-up signal may be any one or more of DCI, a reference signal, a sequence, or the like, or another form. This is not limited in this application.

For example, the wake-up signal may be DCI with CRC scrambled by PS-RNTI (DCI with CRC scrambled by PS-RNTI, DCP) or DCI scrambled by using the PS-RNTI.

Optionally, the second information is associated with the unicast. Optionally, the wake-up signal is associated with the unicast DRX (for example, the first DRX).

It should be noted that "the terminal device does not obtain second information" may include/be replaced with/be understood as any one or more of the following: The terminal device is not configured to monitor the wake-up signal; the terminal device is not configured by the network device to monitor the wake-up signal; the terminal device does not monitor the wake-up signal; for an active BWP, monitoring of the wake-up signal is not configured; for an active BWP, the terminal device is not configured to monitor the wake-up signal; for an active BWP, the terminal device is not configured by the network device to monitor the wake-up signal; no function of the DCP is configured for the terminal device; or no function of the DCP is configured by the network device for the terminal device.

It may be understood that, if the terminal device is configured to monitor the wake-up signal, the terminal device may determine, based on the wake-up signal, whether to start or restart an on-duration timer (for example, drx-onDurationTimer) corresponding to the unicast.

"The first timer is started or restarted" may include/be replaced with/be understood as: In a DRX cycle corresponding to the first time, the first timer is started or restarted; in a DRX cycle corresponding to the first time, the first timer was started or restarted; in a DRX cycle of the first DRX corresponding to the first time, the first timer is started or restarted; in a DRX cycle of the first DRX corresponding to the first time, the first timer was started or restarted; in a current DRX cycle, the first timer is started or restarted; or in a current DRX cycle, the first timer was started or restarted.

It should be understood that "the first timer is started or restarted" is not limited to that the first timer is still run at the first time. For example, the first timer may be still run or not run at the first time.

For example, if the condition 1 and the condition 5 are satisfied, the terminal device skips sending the first CSI or the second CSI at the first time.

For example, if the condition 1 and the condition 5 are satisfied, for the first cell set, the terminal device skips sending the first CSI or the second CSI at the first time.

For example, if no DCP is configured for the terminal device, the symbol n is not within duration of the on-duration timer corresponding to the unicast, or the on-duration timer corresponding to the unicast is started or restarted; and the symbol n is within neither the active time of the unicast DRX nor the active time of the multicast DRX, the terminal device skips sending the semi-persistent CSI configured on the PUSCH; and/or the terminal device skips sending the CSI on the PUCCH.

For example, if no DCP is configured for the terminal device, the symbol n is not within duration of the on-duration timer corresponding to the unicast, or the on-duration timer corresponding to the unicast is started or restarted; and the symbol n is within neither the active time of the DRX group nor the active time of the multicast DRX associated with the DRX group, for the DRX group or in the DRX group, the terminal device skips sending the semi-persistent CSI configured on the PUSCH; and/or the terminal device skips sending the CSI on the PUCCH.

Optionally, the preset condition includes the condition 1, and the first CSI may be/include/be replaced with third CSI.

The third CSI may include any one or more of the following:
the semi-persistent CSI;
the CSI configured on the PUSCH;
the semi-persistent CSI configured on the PUCCH;
the CSI that is the layer 1 reference signal received power L1-RSRP;
the CSI that is not the L1-RSRP;
the periodic CSI that is the L1-RSRP;
the periodic CSI that is not the L1-RSRP;
the CSI that is configured on the PUCCH and that is the L1-RSRP;
the CSI that is configured on the PUCCH and that is not the L1-RSRP;
the periodic CSI that is configured on the PUCCH and that is the L1-RSRP; or
the periodic CSI that is configured on the PUCCH and that is not the L1-RSRP.

Optionally, the preset condition includes the condition 1, and "a terminal device skips sending first CSI at first time" may be/include/be replaced with: The terminal device skips sending the third CSI at the first time.

Optionally, that the terminal device skips sending the third CSI at the first time may include any one or more of the following:

The terminal device skips sending the semi-persistent CSI;
the terminal device skips sending the CSI configured on the PUSCH;
the terminal device skips sending the semi-persistent CSI configured on the PUCCH;
the terminal device skips sending the CSI that is the L1-RSRP;
the terminal device skips sending the CSI that is not the L1-RSRP;
the terminal device skips sending the periodic CSI that is the L1-RSRP;
the terminal device skips sending the periodic CSI that is not the L1-RSRP;
the terminal device skips sending the CSI that is configured on the PUCCH and that is the L1-RSRP;
the terminal device skips sending the CSI that is configured on the PUCCH and that is not the L1-RSRP;
the terminal device skips sending the periodic CSI that is configured on the PUCCH
and that is the L1-RSRP;
the terminal device skips sending the periodic CSI that is configured on the PUCCH and that is not the L1-RSRP;
the terminal device skips sending, on the PUCCH, the CSI that is the L1-RSRP;
the terminal device skips sending, on the PUCCH, the CSI that is not the L1-RSRP;
the terminal device skips sending, on the PUCCH, the periodic CSI that is the L1-RSRP; or
the terminal device skips sending, on the PUCCH, the periodic CSI that is not the L1-RSRP.

Optionally, the preset condition includes the condition 1, and the preset condition may further include a condition 6.

Optionally, the preset condition includes the condition 1, and the method in this application may further include that a condition 6 is satisfied.

The condition 6 may include any one or more of the following:

The terminal device obtains second information, where the second information includes information related to a wake-up signal;
the first time is within duration corresponding to a first timer; or
a first timer is not started or not restarted.

For example, obtaining may be understood as: Obtaining succeeds or receiving succeeds.

It should be noted that "the terminal device obtains second information" may include/be replaced with/be understood as any one or more of the following: The terminal device is configured to monitor the wake-up signal; the terminal device is configured by the network device to monitor the wake-up signal; the terminal device monitors the wake-up signal; for an active BWP, monitoring of the wake-up signal is configured; for an active BWP, the terminal device is configured to monitor the wake-up signal; for an active BWP, the terminal device is configured by the network device to monitor the wake-up signal; a function of DCP is configured for the terminal device; or a function of DCP is configured by the network device for the terminal device.

"A first timer is not started or not restarted" may include/be replaced with/be understood as: In a DRX cycle corresponding to the first time, the first timer is not started or not restarted; in a DRX cycle corresponding to the first time, the first timer was not started or not restarted; in a DRX cycle of the first DRX corresponding to the first time, the first timer is not started or not restarted; in a DRX cycle of the first DRX corresponding to the first time, the first timer was not started or not restarted; in a current DRX cycle, the first timer is not started or not restarted; or in a current DRX cycle, the first timer was not started or not restarted.

For example, if the condition 1 and the condition 6 are satisfied, the terminal device skips sending the first CSI or the third CSI at the first time.

For example, if the condition 1 and the condition 6 are satisfied, for the first cell set, the terminal device skips sending the first CSI or the third CSI at the first time.

For example, if DCP is configured for the terminal device, the symbol n is within duration of the on-duration timer corresponding to the unicast, the on-duration timer corresponding to the unicast is not started or not restarted, and the symbol n is within neither the active time of the unicast DRX nor the active time of the multicast DRX, the terminal device skips sending the semi-persistent CSI configured on the PUSCH; and/or the terminal device skips sending the CSI/the periodic CSI on the PUCCH.

For example, if DCP is configured for the terminal device, the symbol n is within duration of the on-duration timer corresponding to the unicast, the on-duration timer corresponding to the unicast is not started or not restarted, and the symbol n is within neither active time of a DRX group nor the active time of the multicast DRX, for the DRX group or in the DRX group, the terminal device skips sending the semi-persistent CSI configured on the PUSCH; and/or the terminal device skips sending the CSI/the periodic CSI on the PUCCH.

Optionally, the preset condition includes the condition 1, and the preset condition may further include a condition 7.

Optionally, the preset condition includes the condition 1, and the method in this application may further include that a condition 7 is satisfied.

The condition 7 includes: The terminal device does not obtain fourth information; and/or the terminal device does not obtain third information.

The third information indicates to report the periodic CSI that is the L1-RSRP or the CSI that is the L1-RSRP, indicates the terminal device to report the periodic CSI that is the L1-RSRP or the CSI that is the L1-RSRP, or indicates the terminal device to report the periodic CSI or the CSI.

"Report the periodic CSI that is the L1-RSRP or the CSI that is the L1-RSRP" may include any one or more of the following:
when/if the first timer is not started or is not restarted, reporting the periodic CSI that is the L1-RSRP or the CSI that is the L1-RSRP;
when/if the condition 6 is satisfied, reporting the periodic CSI that is the L1-RSRP or the CSI that is the L1-RSRP; or
when/if the condition 1 and the condition 6 are satisfied, reporting the periodic CSI that is the L1-RSRP or the CSI that is the L1-RSRP.

"Report the periodic CSI or the CSI" may include any one or more of the following:
when/if the first timer is not started or is not restarted, reporting the periodic CSI or the CSI;
when/if the sixth condition is satisfied, reporting the periodic CSI or the CSI; or
when/if the first condition and the sixth condition are satisfied, reporting the periodic CSI or the CSI.

"The terminal device does not obtain third information" may include/be understood as: The terminal device is not configured to report the periodic CSI that is the L1-RSRP or the CSI that is the L1-RSRP.

The fourth information indicates to report the periodic CSI that is not the L1-RSRP or the CSI that is not the L1-RSRP, or indicates the terminal device to report the periodic CSI that is not the L1-RSRP or the CSI that is not the L1-RSRP.

"Report the periodic CSI that is not the L1-RSRP or the CSI that is not the L1-RSRP" may include any one or more of the following:
when/if the first timer is not started or is not restarted, reporting the periodic CSI that is not the L1-RSRP or the CSI that is not the L1-RSRP;
when/if the condition 6 is satisfied, reporting the periodic CSI that is not the L1-RSRP or the CSI that is not the L1-RSRP; or
when/if the condition 1 and the condition 6 are satisfied, reporting the periodic CSI that is not the L1-RSRP or the CSI that is not the L1-RSRP.

"The terminal device does not obtain fourth information" may include/be understood as: The terminal device is not configured to report the periodic CSI that is not the L1-RSRP or the CSI that is not the L1-RSRP.

For example, the periodic CSI that is the L1-RSRP or the CSI that is the L1-RSRP may be understood as: periodic CSI whose type is the L1-RSRP or CSI whose type is the L1-RSRP.

For example, the periodic CSI that is not the L1-RSRP or the CSI that is not the L1-RSRP may be understood as: periodic CSI whose type is not the L1-RSRP or CSI whose type is not the L1-RSRP.

For example, if the terminal device does not obtain the third information, in the condition 1 and the condition 6, the terminal device skips sending, on the PUCCH at the first time, the periodic CSI that is the L1-RSRP.

For example, if the terminal device does not obtain the fourth information, in the condition 1 and the condition 6, the terminal device skips sending, on the PUCCH at the first time, the periodic CSI that is not the L1-RSRP.

For example, if the condition 1 and the condition 7 are satisfied, the terminal device skips sending the first CSI or the third CSI at the first time.

For example, if the condition 1 and the condition 7 are satisfied, for the first cell set, the terminal device skips sending the first CSI or the third CSI at the first time.

For example, if the condition 1, the condition 6, and the condition 7 are satisfied, the terminal device skips sending the first CSI or the third CSI at the first time.

For example, if the condition 1, the condition 6, and the condition 7 are satisfied, for the first cell set, the terminal device skips sending the first CSI or the third CSI at the first time.

For example, if the DCP is configured for the terminal device, the symbol n is within the duration of the on-duration timer corresponding to the unicast, the on-duration timer corresponding to the unicast is not started or not restarted, and the symbol n is within neither the active time of the unicast DRX nor the active time of the multicast DRX, the terminal device performs any one or more of the following:

The terminal device skips sending the semi-persistent CSI configured on the PUSCH;
if the terminal device is not configured to need to report the periodic CSI that is the L1-RSRP or the CSI that is the L1-RSRP, the terminal device skips sending, on the PUCCH, the periodic CSI that is the L1-RSRP; or
if the terminal device is not configured to need to report the periodic CSI that is not the L1-RSRP or the CSI that is not the L1-RSRP, the terminal device skips sending, on the PUCCH, the periodic CSI that is not the L1-RSRP.

For example, if the DCP is configured for the terminal device, the symbol n is within the duration of the on-duration timer corresponding to the unicast, the on-duration timer corresponding to the unicast is not started or not restarted, and the symbol n is within neither the active time of the DRX group nor the active time of the multicast DRX, for the DRX group or in the DRX group, the terminal device performs any one or more of the following:

The terminal device skips sending the semi-persistent CSI configured on the PUSCH;
if the terminal device is not configured to need to report the periodic CSI that is the L1-RSRP or the CSI that is the L1-RSRP, the terminal device skips sending, on the PUCCH, the periodic CSI that is the L1-RSRP; or
if the terminal device is not configured to need to report the periodic CSI that is not the L1-RSRP or the CSI that is not the L1-RSRP, the terminal device skips sending, on the PUCCH, the periodic CSI that is not the L1-RSRP.

Condition 2: The first time does not belong to active time of a first DRX, and the first time belongs to active time of a third DRX set.

The third DRX set includes at least one multicast DRX, the at least one multicast DRX includes a second multicast DRX, and the second multicast DRX is for controlling monitoring of control information related to a second multicast service.

For example, the third DRX set may include: a DRX corresponding to a multicast/a multicast service received by the terminal device, or a DRX corresponding to a multicast/a multicast service joined by the terminal device.

For example, the third DRX set is associated with a second multicast service set, and the second multicast service set may include the second multicast service.

For example, the second multicast service set may include: the multicast/the multicast service received by the terminal device, or the multicast/the multicast service joined by the terminal device.

For example, the second multicast service may be understood as: a multicast service associated with a second G-RNTI and/or a second G-CS-RNTI, or a multicast associated with a second G-RNTI and/or a second G-CS-RNTI.

For example, the control information related to the second multicast service may include/be understood as: control information associated with (or scrambled by using) the second G-RNTI and/or the second G-CS-RNTI, and/or control information scrambled by using a unicast RNTI (for example, a C-RNTI and/or a CS-RNTI).

It should be noted that the second multicast DRX may alternatively be for controlling monitoring of other control information. This is not limited in this application.

For example, active time of the second multicast DRX may include any one or more of the following: running time of an on-duration timer (for example, drx-onDurationTimerPTM) corresponding to the second multicast service (or the second G-RNTI and/or the second G-CS-RNTI); running time of an inactivity timer (for example, drx-InactivityTimerPTM) corresponding to the second multicast service (or the second G-RNTI and/or the second G-CS-RNTI); or running time of a retransmission timer (for example, drx-RetransmissionTimerDL-PTM) corresponding to the second multicast service (or the second G-RNTI and/or the second G-CS-RNTI).

For example, the active time of the third DRX set may include any one or more of the following: active time of a DRX set corresponding to the second multicast service set, active time of a DRX set corresponding to a G-RNTI set and/or a G-CS-RNTI set that correspond/corresponds to the second multicast service set, or active time of a DRX set corresponding to a G-RNTI set and/or a G-CS-RNTI set that correspond/corresponds to the third DRX set.

For example, the active time of the third DRX set may include any one or more of the following: running time of drx-onDurationTimerPTM, drx-InactivityTimerPTM, or drx-RetransmissionTimerDL-PTM that is specific to the G-RNTI set and/or the G-CS-RNTI set that correspond/corresponds to the third DRX set.

It should be noted that the active time of the third DRX set may further include other time. This is not limited in this application.

Optionally, the preset condition includes the condition 2, and "the terminal device sends first CSI at first time" may include: For a third cell set, the terminal device skips sending the first CSI at the first time.

The third cell set includes at least one cell, and the third cell set is not associated with the third DRX set.

It should be noted that "for a third cell set, the terminal device skips sending the first CSI at the first time" may include/be understood as any one of the following: The terminal device skips sending the CSI (for example, the first CSI) in the third cell set at the first time; or the terminal device skips sending, at the first time, CSI (for example, the first CSI) specific to the third cell set.

It should be noted that, for "the terminal device skips sending the CSI (for example, the first CSI) in the third cell set at the first time", whether the terminal device sends, in another cell or cell group, the CSI specific to the third cell set is not limited in this application.

It should be noted that for "the terminal device skips sending, at the first time, CSI (for example, the first CSI) specific to the third cell set", whether the terminal device sends, in the third cell set, CSI specific to another cell or cell set is not limited in this application.

For example, a sixth cell set is associated with the third DRX set or the second multicast service set.

The sixth cell set includes at least one cell.

That the third cell set is not associated with the third DRX set may be understood as: The third cell set is not associated with the second multicast service set.

For example, the third cell set may be understood as/include: a cell/a cell set other than a cell/a cell set associated with the second multicast service set, or a cell/a cell set other than a sixth cell set.

For example, the terminal device includes/has three cells: a cell 1, a cell 2, and a cell 3. The terminal device receives a multicast 1 in the cell 1. If the first time is not within active time of a unicast DRX, but is within active time of a multicast DRX corresponding to the multicast 1, for the cell 2 and the cell 3, the terminal device skips sending the first CSI at the first time. The first DRX is the unicast DRX, the third DRX set is the multicast DRX corresponding to the multicast 1, the third cell set is the cell 2 and the cell 3, and the sixth cell set is the cell 1.

Optionally, the third cell set is associated with the first DRX.

For example, that the third cell set is associated with the first DRX may be understood as: Cells included in the third cell set use a same DRX parameter (for example, a parameter related to the first DRX), and receiving of control information of the cells included in the third cell set is controlled by a same DRX (for example, the first DRX).

Optionally, the sixth cell set is associated with the first DRX.

For example, that the sixth cell set is associated with the first DRX may be understood as: Cells included in the sixth cell set use a same DRX parameter (for example, a parameter related to the first DRX), and receiving of control information of the cells included in the sixth cell set is controlled by a same DRX (for example, the first DRX).

Optionally, a first cell set includes the third cell set.

For example, the third cell set is a subset of the first cell set, or the third cell set is equal to the first cell set.

Optionally, a first cell set includes the sixth cell set.

For example, the sixth cell set is a subset of the first cell set, or the sixth cell set is equal to the first cell set.

Optionally, a first cell set includes the third cell set and the sixth cell set.

For example, the third cell set and the sixth cell set are equal to the first cell set.

For example, the third cell set and the sixth cell set have no intersection set.

For example, the third DRX set may include: a DRX corresponding to a multicast/a multicast service received by the terminal device and associated with the first cell set/the first DRX, a DRX corresponding to a multicast/a multicast service joined by the terminal device and associated with the first cell set/the first DRX, or a DRX corresponding to a multicast/a multicast service associated with the first cell set/the first DRX.

For example, the second multicast service set may include: the multicast/the multicast service received by the terminal device and associated with the first cell set/the first DRX, the multicast/the multicast service joined by the terminal device and associated with the first cell set/the first DRX, or the multicast/the multicast service associated with the first cell set/the first DRX.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1. If the first time is not within active time of the first DRX group, but is within active time of a multicast DRX corresponding to the multicast 1, for cells (namely, the cell 2 and the cell 3) other than the cell 1 in the first cell set, the terminal device skips sending the first CSI at the first time. The first DRX is the first DRX group, the third DRX set is the multicast DRX corresponding to the multicast 1, the first cell set is the cell 1, the cell 2, and the cell 3, the third cell set is the cell 2 and the cell 3, and the sixth cell set is the cell 1.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and the terminal device receives a multicast 2 in the cell 2. If the first time is not within active time of the first DRX group, but is within active time of a multicast DRX corresponding to the multicast 1 and active time of a multicast DRX corresponding to the multicast 2, for a cell (namely, the cell 3) other than both the cell 1 and the cell 2 in the first cell set, the terminal device skips sending the first CSI at the first time. The first DRX is the first DRX group, the third DRX set is the multicast DRX corresponding to the multicast 1 and the multicast DRX corresponding to the multicast 2, the first cell set is the cell 1, the cell 2, and the cell 3, the third cell set is the cell 3, and the sixth cell set is the cell 1 and the cell 2.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, the terminal device receives a multicast 2 in the cell 2, and the terminal device receives a multicast 4 in the cell 4. If the first time is not within active time of the first DRX group, but is within active time of a multicast DRX corresponding to the multicast 1, for cells (namely, the cell 2 and the cell 3) other than the cell 1 in the first cell set, the terminal device skips sending the first CSI at the first time. The first DRX is the first DRX group, the third DRX set is the multicast DRX corresponding to the multicast 1, the first cell set is the cell 1, the cell 2, and the cell 3, the third cell set is the cell 2 and the cell 3, and the sixth cell set is the cell 1.

In some embodiments, whether the first time belongs to the active time of the third DRX set may be determined by the terminal device.

Optionally, that the first time belongs to the active time of the third DRX set includes: The terminal device determines that the first time belongs to the active time of the third DRX set.

Optionally, that the terminal device determines that the first time belongs to the active time of the third DRX set may include:
(1) The terminal device determines, based on or by considering any one or more of assignment (for example, received multicast-related assignment), a multicast-related DRX command MAC CE, or a multicast-related long DRX command MAC CE that is received at fourth time and/or before the fourth time, that the first time belongs to the active time of the third DRX set; and/or
(2) the terminal device may determine, based on or by considering the any one or more of the assignment (for example, the received multicast-related assignment), the multicast-related DRX command MAC CE, or the multicast-related long DRX command MAC CE that is received at the fourth time and/or before the fourth time, that the first time does not belong to the active time of the third DRX set, where the received assignment (for example, the received multicast-related assignment) may be assignment received in the sixth cell set or the first cell set, and/or received assignment related to the second multicast service set; optionally, the multicast-related DRX command MAC CE may be a multicast-related DRX command MAC CE received in the sixth cell set or the first cell set, and/or a DRX command MAC CE related to the second multicast service set; and optionally, the multicast-related long DRX command MAC CE may be a multicast-related long DRX command MAC CE received in the sixth cell set or the first cell set, and/or a long DRX command MAC CE related to the second multicast service set.

The fourth time is determined based on the first time and third duration.

For example, an interval between the fourth time and the first time is the third duration, and the fourth time is before the first time.

Likewise, the third duration may be a parameter configured by a network device, may be calculated based on a formula or an algorithm, or may be specified in a protocol. This is not limited in this embodiment of this application. For example, the third duration is 4 ms.

It should be understood that the fourth time and second time may be the same, or may be different. This is not limited in this embodiment of this application.

It should be noted that the third duration and first duration may be the same, or may be different. This is not limited in this embodiment of this application.

Optionally, that the first time does not belong to the active time of the first DRX and that the first time belongs to the active time of the third DRX set include: The terminal device determines that the first time does not belong to the active time of the first DRX and that the first time belongs to the active time of the third DRX set.

Optionally, that the terminal device determines that the first time does not belong to the active time of the first DRX and that the first time belongs to the active time of the third DRX set may include:
(1) The terminal device determines, based on or by considering any one or more of a grant, assignment, a DRX command MAC CE, a long DRX command MAC CE, a multicast-related DRX command MAC CE, or a multicast-related long DRX command MAC CE that is received at sixth time and/or before the sixth time, and/or based on or by considering a scheduling request sent at the sixth time and/or before the sixth time, that the first time does not belong to the active time of the first DRX and that the first time belongs to the active time of the third DRX set; and/or
(2) the terminal device may determine, based on or by considering the any one or more of the grant, the assignment, the DRX command MAC CE, the long DRX command MAC CE, the multicast-related DRX command MAC CE, or the multicast-related long DRX command MAC CE that is received at the sixth time and/or before the sixth time, and/or based on or by considering the scheduling request sent at the sixth time and/or before the sixth time, that the first time does not belong to the active time of the first DRX and that the first time does not belong to the active time of the third DRX set, where the received grant and assignment may be a grant and assignment received in the first cell set or the sixth cell set.

Optionally, the grant includes a unicast-related grant.

Optionally, the assignment includes unicast-related assignment and/or multicast-related assignment.

Optionally, the DRX command MAC CE includes a unicast-related DRX command MAC CE.

Optionally, the long DRX command MAC CE includes a unicast-related long DRX command MAC CE.

Optionally, the scheduling request includes a unicast-related scheduling request.

The sixth time is determined based on the first time and fifth duration.

For example, the interval between the sixth time and the first time is the fifth duration, and the sixth time is before the first time.

It should be understood that the fifth duration may be a parameter configured by the network device, may be calculated based on a formula or an algorithm, or may be specified in a protocol. This is not limited in this embodiment of this application. For example, the fifth duration is 4 ms.

Optionally, the preset condition includes the condition 2, and the first CSI may be/include/be replaced with fourth CSI.

The fourth CSI may include any one or more of the following:
the semi-persistent CSI;
the periodic CSI;
the CSI configured on the physical uplink shared channel PUSCH;
the semi-persistent CSI configured on the PUSCH;
the CSI configured on the physical uplink control channel PUCCH;
the periodic CSI configured on the PUCCH; or
the semi-persistent CSI configured on the PUCCH.

Optionally, the preset condition includes the condition 2, and "a terminal device skips sending first CSI at first time" may be/include/be replaced with: The terminal device skips sending the fourth CSI at the first time.

Optionally, that the terminal device skips sending the fourth CSI at the first time may include any one or more of the following:
The terminal device skips sending the semi-persistent CSI;
the terminal device skips sending the periodic CSI;
the terminal device skips sending the CSI configured on the PUSCH;
the terminal device skips sending the semi-persistent CSI configured on the PUSCH;
the terminal device skips sending the CSI configured on the PUCCH;
the terminal device skips sending the periodic CSI configured on the PUCCH;
the terminal device skips sending the semi-persistent CSI configured on the PUCCH;
the terminal device skips sending the CSI on the PUCCH;
the terminal device skips sending the periodic CSI on the PUCCH;
the terminal device skips sending the semi-persistent CSI on the PUCCH;
the terminal device skips sending the CSI on the PUSCH; or
the terminal device skips sending the semi-persistent CSI on the PUSCH.

For example, if the condition 2 is satisfied, the terminal device skips sending the first CSI or the fourth CSI at the first time.

For example, if the condition 2 is satisfied, for the third cell set, the terminal device skips sending the first CSI or the fourth CSI at the first time.

For example, if the symbol n is not within the active time of the unicast DRX, but is within active time of a multicast DRX, for a cell or a cell set other than a cell associated with a multicast (for example, a cell associated with a multicast in which the symbol n is within the active time of the multicast DRX), the terminal device skips sending the semi-persistent CSI configured on the PUSCH; and/or the terminal device skips sending the CSI on the PUCCH.

For example, if the symbol n is not within active time of a DRX group, but is within active time of a multicast DRX associated with the DRX group, for a cell or a cell set other than a cell associated with a multicast (for example, a cell associated with a multicast in which the symbol n is within the active time of the multicast DRX) in the DRX group, or in the cell or the cell set other than the cell associated with the multicast (for example, the cell associated with the multicast in which the symbol n is within the active time of the multicast DRX) in the DRX group, the terminal device skips sending the semi-persistent CSI configured on the PUSCH; and/or the terminal device skips sending the CSI on the PUCCH.

Optionally, the third cell set is not associated with a fifth multicast service set.

The fifth multicast service set includes at least one multicast service, and the at least one multicast service includes a ninth multicast service.

No multicast DRX is configured for the ninth multicast service.

For example, the fifth multicast service set may include: the multicast/the multicast service received by the terminal device, or the multicast/the multicast service joined by the terminal device.

For example, the fifth multicast service set may include: a multicast/a multicast service that is received by the terminal device and for which no multicast DRX is configured, a multicast/a multicast service that is joined by the terminal device and for which no multicast DRX is configured, or a multicast/a multicast service for which no multicast DRX is configured.

For example, the fifth multicast service set may include: any one or more/all multicasts/multicast services that are received by the terminal device and for which no multicast DRX is configured, or any one or more/all multicasts/multicast services that are joined by the terminal device and for which no multicast DRX is configured.

For example, a twelfth cell set is associated with the fifth multicast service set.

The twelfth cell set includes at least one cell.

For example, that the third cell set is not associated with a fifth multicast service set may be understood as: The third cell set is not associated with the twelfth cell set.

For example, the third cell set may be understood as/include: a cell/a cell set other than a cell/a cell set associated with the fifth multicast service set, or a cell/a cell set other than the twelfth cell set.

It should be noted that the condition 2 may be replaced with: The first time does not belong to the active time of the first DRX. That is, that the first time belongs to the active time of the third DRX set is unnecessary. For example, when there is a fifth multicast service set/a twelfth cell set, the condition 2 may be: The first time does not belong to the active time of the first DRX. In this way, for/in a cell corresponding to a multicast for which no DRX is configured, the UE can report the CSI.

For example, the terminal device includes/has three cells: a cell 1, a cell 2, and a cell 3. The terminal device receives a multicast 1 in the cell 1, and the terminal device receives a multicast 2 in the cell 2. A multicast DRX is configured for the multicast 1, and no multicast DRX is configured for the multicast 2. If the first time is within neither the active time of the unicast DRX nor active time of the multicast DRX corresponding to the multicast 1, for the cell 3 and the cell 1, the terminal device skips sending the first CSI at the first time. The first DRX is the unicast DRX, the third DRX set is the multicast DRX corresponding to the multicast 1, the third cell set is the cell 3 and the cell 1, and the twelfth cell set is the cell 2.

For example, the terminal device includes/has three cells: a cell 1, a cell 2, and a cell 3. The terminal device receives a multicast 1 in the cell 1, and the terminal device receives a multicast 2 in the cell 2. A multicast DRX is configured for the multicast 1, and no multicast DRX is configured for the multicast 2. If the first time is not within the active time of the unicast DRX, but is within active time of the multicast DRX corresponding to the multicast 1, for the cell 3, the terminal device skips sending the first CSI at the first time. The first DRX is the unicast DRX, the third DRX set is the multicast DRX corresponding to the multicast 1, the third cell set is the cell 3, the sixth cell set is the cell 1, and the twelfth cell set is the cell 2.

For example, if the symbol n is not within the active time of the unicast DRX, for a cell or a cell set other than a cell associated with a multicast for which no multicast DRX is configured, the terminal device skips sending the semi-persistent CSI configured on the PUSCH; and/or the terminal device skips sending the CSI on the PUCCH.

For example, if the symbol n is not within the active time of the unicast DRX, but is within active time of a multicast DRX joined by the terminal device, for a cell or a cell set other than both the cell associated with the multicast (for example, the cell associated with the multicast in which the symbol n is within the active time of the multicast DRX) and a cell associated with a multicast for which no multicast DRX is configured, the terminal device skips sending the semi-persistent CSI configured on the PUSCH; and/or the terminal device skips sending the CSI on the PUCCH.

Optionally, the fifth multicast service set/the twelfth cell set is associated with the first DRX/the first cell set.

For example, the fifth multicast service set may include: a multicast/a multicast service that is received by the terminal device and associated with the first cell set/the first DRX and for which no multicast DRX is configured, a multicast/a multicast service that is joined by the terminal device and associated with the first cell set/the first DRX and for which no multicast DRX is configured, or a multicast/a multicast service that is associated with the first cell set/the first DRX and for which no multicast DRX is configured.

For example, the fifth multicast service set may include: any one or more/all multicasts/multicast services that are received by the terminal device and associated with the first cell set/the first DRX and for which no multicast DRX is configured, any one or more/all multicasts/multicast services that are joined by the terminal device and associated with the first cell set/the first DRX and for which no multicast DRX is configured, or any one or more/all multicasts/multicast services that are associated with the first cell set/the first DRX and for which no multicast DRX is configured.

For example, that the fifth multicast service set/the twelfth cell set is associated with the first DRX/the first cell set may be understood as: Cells included in the twelfth cell set use a same DRX parameter (for example, the parameter related to the first DRX), and receiving of control information of the cells included in the twelfth cell set is controlled by a same DRX (for example, the first DRX).

Optionally, the first cell set includes the twelfth cell set.

For example, the twelfth cell set is a subset of the first cell set, or the twelfth cell set is equal to the first cell set.

Optionally, the first cell set includes the third cell set and the twelfth cell set.

For example, the third cell set and the twelfth cell set are equal to the first cell set.

For example, the third cell set and the twelfth cell set have no intersection set.

For example, if the symbol n is not within the active time of the DRX group, for a cell or a cell set other than a cell associated with a multicast for which no multicast DRX is configured in the DRX group, the terminal device skips sending the semi-persistent CSI configured on the PUSCH; and/or the terminal device skips sending the CSI on the PUCCH.

Optionally, the first cell set includes the third cell set, the sixth cell set, and the twelfth cell set. Alternatively, optionally, the first cell set includes the third cell set and a union set of the sixth cell set and the twelfth cell set.

For example, the third cell set, the sixth cell set, and the twelfth cell set are equal to the first cell set.

For example, the third cell set and the twelfth cell set have no intersection set.

For example, the third cell set and the union set of the sixth cell set and the twelfth cell set have no intersection set.

It should be noted that the sixth cell set and the twelfth cell set may have an intersection set, or may have no intersection set. This is not limited in this application.

It should be noted that the sixth cell set and the twelfth cell set may be the same, or may be different. This is not limited in this application.

For example, if the symbol n is not within the active time of the DRX group, but is within active time of a multicast DRX joined by the terminal device and associated with the DRX group, for a cell or a cell set other than both the cell associated with the multicast (for example, the cell associated with the multicast in which the symbol n is within the active time of the multicast DRX) and a cell associated with a multicast for which no multicast DRX is configured in the DRX group, the terminal device skips sending the semi-persistent CSI configured on the PUSCH; and/or the terminal device skips sending the CSI on the PUCCH. For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and the terminal device receives a multicast 2 in the cell 2. A multicast DRX is configured for the multicast 1, and no multicast DRX is configured for the multicast 2. If the first time is within neither active time of the first DRX group nor active time of the multicast DRX corresponding to the multicast 1, for cells (namely, the cell 3 and the cell 1) other than the cell 2 in the first cell set, the terminal device skips sending the first CSI at the first time. The first DRX is the first DRX group, the third DRX set is the multicast DRX corresponding to the multicast 1, the first cell set is the cell 1, the cell 2, and the cell 3, the third cell set is the cell 3 and the cell 1, and the twelfth cell set is the cell 2.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and the terminal device receives a multicast 2 in the cell 2. A multicast DRX is configured for the multicast 1, and no multicast DRX is configured for the multicast 2. If the first time is not within active time of the first DRX group, but is within active time of the multicast DRX corresponding to the multicast 1, for a cell (namely, the cell 3) other than both the cell 1 and the cell 2 in the first cell set, the terminal device skips sending the first CSI at the first time. The first DRX is the first DRX group, the third DRX set is the multicast DRX corresponding to the multicast 1, the first cell set is the cell 1, the cell 2, and the cell 3, the third cell set is the cell 3, the sixth cell set is the cell 1, and the twelfth cell set is the cell 2.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 and a multicast 2 in the cell 1, and the terminal device receives a multicast 4 in the cell 4. A multicast DRX is configured for the multicast 1, and no multicast DRX is configured for the multicast 2. If the first time is not within active time of the first DRX group, but is within active time of the multicast DRX corresponding to the multicast 1, for cells (namely, the cell 2 and the cell 3) other than the cell 1 in the first cell set, the terminal device skips sending the first CSI at the first time. The first DRX is the first DRX group, the third DRX set is the multicast DRX corresponding to the multicast 1, the first cell set is the cell 1, the cell 2, and the cell 3, the third cell set is the cell 2 and the cell 3, the sixth cell set is the cell 1, and the twelfth cell set is the cell 1.

For example, for a cell set or a cell (for example, the sixth cell set and/or the twelfth cell set) other than the third cell set, the terminal device may send the first CSI or the CSI at the first time. For example, in the cell or the cell set associated with the fifth multicast service set, the terminal device may send the first CSI at the first time. Alternatively, in a cell or a cell set associated with the ninth multicast service, the terminal device may send the first CSI at the first time.

In this embodiment of this application, when no multicast DRX is configured in the multicast joined by the terminal device, the terminal device may also report the CSI, so that a base station can obtain the CSI, and this helps the base station perform multicast scheduling.

Optionally, the preset condition includes the condition 2, and the preset condition may further include a condition 5.

Optionally, the preset condition includes the condition 2, and the method 400 in this application may further include that a condition 5 is satisfied.

For example, if the condition 2 and the condition 5 are satisfied, the terminal device skips sending the first CSI or the fourth CSI at the first time.

For example, if the condition 2 and the condition 5 are satisfied, for the third cell set, the terminal device skips sending the first CSI or the fourth CSI at the first time.

For example, if no DCP is configured for the terminal device, the symbol n is not within duration of an on-duration timer corresponding to a unicast, or an on-duration timer corresponding to a unicast is started or restarted; and the symbol n is not within the active time of the unicast DRX, but is within the active time of the multicast DRX, for a cell or a cell set other than both/either the cell associated with the multicast (for example, the cell associated with the multicast in which the symbol n is within the active time of the multicast DRX) and/or the cell associated with the multicast for which no multicast DRX is configured, the terminal device skips sending the semi-persistent CSI configured on the PUSCH; and/or the terminal device skips sending the CSI on the PUCCH.

For example, if no DCP is configured for the terminal device, the symbol n is not within duration of an on-duration timer corresponding to a unicast, or an on-duration timer corresponding to a unicast is started or restarted; and the symbol n is not within the active time of the DRX group, but is within the active time of the multicast DRX associated with the DRX group, for a cell or a cell set other than both/either the cell associated with the multicast (for example, the cell associated with the multicast in which the symbol n is within the active time of the multicast DRX) and/or the cell associated with the multicast for which no multicast DRX is configured in the DRX group, or in a cell or a cell set other than both/either the cell associated with the multicast (for example, the cell associated with the multicast in which the symbol n is within the active time of the multicast DRX) and/or the cell associated with the multicast for which no multicast DRX is configured in the DRX group, the terminal device skips sending the semi-persistent CSI configured on the PUSCH; and/or the terminal device skips sending the CSI on the PUCCH. Optionally, the preset condition includes the condition 2, and the first CSI may be/include/be replaced with fifth CSI.

The fifth CSI may include any one or more of the following:
the semi-persistent CSI;
the CSI configured on the PUSCH;
the semi-persistent CSI configured on the PUCCH;
the CSI that is the layer 1 reference signal received power L1-RSRP;
the CSI that is not the L1-RSRP;
the periodic CSI that is the L1-RSRP;
the periodic CSI that is not the L1-RSRP;
the CSI that is configured on the PUCCH and that is the L1-RSRP;
the CSI that is configured on the PUCCH and that is not the L 1-RSRP;
the periodic CSI that is configured on the PUCCH and that is the L1-RSRP; or
the periodic CSI that is configured on the PUCCH and that is not the L1-RSRP.

Optionally, the preset condition includes the condition 2, and "a terminal device skips sending first CSI at first time" may be/include/be replaced with: The terminal device skips sending the fifth CSI at the first time.

Optionally, that the terminal device skips sending the fifth CSI at the first time may include any one or more of the following:

The terminal device skips sending the semi-persistent CSI;
the terminal device skips sending the CSI configured on the PUSCH;
the terminal device skips sending the semi-persistent CSI configured on the PUCCH;
the terminal device skips sending the CSI that is the L1-RSRP;
the terminal device skips sending the CSI that is not the L1-RSRP;
the terminal device skips sending the periodic CSI that is the L1-RSRP;
the terminal device skips sending the periodic CSI that is not the L1-RSRP;
the terminal device skips sending the CSI that is configured on the PUCCH and that is the L1-RSRP;
the terminal device skips sending the CSI that is configured on the PUCCH and that is not the L1-RSRP;
the terminal device skips sending the periodic CSI that is configured on the PUCCH and that is the L1-RSRP;
the terminal device skips sending the periodic CSI that is configured on the PUCCH and that is not the L1-RSRP;
the terminal device skips sending, on the PUCCH, the CSI that is the L1-RSRP;
the terminal device skips sending, on the PUCCH, the CSI that is not the L1-RSRP;
the terminal device skips sending, on the PUCCH, the periodic CSI that is the L1-RSRP; or
the terminal device skips sending, on the PUCCH, the periodic CSI that is not the L1-RSRP.

Optionally, the preset condition includes the condition 2, and the preset condition may further include a condition 6.

Optionally, the preset condition includes the condition 2, and the method in this application may further include that a condition 6 is satisfied.

For example, if the condition 2 and the condition 6 are satisfied, the terminal device skips sending the first CSI or the fifth CSI at the first time.

For example, if the condition 2 and the condition 6 are satisfied, for the third cell set, the terminal device skips sending the first CSI or the fifth CSI at the first time.

For example, if DCP is configured for the terminal device, the symbol n is within duration of an on-duration timer corresponding to a unicast, an on-duration timer corresponding to a unicast is not started or not restarted, and the symbol n is not within the active time of the unicast DRX, but is within the active time of the multicast DRX, for a cell or a cell set other than both/either the cell associated with the multicast (for example, the cell associated with the multicast in which the symbol n is within the active time of the multicast DRX) and/or the cell associated with the multicast for which no multicast DRX is configured, the terminal device skips sending the semi-persistent CSI configured on the PUSCH; and/or the terminal device skips sending the CSI/the periodic CSI on the PUCCH.

For example, if DCP is configured for the terminal device, the symbol n is within duration of an on-duration timer corresponding to a unicast, an on-duration timer corresponding to a unicast is not started or not restarted, and the symbol n is not within the active time of the DRX group, but is within the active time of the multicast DRX, for a cell or a cell set other than both/either the cell associated with the multicast (for example, the cell associated with the multicast in which the symbol n is within the active time of the multicast DRX) and/or the cell associated with the multicast for which no multicast DRX is configured in the DRX group, or in a cell or a cell set other than both/either the cell associated with the multicast (for example, the cell associated with the multicast in which the symbol n is within the active time of the multicast DRX) and/or the cell associated with the multicast for which no multicast DRX is configured in the DRX group, the terminal device skips sending the semi-persistent CSI configured on the PUSCH; and/or the terminal device skips sending the CSI/the periodic CSI on the PUCCH. Optionally, the preset condition includes the condition 2, and the preset condition may further include a condition 7.

Optionally, the preset condition includes the condition 2, and the method in this application may further include that a condition 7 is satisfied.

For example, if the condition 2 and the condition 7 are satisfied, the terminal device skips sending the first CSI or the fifth CSI at the first time.

For example, if the condition 2 and the condition 7 are satisfied, for the third cell set, the terminal device skips sending the first CSI or the fifth CSI at the first time.

For example, if the condition 2, the condition 6, and the condition 7 are satisfied, the terminal device skips sending the first CSI or the fifth CSI at the first time.

For example, if the condition 2, the condition 6, and the condition 7 are satisfied, for the third cell set, the terminal device skips sending the first CSI or the fifth CSI at the first time.

For example, if the DCP is configured for the terminal device, the symbol n is within the duration of the on-duration timer corresponding to the unicast, the on-duration timer corresponding to the unicast is not started or not restarted, and the symbol n is not within the active time of the unicast DRX, but is within the active time of the multicast DRX, for the cell or the cell set other than both/either the cell associated with the multicast (for example, the cell associated with the multicast in which the symbol n is within the active time of the multicast DRX) and/or the cell associated with the multicast for which no multicast DRX is configured, the terminal device performs any one or more of the following:

The terminal device skips sending the semi-persistent CSI configured on the PUSCH;
if the terminal device is not configured to need to report the periodic CSI that is the L1-RSRP or the CSI that is the L1-RSRP, the terminal device skips sending, on the PUCCH, the periodic CSI that is the L1-RSRP; or
if the terminal device is not configured to need to report the periodic CSI that is not the L1-RSRP or the CSI that is not the L1-RSRP, the terminal device skips sending, on the PUCCH, the periodic CSI that is not the L1-RSRP.

For example, if the DCP is configured for the terminal device, the symbol n is within the duration of the on-duration timer corresponding to the unicast, the on-duration timer corresponding to the unicast is not started or not restarted, and the symbol n is within neither the active time of the DRX group nor the active time of the multicast DRX, for the cell or the cell set other than both/either the cell associated with the multicast (for example, the cell associated with the multicast in which the symbol n is within the active time of the multicast DRX) and/or the cell associated with the multicast for which no multicast DRX is configured in the DRX group, or in the cell or the cell set other than both/either the cell associated with the multicast (for example, the cell associated with the multicast in which the symbol n is within the active time of the multicast DRX) and/or the cell associated with the multicast for which no multicast DRX is configured in the DRX group, the terminal device performs any one or more of the following:

The terminal device skips sending the semi-persistent CSI configured on the PUSCH;
if the terminal device is not configured to need to report the periodic CSI that is the L1-RSRP or the CSI that is the L1-RSRP, the terminal device skips sending, on the PUCCH, the periodic CSI that is the L1-RSRP; or
if the terminal device is not configured to need to report the periodic CSI that is not the L1-RSRP or the CSI that is not the L1-RSRP, the terminal device skips sending, on the PUCCH, the periodic CSI that is not the L1-RSRP.

Condition 3: Neither a first timer nor a second timer set is run at the first time.

During running of the first timer, the terminal device monitors control information specific to the terminal device.

It should be noted that, during running of the first timer, the terminal device may alternatively monitor control information that is not specific to the terminal device. This is not limited in this application.

For example, during the running of the first timer, the terminal device may monitor control information scrambled by using any one or more of the following RNTIs: a C-RNTI, a CI-RNTI, a CS-RNTI, an INT-RNTI, an SFI-RNTI, an SP-CSI-RNTI, a TPC-PUCCH-RNTI, a TPC-PUSCH-RNTI, a TPC-SRS-RNTI, an AI-RNTI, an SL-RNTI, an SLCS-RNTI, or an SL Semi-Persistent Scheduling V-RNTI.

For example, the first timer may be associated with a first DRX.

For example, the first timer may be associated with a unicast.

For example, the first timer may be an on-duration timer (for example, drx-onDurationTimer), an on-duration timer (for example, drx-onDurationTimer) related to a unicast DRX, or an on-duration timer (for example, drx-onDurationTimer) related to a DRX group.

For example, the on-duration timer indicates duration for which the terminal device waits, after being woken up, to receive the control information (for example, DCI).

The second timer set includes at least one multicast timer, the at least one multicast timer includes a third multicast timer, and during running of the third multicast timer, the terminal device monitors control information related to a third multicast service.

For example, the multicast timer may be an on-duration timer (for example, drx-onDurationTimerPTM) corresponding to a multicast, or an on-duration timer (for example, drx-onDurationTimerPTM) related to a multicast DRX.

For example, the second timer set may include: a multicast timer corresponding to a multicast/a multicast service received by the terminal device, or a multicast timer corresponding to a multicast/a multicast service joined by the terminal device.

For example, the second timer set may include: a multicast timer/multicast timers corresponding to any multicast/multicast service/all multicasts/multicast services received by the terminal device, or a multicast timer/multicast timers corresponding to any multicast/multicast service/all multicasts/multicast services joined by the terminal device.

For example, the second timer set is associated with a third multicast service set, and the third multicast service set may include the third multicast service.

For example, the third multicast service set may include: the multicast/the multicast service received by the terminal device, or the multicast/the multicast service joined by the terminal device.

For example, the third multicast service set may include: the any multicast/multicast service/all the multicasts/multicast services received by the terminal device, or the any multicast/multicast service/all the multicasts/multicast services joined by the terminal device.

For example, the third multicast service may be understood as: a multicast service associated with a third G-RNTI and/or a third G-CS-RNTI, or a multicast associated with the third G-RNTI and/or the third G-CS-RNTI.

For example, the control information related to the third multicast service may include/be understood as: control information associated with (or scrambled by using) the third G-RNTI and/or the third G-CS-RNTI, and/or control information scrambled by using a unicast RNTI (for example, the C-RNTI and/or the CS-RNTI).

It should be noted that, during the running of the third multicast timer, the terminal device may alternatively monitor other control information. This is not limited in this application.

For example, the third multicast timer may be a timer related to the third multicast service, drx-onDurationTimerPTM related to the third multicast service, a timer related to the third G-RNTI and/or the third G-CS-RNTI, or drx-onDurationTimerPTM related to the third G-RNTI and/or the third G-CS-RNTI.

Optionally, the preset condition includes the condition 3, and "a terminal device skips sending first CSI at first time" may include: For a first cell set, the terminal device skips sending the first CSI at the first time.

The first cell set includes at least one cell, and the first cell set is associated with the first DRX or the first timer.

For example, the first timer is the on-duration timer (for example, drx-onDurationTimer) corresponding to the DRX group (for example, a first DRX group).

It should be understood that, for related descriptions of "for a first cell set, the terminal device skips sending the first CSI at the first time", refer to the foregoing related descriptions. For brevity, details are not described again.

Optionally, the first cell set includes a fourth cell set.

For example, the fourth cell set is a subset of the first cell set, or the fourth cell set is equal to the first cell set.

The fourth cell set is associated with the second timer set, and the fourth cell set includes at least one cell.

It may be understood that the second timer set is associated with the first timer.

For example, the second timer set may include: a multicast timer corresponding to a multicast/a multicast service received by the terminal device and associated with the first cell set/the first timer/the first DRX, a multicast timer corresponding to a multicast/a multicast service joined by the terminal device and associated with the first cell set/the first timer/the first DRX, or a multicast timer corresponding to a multicast/a multicast service associated with the first cell set/the first timer/the first DRX.

For example, the second timer set may include: a multicast timer/multicast timers corresponding to any multicast/multicast service/all multicasts/multicast services received by the terminal device and associated with the first cell set/the first timer/the first DRX, a multicast timer/multicast timers corresponding to any multicast/multicast service/all multicasts/multicast services joined by the terminal device and associated with the first cell set/the first timer/the first DRX, or a multicast timer/multicast timers corresponding to any multicast/multicast service/all multicasts/multicast services associated with the first cell set/the first timer/the first DRX.

For example, the third multicast service set may include: the multicast/the multicast service received by the terminal device and associated with the first cell set/the first timer/the first DRX, the multicast/the multicast service joined by the terminal device and associated with the first cell set/the first timer/the first DRX, or the multicast/the multicast service associated with the first cell set/the first timer/the first DRX.

For example, the third multicast service set may include: the any multicast/multicast service/all the multicasts/multicast services received by the terminal device and associated with the first cell set/the first timer/the first DRX, the any multicast/multicast service/all the multicasts/multicast services joined by the terminal device and associated with the first cell set/the first timer/the first DRX, or the any multicast/multicast service/all the multicasts/multicast services associated with the first cell set/the first timer/the first DRX.

For example, the second timer set is a multicast timer set associated with the first timer or the first DRX, or a multicast timer set corresponding to a multicast service set associated with the first cell set.

For example, the terminal device includes/has two DRX groups, the first DRX group corresponds to three cells: a cell 1, a cell 2, and a cell 3, and a second DRX group corresponds to three cells: a cell 4, a cell 5, and a cell 6. The terminal device receives a multicast 1 in the cell 1. If neither a timer of the first DRX group nor a timer of a multicast DRX corresponding to the multicast 1 is run at first time, for the first DRX group/the first cell set, the terminal device skips sending first CSI at the first time. The first timer is the timer of the first DRX group, the second timer set is the timer of the multicast DRX corresponding to the multicast 1, the first cell set is the cell 1, the cell 2, and the cell 3, and the fourth cell set is the cell 1.

For example, the terminal device includes/has two DRX groups, the first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and the terminal device receives a multicast 2 in the cell 2. If neither a timer of the first DRX group nor a timer of a multicast DRX corresponding to the multicast 1 and a timer of a multicast DRX corresponding to the multicast 2 are run at the first time, for the first DRX group/the first cell set, the terminal device skips sending the first CSI at the first time. The first timer is the timer of the first DRX group, the second timer set is the timer of the multicast DRX corresponding to the multicast 1 and the timer of the multicast DRX corresponding to the multicast 2, the first cell set is the cell 1, the cell 2, and the cell 3, and the fourth cell set is the cell 1 and the cell 2.

For example, the terminal device includes/has two DRX groups, the first DRX group corresponds to three cells: a cell 1, a cell 2, and a cell 3, and a second DRX group corresponds to three cells: a cell 4, a cell 5, and a cell 6. The terminal device receives a multicast 1 in the cell 1, the terminal device receives a multicast 2 in the cell 2, and the terminal device receives a multicast 4 in the cell 4. If neither a timer of the first DRX group nor a timer of a multicast DRX corresponding to the multicast 1 and a timer of a multicast DRX corresponding to the multicast 2 are run at the first time, for the first DRX group/the first cell set, the terminal device skips sending the first CSI at the first time. The first timer is the timer of the first DRX group, the second timer set is the timer of the multicast DRX corresponding to the multicast 1 and the timer of the multicast DRX corresponding to the multicast 2, the first cell set is the cell 1, the cell 2, and the cell 3, and the fourth cell set is the cell 1 and the cell 2.

In some embodiments, whether the first timer is run at the first time may be determined by the terminal device.

Optionally, that the first timer is not run may include: The terminal device determines that the first timer is not run.

Optionally, that the terminal device determines that the first timer is not run may include:
(1) The terminal device determines, based on or by considering any one or more of a grant, assignment, a DRX command MAC CE, or a long DRX command MAC CE that is received at seventh time and/or before the seventh time, and/or based on or by considering a scheduling request sent at the seventh time and/or before the seventh time, that the first timer is not run; and/or
(2) the terminal device determines, based on or by considering the any one or more of the grant, the assignment, the DRX command MAC CE, or the long DRX command MAC CE that is received at the seventh time and/or before the seventh time, and/or based on or by considering the scheduling request sent at the seventh time and/or before the seventh time, that the first timer is not run, where the received grant and assignment may be a grant and assignment that are received in the first cell set.

Optionally, the grant includes a unicast-related grant.

Optionally, the assignment includes unicast-related assignment.

Optionally, the DRX command MAC CE includes a unicast-related DRX command MAC CE.

Optionally, the long DRX command MAC CE includes a unicast-related long DRX command MAC CE.

Optionally, the scheduling request includes a unicast-related scheduling request.

The seventh time is determined based on the first time and sixth duration.

For example, an interval between the seventh time and the first time is the sixth duration, and the seventh time is before the first time.

It should be understood that the sixth duration may be a parameter configured by a network device, may be calculated based on a formula or an algorithm, or may be specified in a protocol. This is not limited in this embodiment of this application. For example, the sixth duration is 4 ms.

In some embodiments, whether the second timer set is run at the first time may be determined by the terminal device.

Optionally, that the second timer set is not run includes: The terminal device determines that the second timer set is not run.

Optionally, that the terminal device determines that the second timer set is not run may include:
(1) The terminal device determines, based on or by considering any one or more of assignment (for example, received multicast-related assignment), a multicast-related DRX command MAC CE, or a multicast-related long DRX command MAC CE that is received at eighth time and/or before the eighth time, that the second timer set is not run; and/or
(2) the terminal device determines, based on or by considering the any one or more of the assignment (for example, the received multicast-related assignment), the multicast-related DRX command MAC CE, or the multicast-related long DRX command MAC CE that is received at the eighth time and/or before the eighth time, that the second timer set is not run, where the received assignment (for example, the received multicast-related assignment) may be assignment received in the fourth cell set or the first cell set, and/or received assignment related to the third multicast service set; optionally, the multicast-related DRX command MAC CE may be a multicast-related DRX command MAC CE received in the fourth cell set, and/or a DRX command MAC CE related to the third multicast service set; and optionally, the multicast-related long DRX command MAC CE may be a multicast-related long DRX command MAC CE received in the fourth cell set, and/or a long DRX command MAC CE related to the third multicast service set.

The eighth time is determined based on the first time and seventh duration.

For example, an interval between the eighth time and the first time is the seventh duration, and the eighth time is before the first time.

It should be understood that the seventh duration may be a parameter configured by the network device, may be calculated based on a formula or an algorithm, or may be specified in a protocol. This is not limited in this embodiment of this application. For example, the seventh duration is 4 ms.

In another embodiment, that the terminal device determines, at the first time, that neither the first timer nor the second timer set is run includes:
(1) The terminal device determines, based on or by considering any one or more of a grant, assignment, a DRX command MAC CE, a long DRX command MAC CE, a multicast-related DRX command MAC CE, or a multicast-related long DRX command MAC CE that is received at ninth time and/or before the ninth time, and/or based on or by considering a scheduling request sent at the ninth time and/or before the ninth time, that neither the first timer nor the second timer set is run; and/or
(2) the terminal device determines, based on or by considering the any one or more of the grant, the assignment, the DRX command MAC CE, the long DRX command MAC CE, the multicast-related DRX command MAC CE, or the multicast-related long DRX command MAC CE that is received at the ninth time and/or before the ninth time, and/or based on or by considering the scheduling request sent at the ninth time and/or before the ninth time, that neither the first timer nor the second timer set is run, where the received grant and assignment may be a grant and assignment received in the first cell set or the fourth cell set.

Optionally, the grant includes a unicast-related grant.

Optionally, the assignment includes unicast-related assignment and/or multicast-related assignment.

Optionally, the DRX command MAC CE includes a unicast-related DRX command MAC CE.

Optionally, the long DRX command MAC CE includes a unicast-related long DRX command MAC CE.

Optionally, the scheduling request includes a unicast-related scheduling request.

The ninth time is determined based on the first time and eighth duration.

For example, an interval between the ninth time and the first time is the eighth duration, and the ninth time is before the first time.

It should be understood that the eighth duration may be a parameter configured by the network device, may be calculated based on a formula or an algorithm, or may be specified in a protocol. This is not limited in this embodiment of this application. For example, the eighth duration is 4 ms.

Optionally, the preset condition includes the condition 3, and the first CSI may be/include/be replaced with sixth CSI.

The sixth CSI may include any one or more of the following:
the semi-persistent CSI;
the periodic CSI;
the CSI configured on the physical uplink shared channel PUSCH;
the semi-persistent CSI configured on the PUSCH;
the CSI configured on the physical uplink control channel PUCCH;
the periodic CSI configured on the PUCCH; or
the semi-persistent CSI configured on the PUCCH.

Optionally, the preset condition includes the condition 3, and "a terminal device skips sending first CSI at first time" may be/include/be replaced with: The terminal device skips sending the sixth CSI at the first time.

Optionally, that the terminal device skips sending the sixth CSI at the first time may include any one or more of the following:
The terminal device skips sending the semi-persistent CSI;
the terminal device skips sending the periodic CSI;
the terminal device skips sending the CSI configured on the PUSCH;
the terminal device skips sending the semi-persistent CSI configured on the PUSCH;
the terminal device skips sending the CSI configured on the PUCCH;
the terminal device skips sending the periodic CSI configured on the PUCCH;
the terminal device skips sending the semi-persistent CSI configured on the PUCCH;
the terminal device skips sending the CSI on the PUCCH;
the terminal device skips sending the periodic CSI on the PUCCH;
the terminal device skips sending the semi-persistent CSI on the PUCCH;
the terminal device skips sending the CSI on the PUSCH; or
the terminal device skips sending the semi-persistent CSI on the PUSCH.

For example, if the condition 3 is satisfied, the terminal device skips sending the first CSI or the sixth CSI at the first time.

For example, if the condition 3 is satisfied, for the first cell set, the terminal device skips sending the first CSI or the sixth CSI at the first time.

For example, if neither an on-duration timer corresponding to the unicast nor the on-duration timer corresponding to the multicast is run in the symbol n, the terminal device skips sending the CSI on the PUCCH.

For example, if neither an on-duration timer corresponding to a DRX group nor an on-duration timer corresponding to a multicast associated with the DRX group is run in the symbol n, for the DRX group or in the DRX group, the terminal device skips sending the CSI on the PUCCH.

Optionally, the preset condition includes the condition 3, and the preset condition may further include a condition 5.

Optionally, the preset condition includes the condition 3, and the method 400 in this application may further include that a condition 5 is satisfied.

For example, if the condition 3 and the condition 5 are satisfied, the terminal device skips sending the first CSI or the sixth CSI at the first time.

For example, if the condition 3 and the condition 5 are satisfied, for the first cell set, the terminal device skips sending the first CSI or the sixth CSI at the first time.

For example, if no DCP is configured for the terminal device, the symbol n is not within duration of the on-duration timer corresponding to the unicast, or the on-duration timer corresponding to the unicast is started or restarted; and neither the on-duration timer corresponding to the unicast nor the on-duration timer corresponding to the multicast is run in the symbol n, the terminal device skips sending the CSI on the PUCCH.

For example, if no DCP is configured for the terminal device, the symbol n is not within duration of the on-duration timer corresponding to the unicast, or the on-duration timer corresponding to the unicast is started or restarted; and neither the on-duration timer corresponding to the DRX group nor the on-duration timer corresponding to the multicast associated with the DRX group is run in the symbol n, for the DRX group or in the DRX group, the terminal device skips sending the CSI on the PUCCH.

Optionally, the preset condition includes the condition 3, and the preset condition may further include a condition 8.

Optionally, the preset condition includes the condition 3, and the method 400 in this application may further include that a condition 8 is satisfied.

The condition 8 may include: The terminal device obtains first information.

The first information may indicate any one or more of the following: The terminal device is to send the CSI during running of a unicast timer (for example, the first timer) and/or during running of the multicast timer; the terminal device is to be limited to sending the CSI during running of a unicast timer (for example, the first timer) and/or during running of the multicast timer; or the terminal device is to send the CSI only during running of a unicast timer (for example, the first timer) and/or during running of the multicast timer.

For example, the unicast timer may include/be the on-duration timer (for example, drx-onDurationTimer) corresponding to the unicast, and/or the on-duration timer (for example, drx-onDurationTimer) corresponding to the DRX group.

"Send the CSI during running of a unicast timer (for example, the first timer) and/or during running of the multicast timer" may include/be understood as any one or more of the following: sending the CSI on the PUCCH during the running of the unicast timer (for example, the first timer) and/or during the running of the multicast timer.

For example, the first information may be sent by the network device. For example, the network device may send the first information to the terminal device by using an RRC message.

For example, the first information may be CSI-mask information (which is also referred to as CSI masking information or CSI-masking information). The CSI-mask information may indicate the terminal device to send the CSI during running of drx-onDurationTimer and/or during running of drx-onDurationTimerPTM.

Accordingly, if the terminal device obtains the first information, within active time other than both/either a running period of the unicast timer and/or a running period of the multicast timer or at time other than both/either a running period of the unicast timer and/or a running period of the multicast timer, the terminal device skips sending the CSI, or the terminal device skips sending the CSI on the PUCCH.

It should be noted that "the terminal device obtains first information" may include/be replaced with: A CSI-mask is configured for the terminal device.

It should be noted that "the terminal device does not obtain the first information" may include/be replaced with: No CSI-mask is configured for the terminal device.

For example, if the condition 3 and the condition 8 are satisfied, the terminal device skips sending the first CSI or the sixth CSI at the first time.

For example, if the condition 3 and the condition 8 are satisfied, for the first cell set, the terminal device skips sending the first CSI or the sixth CSI at the first time.

For example, if CSI masking is configured for the terminal device, and neither the on-duration timer corresponding to the unicast nor the on-duration timer corresponding to the multicast is run in the symbol n, the terminal device skips sending the CSI on the PUCCH.

For example, if CSI masking is configured for the terminal device, and neither the on-duration timer corresponding to the DRX group nor the on-duration timer corresponding to the multicast associated with the DRX group is run in the symbol n, for the DRX group or in the DRX group, the terminal device skips sending the CSI on the PUCCH.

For example, if the condition 3, the condition 5, and the condition 8 are satisfied, the terminal device skips sending the first CSI or the sixth CSI at the first time.

For example, if the condition 3, the condition 5, and the condition 8 are satisfied, for the first cell set, the terminal device skips sending the first CSI or the sixth CSI at the first time.

For example, if no DCP is configured for the terminal device, the symbol n is not within the duration of the on-duration timer corresponding to the unicast, or the on-duration timer corresponding to the unicast is started or restarted; the CSI masking is configured for the terminal device; and neither the on-duration timer corresponding to the unicast nor the on-duration timer corresponding to the multicast is run in the symbol n, the terminal device skips sending the CSI on the PUCCH.

For example, if no DCP is configured for the terminal device, the symbol n is not within the duration of the on-duration timer corresponding to the unicast, or the on-duration timer corresponding to the unicast is started or restarted; the CSI masking is configured for the terminal device; and neither the on-duration timer corresponding to the DRX group nor the on-duration timer corresponding to the multicast associated with the DRX group is run in the symbol n, for the DRX group or in the DRX group, the terminal device skips sending the CSI on the PUCCH.

Condition 4: A first timer is not run but a third timer set is run at the first time.

The third timer set may include at least one multicast timer, the at least one multicast timer includes a fourth multicast timer, and during running of the fourth multicast timer, the terminal device may monitor control information related to a fourth multicast service.

For example, the third timer set may include: a multicast timer corresponding to a multicast/a multicast service received by the terminal device, or a multicast timer corresponding to a multicast/a multicast service joined by the terminal device.

For example, the third timer set is associated with a fourth multicast service set, and the fourth multicast service set may include the fourth multicast service.

For example, the fourth multicast service set may include: the multicast/the multicast service received by the terminal device, or the multicast/the multicast service joined by the terminal device.

For example, the fourth multicast service may be understood as: a multicast service associated with a fourth G-RNTI and/or a fourth G-CS-RNTI, or a multicast associated with the fourth G-RNTI and/or the fourth G-CS-RNTI.

For example, the control information related to the fourth multicast service may include/be understood as: control information associated with (or scrambled by using) the fourth G-RNTI and/or the fourth G-CS-RNTI, and/or control information scrambled by using a unicast RNTI (for example, a C-RNTI and/or a CS-RNTI).

It should be noted that, during the running of the fourth multicast timer, the terminal device may alternatively monitor other control information. This is not limited in this application.

For example, the fourth multicast timer may be a timer related to the fourth multicast service, drx-onDurationTimerPTM related to the fourth multicast service, a timer related to the fourth G-RNTI and/or the fourth G-CS-RNTI, or drx-onDurationTimerPTM related to the fourth G-RNTI and/or the fourth G-CS-RNTI.

Optionally, the preset condition includes the condition 4, and "the terminal device sends first CSI at first time" may include: For a fifth cell set, the terminal device skips sending the first CSI at the first time.

The fifth cell set includes at least one cell, and the fifth cell set is not associated with the third timer set.

It should be noted that "for a fifth cell set, the terminal device skips sending the first CSI at the first time" may include/be understood as any one of the following: The terminal device skips sending the CSI (for example, the first CSI) in the fifth cell set at the first time; or the terminal device skips sending, at the first time, CSI (for example, the first CSI) specific to the fifth cell set.

It should be noted that, for "the terminal device skips sending the CSI (for example, the first CSI) in the fifth cell set at the first time", whether the terminal device sends, in another cell or cell group, the CSI specific to the fifth cell set is not limited in this application.

It should be noted that, for "the terminal device skips sending, at the first time, CSI (for example, the first CSI) specific to the fifth cell set", whether the terminal device sends, in the fifth cell set, CSI specific to another cell or cell set is not limited in this application.

For example, a seventh cell set is associated with the third timer set or the fourth multicast service set.

The seventh cell set includes at least one cell.

It should be understood that, that the fifth cell set is not associated with the third timer set may be understood as: The fifth cell set is not associated with the fourth multicast service set.

For example, the fifth cell set may be understood as/include: a cell/a cell set other than a cell/a cell set associated with the fourth multicast service set, or a cell/a cell set other than the seventh cell set.

For example, the terminal device includes/has three cells: a cell 1, a cell 2, and a cell 3. The terminal device receives a multicast 1 in the cell 1. If an on-duration timer corresponding to a unicast is not run but an on-duration timer corresponding to the multicast 1 is run at the first time, for the cell 2 and the cell 3, the terminal device skips sending the first CSI at the first time. The first timer is the on-duration timer corresponding to the unicast, the third timer set is the on-duration timer corresponding to the multicast 1, the fifth cell set is the cell 2 and the cell 3, and the seventh cell set is the cell 1.

Optionally, the fifth cell set is associated with the first timer or a first DRX.

For example, that the fifth cell set is associated with the first timer or a first DRX may be understood as: Cells included in the fifth cell set use a same DRX parameter (for example, a parameter related to the first timer or the first DRX), and receiving of control information of the cells included in the fifth cell set is controlled by a same DRX (for example, the first timer or the first DRX).

Optionally, the seventh cell set is associated with the first DRX.

For example, that the seventh cell set is associated with the first DRX may be understood as: Cells included in the seventh cell set use a same DRX parameter (for example, the parameter related to the first DRX), and receiving of control information of the cells included in the seventh cell set is controlled by a same DRX (for example, the first DRX).

Optionally, a first cell set includes the fifth cell set.

For example, the fifth cell set is a subset of the first cell set, or the fifth cell set is equal to the first cell set.

Optionally, a first cell set includes the seventh cell set.

For example, the seventh cell set is a subset of the first cell set, or the seventh cell set is equal to the first cell set.

Optionally, a first cell set includes the fifth cell set and the seventh cell set.

For example, the fifth cell set and the seventh cell set are equal to the first cell set.

For example, the fifth cell set and the seventh cell set have no intersection set.

For example, the third timer set may include: a multicast timer corresponding to a multicast/a multicast service received by the terminal device and associated with the first cell set/the first DRX/the first timer, a multicast timer corresponding to a multicast/a multicast service joined by the terminal device and associated with the first cell set/the first DRX/the first timer, or a multicast timer corresponding to a multicast/a multicast service associated with the first cell set/the first DRX/the first timer.

For example, the fourth multicast service set may include: the multicast/the multicast service received by the terminal device and associated with the first cell set/the first DRX/the first timer, the multicast/the multicast service joined by the terminal device and associated with the first cell set/the first DRX/the first timer, or the multicast/the multicast service associated with the first cell set/the first DRX/the first timer.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1. If an on-duration timer of the first DRX group is not run but an on-duration timer of a multicast DRX corresponding to the multicast 1 is run at the first time, for cells (namely, the cell 2 and the cell 3) other than the cell 1 in the first cell set, the terminal device skips sending the first CSI at the first time. The first timer is the on-duration timer of the first DRX group, the third timer set is the on-duration timer of the multicast DRX corresponding to the multicast 1, the first cell set is the cell 1, the cell 2, and the cell 3, and the fifth cell set is the cell 2 and the cell 3.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and the terminal device receives a multicast 2 in the cell 2. If an on-duration timer of the first DRX group is not run but an on-duration timer of a multicast DRX corresponding to the multicast 1 and an on-duration timer of a multicast DRX corresponding to the multicast 2 are run at the first time, for a cell (namely, the cell 3) other than both the cell 1 and the cell 2 in the first cell set, the terminal device skips sending the first CSI at the first time. The first timer is the on-duration timer of the first DRX group, the third timer set is the on-duration timer of the multicast DRX corresponding to the multicast 1 and the on-duration timer of the multicast DRX corresponding to the multicast 2, the first cell set is the cell 1, the cell 2, and the cell 3, and the fifth cell set is the cell 3.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, the terminal device receives a multicast 2 in the cell 2, and the terminal device receives a multicast 4 in the cell 4. If an on-duration timer of the first DRX group is not run but an on-duration timer of a multicast DRX corresponding to the multicast 1 is run at the first time, for cells (namely, the cell 2 and the cell 3) other than the cell 1 in the first cell set, the terminal device skips sending the first CSI at the first time. The first timer is the on-duration timer of the first DRX group, the third timer set is the on-duration timer of the multicast DRX corresponding to the multicast 1, the first cell set is the cell 1, the cell 2, and the cell 3, and the fifth cell set is the cell 2 and the cell 3.

In some embodiments, that the third timer set is run at the first time may be determined by the terminal device.

Optionally, that the third timer set is run includes: The terminal device determines that the third timer set is run.

Optionally, that the terminal device determines that the third timer set is run may include:
(1) The terminal device determines, based on or by considering any one or more of assignment (for example, received multicast-related assignment), a multicast-related DRX command MAC CE, or a multicast-related long DRX command MAC CE that is received at tenth time and/or before the tenth time, that the third timer set is run; and/or
(2) the terminal device determines, based on or by considering the any one or more of the assignment (for example, the received multicast-related assignment), the multicast-related DRX command MAC CE, or the multicast-related long DRX command MAC CE that is received at the tenth time and/or before the tenth time, that the third timer set is run, where the received assignment (for example, the received multicast-related assignment) may be assignment received in the seventh cell set or the first cell set, and/or received assignment related to the fourth multicast service set; optionally, the multicast-related DRX command MAC CE may be a multicast-related DRX command MAC CE received in the seventh cell set or the first cell set, and/or a DRX command MAC CE related to the fourth multicast service set; and optionally, the multicast-related long DRX command MAC CE may be a multicast-related long DRX command MAC CE received in the seventh cell set or the first cell set, and/or a long DRX command MAC CE related to the fourth multicast service set.

The tenth time is determined based on the first time and ninth duration.

For example, an interval between the tenth time and the first time is the ninth duration, and the tenth time is before the first time.

It should be understood that the ninth duration may be a parameter configured by a network device, may be calculated based on a formula or an algorithm, or may be specified in a protocol. This is not limited in this embodiment of this application. For example, the ninth duration is 4 ms.

Optionally, that a first timer is not run but a third timer set is run at the first time includes: The terminal device determines that the first timer is not run but the third timer set is run.

Optionally, that the terminal device determines that the first timer is not run but the third timer set is run may include:
(1) The terminal device determines, based on or by considering any one or more of a grant, assignment, a DRX command MAC CE, a long DRX command MAC CE, a multicast-related DRX command MAC CE, or a multicast-related long DRX command MAC CE that is received at eleventh time and/or before the eleventh time, and/or based on or by considering a scheduling request sent at the eleventh time and/or before the eleventh time, that the first timer is not run but the third timer set is run; and/or
(2) the terminal device determines, based on or by considering the any one or more of the grant, the assignment, the DRX command MAC CE, the long DRX command MAC CE, the multicast-related DRX command MAC CE, or the multicast-related long DRX command MAC CE that is received at the eleventh time and/or before the eleventh time, and/or based on or by considering the scheduling request sent at the eleventh time and/or before the eleventh time, that the first timer is not run but the third timer set is run, where the received grant and assignment may be a grant and assignment received in the first cell set or the seventh cell set.

Optionally, the grant includes a unicast-related grant.

Optionally, the assignment includes unicast-related assignment and/or multicast-related assignment.

Optionally, the DRX command MAC CE includes a unicast-related DRX command MAC CE.

Optionally, the long DRX command MAC CE includes a unicast-related long DRX command MAC CE.

Optionally, the scheduling request includes a unicast-related scheduling request.

The eleventh time is determined based on the first time and tenth duration.

For example, an interval between the eleventh time and the first time is the tenth duration, and the eleventh time is before the first time.

It should be understood that the tenth duration may be a parameter configured by the network device, may be calculated based on a formula or an algorithm, or may be specified in a protocol. This is not limited in this embodiment of this application. For example, the tenth duration is 4 ms.

Optionally, the preset condition includes the condition 4, and the first CSI may be/include/be replaced with seventh CSI.

The seventh CSI may include any one or more of the following:
the semi-persistent CSI;
the periodic CSI;
the CSI configured on the physical uplink shared channel PUSCH;
the semi-persistent CSI configured on the PUSCH;
the CSI configured on the physical uplink control channel PUCCH;
the periodic CSI configured on the PUCCH; or
the semi-persistent CSI configured on the PUCCH.

Optionally, the preset condition includes the condition 4, and "a terminal device skips sending first CSI at first time" may be/include/be replaced with: The terminal device skips sending the seventh CSI at the first time.

Optionally, that the terminal device skips sending the seventh CSI at the first time may include any one or more of the following:
The terminal device skips sending the semi-persistent CSI;
the terminal device skips sending the periodic CSI;
the terminal device skips sending the CSI configured on the PUSCH;
the terminal device skips sending the semi-persistent CSI configured on the PUSCH;
the terminal device skips sending the CSI configured on the PUCCH;
the terminal device skips sending the periodic CSI configured on the PUCCH;
the terminal device skips sending the semi-persistent CSI configured on the PUCCH;
the terminal device skips sending the CSI on the PUCCH;
the terminal device skips sending the periodic CSI on the PUCCH;
the terminal device skips sending the semi-persistent CSI on the PUCCH;
the terminal device skips sending the CSI on the PUSCH; or
the terminal device skips sending the semi-persistent CSI on the PUSCH.

For example, if the condition 4 is satisfied, the terminal device skips sending the first CSI or the seventh CSI at the first time.

For example, if the condition 4 is satisfied, for the fifth cell set, the terminal device skips sending the first CSI or the seventh CSI at the first time.

For example, if the on-duration timer corresponding to the unicast is not run but an on-duration timer corresponding to the multicast is run in the symbol n, for a cell or a cell set other than a cell associated with a multicast (for example, a cell associated with a multicast in which the symbol n is within active time of a multicast DRX), the terminal device skips sending the CSI on the PUCCH.

For example, if an on-duration timer corresponding to a DRX group is not run but an on-duration timer corresponding to a multicast associated with the DRX group is run in a symbol n, for a cell or a cell set other than a cell associated with a multicast (for example, a cell associated with a multicast in which the symbol n is within active time of a multicast DRX) in the DRX group, or in the cell or the cell set other than the cell associated with the multicast (for example, the cell associated with the multicast in which the symbol n is within the active time of the multicast DRX) in the DRX group, the terminal device skips sending the CSI on the PUCCH.

Optionally, the fifth cell set is not associated with a seventh multicast service set.

The seventh multicast service set includes at least one multicast service, and the at least one multicast service includes an eleventh multicast service.

No multicast DRX is configured for the eleventh multicast service.

For example, the seventh multicast service set may include: the multicast/the multicast service received by the terminal device, or the multicast/the multicast service joined by the terminal device.

The multicast/the multicast service received by the terminal device may include/be understood as: a multicast/a multicast service that will be/has been/is being received by the terminal device, and/or a multicast/a multicast service for which the terminal device obtains a configuration related to the multicast/the multicast service.

For example, the seventh multicast service set may include: a multicast/a multicast service that is received by the terminal device and for which no multicast DRX is configured, a multicast/a multicast service that is joined by the terminal device and for which no multicast DRX is configured, or a multicast/a multicast service for which no multicast DRX is configured.

For example, the seventh multicast service set may include: any one or more/all multicasts/multicast services that are received by the terminal device and for which no multicast DRX is configured, or any one or more/all multicasts/multicast services that are joined by the terminal device and for which no multicast DRX is configured.

For example, a thirteenth cell set is associated with the seventh multicast service set.

The thirteenth cell set includes at least one cell.

For example, that the fifth cell set is not associated with a seventh multicast service set may be understood as: The fifth cell set is not associated with the thirteenth cell set.

For example, the fifth cell set may be understood as/include: a cell/a cell set other than a cell/a cell set associated with the seventh multicast service set, or a cell/a cell set other than the thirteenth cell set.

It should be noted that the condition 4 may be replaced with: The first timer is not run. That is, that the first time belongs to active time of a third DRX set is unnecessary. For example, when there is a seventh multicast service set/a thirteenth cell set, the condition 4 may be: The first timer is not run. In this way, for/in a cell corresponding to a multicast for which no DRX is configured, the UE can report the CSI.

For example, the terminal device includes/has three cells: a cell 1, a cell 2, and a cell 3. The terminal device receives a multicast 1 in the cell 1, and the terminal device receives a multicast 2 in the cell 2. A multicast DRX is configured for the multicast 1, and no multicast DRX is configured for the multicast 2. If neither an on-duration timer of the first DRX is run nor an on-duration timer of the multicast DRX corresponding to the multicast 1 is run at the first time, for the cell 3 and the cell 1, the terminal device skips sending the first CSI at the first time. The first DRX is the unicast DRX, the third timer set is the on-duration timer of the multicast DRX corresponding to the multicast 1, the fifth cell set is the cell 3 and the cell 1, and the thirteenth cell set is the cell 2.

For example, the terminal device includes/has three cells: a cell 1, a cell 2, and a cell 3. The terminal device receives a multicast 1 in the cell 1, and the terminal device receives a multicast 2 in the cell 2. A multicast DRX is configured for the multicast 1, and no multicast DRX is configured for the multicast 2. If neither an on-duration timer of the first DRX is not run but an on-duration timer of the multicast DRX corresponding to the multicast 1 is run at the first time, for the cell 3, the terminal device skips sending the first CSI at the first time. The first DRX is the unicast DRX, the third timer set is the on-duration timer of the multicast DRX corresponding to the multicast 1, the fifth cell set is the cell 3, the seventh cell set is the cell 1, and the thirteenth cell set is the cell 2.

For example, if the on-duration timer corresponding to the unicast is not run in the symbol n, for a cell or a cell set other than a cell associated with a multicast for which no multicast DRX is configured, the terminal device skips sending the semi-persistent CSI configured on the PUSCH; and/or the terminal device skips sending the CSI on the PUCCH.

For example, if the on-duration timer corresponding to the unicast is not run but an on-duration timer corresponding to the multicast joined by the terminal device is run in the symbol n, for a cell or a cell set other than both the cell associated with the multicast (for example, the cell associated with the multicast in which the symbol n is within the active time of the multicast DRX) and a cell associated with a multicast for which no multicast DRX is configured, the terminal device skips sending the semi-persistent CSI configured on the PUSCH; and/or the terminal device skips sending the CSI on the PUCCH.

Optionally, the seventh multicast service set/the thirteenth cell set is associated with the first DRX/the first cell set.

For example, the seventh multicast service set may include: a multicast/a multicast service that is received by the terminal device and associated with the first cell set/the first DRX and for which no multicast DRX is configured, a multicast/a multicast service that is joined by the terminal device and associated with the first cell set/the first DRX and for which no multicast DRX is configured, or a multicast/a multicast service that is associated with the first cell set/the first DRX and for which no multicast DRX is configured.

For example, the seventh multicast service set may include: any one or more/all multicasts/multicast services that are received by the terminal device and associated with the first cell set/the first DRX and for which no multicast DRX is configured, any one or more/all multicasts/multicast services that are joined by the terminal device and associated with the first cell set/the first DRX and for which no multicast DRX is configured, or any one or more/all multicasts/multicast services that are associated with the first cell set/the first DRX and for which no multicast DRX is configured.

For example, that the seventh multicast service set/the thirteenth cell set is associated with the first DRX/the first cell set may be understood as: Cells included in the thirteenth cell set use a same DRX parameter (for example, the parameter related to the first DRX), and receiving of control information of the cells included in the thirteenth cell set is controlled by a same DRX (for example, the first DRX).

Optionally, the first cell set includes the thirteenth cell set.

For example, the thirteenth cell set is a subset of the first cell set, or the thirteenth cell set is equal to the first cell set.

Optionally, the first cell set includes the fifth cell set and the thirteenth cell set.

For example, the fifth cell set and the thirteenth cell set are equal to the first cell set.

For example, the fifth cell set and the thirteenth cell set have no intersection set.

For example, if the on-duration timer corresponding to the DRX group is not run but an on-duration timer corresponding to a multicast joined by the terminal device and associated with the DRX group is run in a symbol n, for a cell or a cell set other than a cell associated with a multicast for which no multicast DRX is configured in the DRX group, the terminal device skips sending the CSI on the PUCCH.

Optionally, the first cell set includes the fifth cell set, the seventh cell set, and the thirteenth cell set. Alternatively, optionally, the first cell set includes the fifth cell set and a union set of the seventh cell set and the thirteenth cell set.

For example, the fifth cell set, the seventh cell set, and the thirteenth cell set are equal to the first cell set.

For example, the fifth cell set and the thirteenth cell set have no intersection set.

For example, the fifth cell set and the union set of the seventh cell set and the thirteenth cell set have no intersection set.

It should be noted that the seventh cell set and the thirteenth cell set may have an intersection set, or may have no intersection set. This is not limited in this application.

It should be noted that the seventh cell set and the thirteenth cell set may be the same, or may be different. This is not limited in this application.

For example, if the on-duration timer corresponding to the DRX group is not run but an on-duration timer corresponding to a multicast joined by the terminal device and associated with the DRX group is run in a symbol n, for a cell or a cell set other than both the cell associated with the multicast (for example, the cell associated with the multicast in which the symbol n is within the active time of the multicast DRX) and a cell associated with a multicast for which no multicast DRX is configured in the DRX group, the terminal device skips sending the semi-persistent CSI configured on the PUSCH; and/or the terminal device skips sending the CSI on the PUCCH.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and the terminal device receives a multicast 2 in the cell 2. A multicast DRX is configured for the multicast 1, and no multicast DRX is configured for the multicast 2. If neither an on-duration timer of the first DRX nor an on-duration timer of the multicast DRX corresponding to the multicast 1 is run at the first time, for cells (namely, the cell 1 and the cell 3) other than the cell 2 in the first cell set, the terminal device skips sending the first CSI at the first time. The first DRX is the first DRX group, the third timer set is the on-duration timer of the multicast DRX corresponding to the multicast 1, the first cell set is the cell 1, the cell 2, and the cell 3, the fifth cell set is the cell 1 and the cell 3, and the thirteenth cell set is the cell 2.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and the terminal device receives a multicast 2 in the cell 2. A multicast DRX is configured for the multicast 1, and no multicast DRX is configured for the multicast 2. If an on-duration timer of the first DRX is not run but an on-duration timer of the multicast DRX corresponding to the multicast 1 is run at the first time, for a cell (namely, the cell 3) other than both the cell 1 and the cell 2 in the first cell set, the terminal device skips sending the first CSI at the first time. The first DRX is the first DRX group, the third timer set is the on-duration timer of the multicast DRX corresponding to the multicast 1, the first cell set is the cell 1, the cell 2, and the cell 3, the fifth cell set is the cell 3, the seventh cell set is the cell 1, and the thirteenth cell set is the cell 2.

For example, the terminal device includes/has two DRX groups. A first DRX group corresponds to three cells: a cell 1, a cell 2, and a cell 3, and a second DRX group corresponds to three cells: a cell 4, a cell 5, and a cell 6. The terminal device receives a multicast 1 and a multicast 2 in the cell 1, and the terminal device receives a multicast 4 in the cell 4. A multicast DRX is configured for the multicast 1, and no multicast DRX is configured for the multicast 2. If an on-duration timer of the first DRX is not run but an on-duration timer of the multicast DRX corresponding to the multicast 1 is run at the first time, for cells (namely, the cell 2 and the cell 3) other than the cell 1 in the first cell set, the terminal device skips sending the first CSI at the first time. The first DRX is the first DRX group, the third timer set is the multicast DRX corresponding to the multicast 1, the first cell set is the cell 1, the cell 2, and the cell 3, the fifth cell set is the cell 2 and the cell 3, the seventh cell set is the cell 1, and the thirteenth cell set is the cell 1.

For example, for a cell set or a cell (for example, the seventh cell set and/or the thirteenth cell set) other than the fifth cell set, the terminal device may send the first CSI or the CSI at the first time. For example, in the cell or the cell set associated with the seventh multicast service set, the terminal device may send the first CSI at the first time. Alternatively, in a cell or a cell set associated with the eleventh multicast service, the terminal device may send the first CSI at the first time.

In this embodiment of this application, when no multicast DRX is configured in the multicast joined by the terminal device, the terminal device may also report the CSI, so that the network device can obtain the CSI, and this helps the network device perform multicast scheduling.

Optionally, the preset condition includes the condition 4, and the preset condition may further include a condition 5.

Optionally, the preset condition includes the condition 4, and the method 400 in this application may further include that a condition 5 is satisfied.

For example, if the condition 4 and the condition 5 are satisfied, the terminal device skips sending the first CSI or the seventh CSI at the first time.

For example, if the condition 4 and the condition 5 are satisfied, for the fifth cell set, the terminal device skips sending the first CSI or the seventh CSI at the first time.

For example, if no DCP is configured for the terminal device, the symbol n is not within duration of the on-duration timer corresponding to the unicast, or the on-duration timer corresponding to the unicast is started or restarted; and the on-duration timer corresponding to the unicast is not run but the on-duration timer corresponding to the multicast is run in the symbol n, for a cell or a cell set other than both/either the cell associated with the multicast (for example, the cell associated with the multicast in which the symbol n is within the active time of the multicast DRX) and/or the cell associated with the multicast for which no multicast DRX is configured, the terminal device skips sending the CSI on the PUCCH.

For example, if no DCP is configured for the terminal device, the symbol n is not within duration of the on-duration timer corresponding to the unicast, or the on-duration timer corresponding to the unicast is started or restarted; and the on-duration timer corresponding to the DRX group is not run but the on-duration timer corresponding to the multicast associated with the DRX group is run in the symbol n, for the cell or the cell set other than both/either the cell associated with the multicast (for example, the cell associated with the multicast in which the symbol n is within the active time of the multicast DRX) and/or the cell associated with the multicast for which no multicast DRX is configured in the DRX group, or in the cell or the cell set other than both/either the cell associated with the multicast (for example, the cell associated with the multicast in which the symbol n is within the active time of the multicast DRX) and/or the cell associated with the multicast for which no multicast DRX is configured in the DRX group, the terminal device skips sending the CSI on the PUCCH.

Optionally, the preset condition includes the condition 4, and the preset condition may further include a condition 8.

Optionally, the preset condition includes the condition 4, and the method 400 in this application may further include that a condition 8 is satisfied.

For example, if the condition 4 and the condition 8 are satisfied, the terminal device skips sending the first CSI or the seventh CSI at the first time.

For example, if the condition 4 and the condition 8 are satisfied, for the fifth cell set, the terminal device skips sending the first CSI or the seventh CSI at the first time.

For example, if CSI masking is configured for the terminal device, and the on-duration timer corresponding to the unicast is not run but the on-duration timer corresponding to the multicast is run in the symbol n, for the cell or the cell set other than both/either the cell associated with the multicast (for example, the cell associated with the multicast in which the symbol n is within the active time of the multicast DRX) and/or the cell associated with the multicast for which no multicast DRX is configured, the terminal device skips sending the CSI on the PUCCH.

For example, if CSI masking is configured for the terminal device, and the on-duration timer corresponding to the DRX group is not run but the on-duration timer corresponding to the multicast associated with the DRX group is run in the symbol n, for the cell or the cell set other than both/either the cell associated with the multicast (for example, the cell associated with the multicast in which the symbol n is within the active time of the multicast DRX) and/or the cell associated with the multicast for which no multicast DRX is configured in the DRX group, or in the cell or the cell set other than both/either the cell associated with the multicast (for example, the cell associated with the multicast in which the symbol n is within the active time of the multicast DRX) and/or the cell associated with the multicast for which no multicast DRX is configured in the DRX group, the terminal device skips sending the CSI on the PUCCH.

For example, if the condition 4, the condition 5, and the condition 8 are satisfied, the terminal device skips sending the first CSI or the seventh CSI at the first time.

For example, if the condition 4, the condition 5, and the condition 8 are satisfied, for the fifth cell set, the terminal device skips sending the first CSI or the seventh CSI at the first time.

For example, if no DCP is configured for the terminal device, the symbol n is not within the duration of the on-duration timer corresponding to the unicast, or the on-duration timer corresponding to the unicast is started or restarted; CSI masking is configured for the terminal device; and the on-duration timer corresponding to the unicast is not run but the on-duration timer corresponding to the multicast is run in the symbol n, for the cell or the cell set other than both/either the cell associated with the multicast (for example, the cell associated with the multicast in which the symbol n is within the active time of the multicast DRX) and/or the cell associated with the multicast for which no multicast DRX is configured, the terminal device skips sending the CSI on the PUCCH.

For example, if no DCP is configured for the terminal device, the symbol n is not within the duration of the on-duration timer corresponding to the unicast, or the on-duration timer corresponding to the unicast is started or restarted; CSI masking is configured for the terminal device; and the on-duration timer corresponding to the DRX group is not run but the on-duration timer corresponding to the multicast associated with the DRX group is run in the symbol n, for the cell or the cell set other than both/either the cell associated with the multicast (for example, the cell associated with the multicast in which the symbol n is within the active time of the multicast DRX) and/or the cell associated with the multicast for which no multicast DRX is configured in the DRX group, or in the cell or the cell set other than both/either the cell associated with the multicast (for example, the cell associated with the multicast in which the symbol n is within the active time of the multicast DRX) and/or the cell associated with the multicast for which no multicast DRX is configured in the DRX group, the terminal device skips sending the CSI on the PUCCH.

Condition 10: A first timer is not run at the first time, and the first time does not belong to active time of a fourth DRX set.

The fourth DRX set may include at least one multicast DRX, the at least one multicast DRX includes a fourth multicast DRX, and the fourth multicast DRX is for controlling monitoring of control information related to a fifth multicast service.

For example, the fourth DRX set may include: a DRX corresponding to a multicast/a multicast service received by the terminal device, or a DRX corresponding to a multicast/a multicast service joined by the terminal device.

For example, the fourth DRX set may include: a DRX/DRXes corresponding to any multicast/multicast service/all multicasts/multicast services received by the terminal device, or a DRX/DRXes corresponding to any multicast/multicast service/all multicasts/multicast services joined by the terminal device.

For example, the fourth DRX set is associated with a sixth multicast service set, and the sixth multicast service set may include the fifth multicast service.

The sixth multicast service set may include: the multicast/the multicast service received by the terminal device, or the multicast/the multicast service joined by the terminal device.

For example, the sixth multicast service set may include: the any multicast/multicast service/all the multicasts/multicast services received by the terminal device, or the any multicast/multicast service/all the multicasts/multicast services joined by the terminal device.

For example, the fifth multicast service may be understood as: a multicast service associated with a fifth G-RNTI and/or a fifth G-CS-RNTI, or a multicast associated with the fifth G-RNTI and/or the fifth G-CS-RNTI.

It should be noted that the fourth multicast DRX may alternatively be for controlling the terminal device to monitor other control information. This is not limited in this application.

For example, the control information related to the fifth multicast service may include/be understood as: control information associated with (or scrambled by using) the fifth G-RNTI and/or the fifth G-CS-RNTI, and/or control information scrambled by using a unicast RNTI (for example, a C-RNTI and/or a CS-RNTI).

For example, active time of the fourth multicast DRX may include any one or more of the following: running time of an on-duration timer (for example, drx-onDurationTimerPTM) corresponding to the fifth multicast service (or the fifth G-RNTI and/or the fifth G-CS-RNTI); running time of an inactivity timer (for example, drx-InactivityTimerPTM) corresponding to the fifth multicast service (or the fifth G-RNTI and/or the fifth G-CS-RNTI); or running time of a retransmission timer (for example, drx-RetransmissionTimerDL-PTM) corresponding to the fifth multicast service (or the fifth G-RNTI and/or the fifth G-CS-RNTI).

For example, the active time of the fourth DRX set may include any one or more of the following: active time of a DRX set corresponding to the sixth multicast service set, active time of a DRX set corresponding to a G-RNTI set and/or a G-CS-RNTI set that correspond/corresponds to the sixth multicast service set, or active time of a DRX set corresponding to a G-RNTI set and/or a G-CS-RNTI set that correspond/corresponds to a sixth DRX set.

For example, the active time of the fourth DRX set may include any one or more of the following: running time of drx-onDurationTimerPTM, drx-InactivityTimerPTM, or drx-RetransmissionTimerDL-PTM that is specific to the G-RNTI set and/or the G-CS-RNTI set that correspond/corresponds to the fourth DRX set.

Optionally, the preset condition includes the tenth condition, and that a terminal device skips sending first CSI at first time includes: For a first cell set, the terminal device skips sending the first CSI at the first time.

It should be understood that, for descriptions of "for a first cell set, the terminal device skips sending the first CSI at the first time", refer to the foregoing related descriptions. For brevity, details are not described again.

Optionally, the first cell set includes an eighth cell set.

For example, the eighth cell set is a subset of the first cell set, or the eighth cell set is equal to the first cell set.

The eighth cell set is associated with the fourth DRX set, and the eighth cell set may include at least one cell.

It may be understood that the fourth DRX set may be associated with a first DRX.

For example, the fourth DRX set may include: a DRX corresponding to a multicast/a multicast service received by the terminal device and associated with the first cell set/the first DRX, a DRX corresponding to a multicast/a multicast service joined by the terminal device and associated with the first cell set/the first DRX, or a DRX corresponding to a multicast/a multicast service associated with the first cell set/the first DRX.

For example, the fourth DRX set may include: a DRX/DRXes corresponding to any multicast/multicast service/all multicasts/multicast services received by the terminal device and associated with the first cell set/the first DRX, a DRX/DRXes corresponding to any multicast/multicast service/all multicasts/multicast services joined by the terminal device and associated with the first cell set/the first DRX, or a DRX/DRXes corresponding to any multicast/multicast service/all multicasts/multicast services associated with the first cell set/the first DRX.

In some examples, the fourth DRX set may include/be a multicast DRX set associated with the first DRX, or a multicast DRX set corresponding to a multicast service set associated with the first cell set.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1. If a timer of the first DRX group is not run at the first time, and the first time is not within active time of a multicast DRX corresponding to the multicast 1, for the first DRX group/the first cell set, the terminal device skips sending the first CSI at the first time. The first timer is the timer of the first DRX group, the fourth DRX set is the multicast DRX corresponding to the multicast 1, the first cell set is the cell 1, the cell 2, and the cell 3, and the eighth cell set is the cell 1.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and the terminal device receives a multicast 2 in the cell 2. If a timer of the first DRX group is not run at the first time, and the first time is not within active time of a multicast DRX corresponding to the multicast 1 or active time of a multicast DRX corresponding to the multicast 2, for the first DRX group/the first cell set, the terminal device skips sending the first CSI at the first time. The first timer is the timer of the first DRX group, the fourth DRX set is the multicast DRX corresponding to the multicast 1 and the multicast DRX corresponding to the multicast 2, the first cell set is the cell 1, the cell 2, and the cell 3, and the eighth cell set is the cell 1 and the cell 2.

It should be understood that, for other descriptions of the fourth DRX set, refer to the foregoing related descriptions of the second DRX set. For brevity, details are not described again.

In some embodiments, that the first time does not belong to the active time of the fourth DRX set may be determined by the terminal device.

Optionally, that the first time does not belong to the active time of the fourth DRX set includes: The terminal device determines that the first time does not belong to the active time of the fourth DRX set.

It should be understood that, for specific explanations of that the terminal device determines that the first time does not belong to the active time of the fourth DRX set, refer to the related descriptions of that the terminal device determines that the first time does not belong to the active time of the second DRX set. Implementations thereof are similar.

In another embodiment, that the first time does not belong to active time of the first timer and that the first time does not belong to the active time of the fourth DRX set include: The terminal device determines that the first time does not belong to the active time of the first timer and that the first time does not belong to the active time of the fourth DRX set.

It should be understood that, for the technical solution, refer to the foregoing related descriptions of that the terminal device determines that the first time does not belong to the active time of the first DRX and that the first time does not belong to the active time of the second DRX set. For brevity, details are not described again.

Optionally, the preset condition includes the tenth condition, and the first CSI may be/include/be replaced with eighth CSI.

For the eighth CSI, refer to the related descriptions of the second CSI.

Optionally, the preset condition includes the tenth condition, and "a terminal device skips sending first CSI at first time" may be/include/be replaced with: The terminal device skips sending the eighth CSI at the first time.

It should be understood that, for descriptions of content included in that the terminal device skips sending the eighth CSI at the first time, refer to the foregoing related descriptions of content included in that the terminal device skips sending the second CSI at the first time.

Optionally, the preset condition includes the tenth condition, and the preset condition may further include a condition 5.

Optionally, the preset condition includes the tenth condition, and the method 400 in this application may further include that a condition 5 is satisfied.

For example, if the tenth condition and the condition 5 are satisfied, the terminal device skips sending the first CSI or the eighth CSI at the first time.

For example, if the tenth condition and the condition 5 are satisfied, for the first cell set, the terminal device skips sending the first CSI or the eighth CSI at the first time.

Optionally, the preset condition includes the condition 10, and the preset condition may further include a condition 6.

Optionally, the preset condition includes the condition 10, and the method in this application may further include that a condition 6 is satisfied.

For example, if the condition 10 and the condition 6 are satisfied, the terminal device skips sending the first CSI at the first time.

For example, if the condition 10 and the condition 6 are satisfied, for the first cell set, the terminal device skips sending the first CSI at the first time.

Optionally, the preset condition includes the condition 10, and the preset condition may further include a condition 7.

Optionally, the preset condition includes the condition 10, and the method in this application may further include that a condition 7 is satisfied.

For example, if the condition 10 and the condition 7 are satisfied, the terminal device skips sending the first CSI at the first time.

For example, if the condition 10 and the condition 7 are satisfied, for the first cell set, the terminal device skips sending the first CSI at the first time.

For example, if the condition 10, the condition 6, and the condition 7 are satisfied, the terminal device skips sending the first CSI at the first time.

For example, if the condition 10, the condition 6, and the condition 7 are satisfied, for the first cell set, the terminal device skips sending the first CSI at the first time.

Condition 11: A first timer is not run at the first time, and the first time belongs to active time of a fifth DRX set.

The fifth DRX set may include at least one multicast DRX, the at least one multicast DRX includes a fifth multicast DRX, and the fifth multicast DRX is for controlling monitoring of control information related to a sixth multicast service.

For example, the fifth DRX set may include: a DRX corresponding to a multicast/a multicast service received by the terminal device, or a DRX corresponding to a multicast/a multicast service joined by the terminal device.

For example, the fifth DRX set may include: a DRX/DRXes corresponding to any multicast/multicast service/all multicasts/multicast services received by the terminal device, or a DRX/DRXes corresponding to any multicast/multicast service/all multicasts/multicast services joined by the terminal device.

For example, the fifth DRX set is associated with a seventh multicast service set, and the seventh multicast service set may include the sixth multicast service.

For example, the seventh multicast service set may include: the multicast/the multicast service received by the terminal device, or the multicast/the multicast service joined by the terminal device.

For example, the sixth multicast service may be understood as: a multicast service associated with a sixth G-RNTI and/or a sixth G-CS-RNTI, or a multicast associated with the sixth G-RNTI and/or the sixth G-CS-RNTI.

For example, the control information related to the sixth multicast service may include/be understood as: control information associated with (or scrambled by using) the sixth G-RNTI and/or the sixth G-CS-RNTI, and/or control information scrambled by using a unicast RNTI (for example, a C-RNTI and/or a CS-RNTI).

It should be noted that the fifth multicast DRX may alternatively be for controlling the terminal device to monitor other control information. This is not limited in this application.

For example, active time of the fifth multicast DRX may include any one or more of the following: running time of an on-duration timer (for example, drx-onDurationTimerPTM) corresponding to the sixth multicast service (or the sixth G-RNTI and/or the sixth G-CS-RNTI); running time of an inactivity timer (for example, drx-InactivityTimerPTM) corresponding to the sixth multicast service (or the sixth G-RNTI and/or the sixth G-CS-RNTI); or running time of a retransmission timer (for example, drx-RetransmissionTimerDL-PTM) corresponding to the sixth multicast service (or the sixth G-RNTI and/or the sixth G-CS-RNTI).

For example, the active time of the fifth DRX set may include any one or more of the following: active time of a DRX set corresponding to the seventh multicast service set, active time of a DRX set corresponding to a G-RNTI set and/or a G-CS-RNTI set that correspond/corresponds to the seventh multicast service set, or active time of a DRX set corresponding to a G-RNTI set and/or a G-CS-RNTI set that correspond/corresponds to a seventh DRX set.

For example, the active time of the fifth DRX set may include any one or more of the following: running time of drx-onDurationTimerPTM, drx-InactivityTimerPTM, or drx-RetransmissionTimerDL-PTM that is specific to the G-RNTI set and/or the G-CS-RNTI set that correspond/corresponds to the fifth DRX set.

It should be noted that the active time of the fifth DRX set may further include other time. This is not limited in this application.

Optionally, the preset condition includes the eleventh condition, and that a terminal device skips sending first CSI at first time may include: For a ninth cell set, the terminal device skips sending the first CSI at the first time.

The ninth cell set includes at least one cell, and the ninth cell set is not associated with the fifth DRX set.

For example, a fourteenth cell set is associated with the fifth DRX set or the seventh multicast service set.

The fourteenth cell set includes at least one cell.

It should be understood that, that the ninth cell set is not associated with the fifth DRX set may be understood as: The ninth cell set is not associated with the seventh multicast service set.

For example, the ninth cell set may be understood as/include: a cell/a cell set other than a cell/a cell set associated with the seventh multicast service set, or a cell/a cell set other than the fourteenth cell set.

Optionally, the ninth cell set is associated with a first DRX.

For example, that the ninth cell set is associated with a first DRX may be understood as: Cells included in the ninth cell set use a same DRX parameter (for example, a parameter related to the first DRX), and receiving of control information of the cells included in the ninth cell set is controlled by a same DRX (for example, the first DRX).

Optionally, the fourteenth cell set is associated with the first DRX.

For example, that the fourteenth cell set is associated with the first DRX may be understood as: Cells included in the fourteenth cell set use a same DRX parameter (for example, the parameter related to the first DRX), and receiving of control information of the cells included in the fourteenth cell set is controlled by a same DRX (for example, the first DRX).

Optionally, a first cell set includes the ninth cell set.

For example, the ninth cell set is a subset of the first cell set, or the ninth cell set is equal to the first cell set.

In some embodiments, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1. If a timer of the first DRX group is not run at the first time, but the first time is within active time of a multicast DRX corresponding to the multicast 1, for cells (namely, the cell 2 and the cell 3) other than the cell 1 in the first cell set, the terminal device skips sending the first CSI at the first time. The first timer is the timer of the first DRX group, the fifth DRX set is the multicast DRX corresponding to the multicast 1, the first cell set is the cell 1, the cell 2, and the cell 3, and the ninth cell set is the cell 2 and the cell 3.

In some embodiments, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and receives a multicast 2 in the cell 2. If a timer of the first DRX group is not run at the first time, but the first time is within active time of a multicast DRX corresponding to the multicast 1 and active time of a multicast DRX corresponding to the multicast 2, for a cell (namely, the cell 3) other than both the cell 1 and the cell 2 in the first cell set, the terminal device skips sending the first CSI at the first time. The first timer is the timer of the first DRX group, the fifth DRX set is the multicast DRX corresponding to the multicast 1 and the multicast DRX corresponding to the multicast 2, the first cell set is the cell 1, the cell 2, and the cell 3, and the ninth cell set is the cell 3.

Optionally, the ninth cell set is not associated with an eighth multicast service set.

The eighth multicast service set includes at least one multicast service, and the at least one multicast service includes a twelfth multicast service.

No multicast DRX is configured for the twelfth multicast service.

It should be understood that, for the twelfth multicast service, refer to the foregoing related descriptions of the second multicast service.

For example, a fifteenth cell set is associated with the eighth multicast service set.

The fifteenth cell set includes at least one cell.

For example, that the ninth cell set is not associated with an eighth multicast service set may be understood as: The ninth cell set is not associated with the fifteenth cell set.

For example, the ninth cell set may be understood as/include: a cell/a cell set other than a cell/a cell set associated with the eighth multicast service set, or a cell/cell set other than the fifteenth cell set.

It should be noted that the condition 11 may be replaced with: The first timer is not run at the first time. That is, that the first time belongs to the active time of the fifth DRX set is unnecessary. For example, when there is an eighth multicast service set/a fifteenth cell set, the condition 11 may be: The first timer is not run at the first time. In this way, for/in a cell corresponding to a multicast for which no DRX is configured, the UE can report the CSI.

For example, the terminal device includes/has three cells: a cell 1, a cell 2, and a cell 3. The terminal device receives a multicast 1 in the cell 1, and the terminal device receives a multicast 2 in the cell 2. A multicast DRX is configured for the multicast 1, and no multicast DRX is configured for the multicast 2. If a timer of a first DRX group is not run at first time, and the first time is not within active time of the multicast DRX corresponding to the multicast 1, for the cell 3 and the cell 1, the terminal device skips sending the first CSI at the first time. The first timer is the timer of the first DRX group, the fifth DRX set is the multicast DRX corresponding to the multicast 1, the ninth cell set is the cell 3 and the cell 1, and the fifteenth cell set is the cell 2.

For example, the terminal device includes/has three cells: a cell 1, a cell 2, and a cell 3. The terminal device receives a multicast 1 in the cell 1, and the terminal device receives a multicast 2 in the cell 2. A multicast DRX is configured for the multicast 1, and no multicast DRX is configured for the multicast 2. If a timer of a first DRX group is not run at first time, and the first time is within active time of the multicast DRX corresponding to the multicast 1, for the cell 3, the terminal device skips sending the first CSI at the first time. The first timer is the timer of the first DRX group, the fifth DRX set is the multicast DRX corresponding to the multicast 1, the ninth cell set is the cell 3, the fourteenth cell set is the cell 1, and the fifteenth cell set is the cell 2.

For example, if an on-duration timer corresponding to a unicast is not run in the symbol n, for a cell or a cell set other than a cell associated with a multicast for which no multicast DRX is configured, the terminal device skips sending the semi-persistent CSI configured on the PUSCH; and/or the terminal device skips sending the CSI on the PUCCH.

For example, if an on-duration timer corresponding to a unicast is not run in the symbol n, but the symbol n is within active time of a multicast DRX joined by the terminal device, for a cell or a cell set other than both a cell associated with a multicast (for example, a cell associated with a multicast in which the symbol n is within the active time of the multicast DRX) and a cell associated with a multicast for which no multicast DRX is configured, the terminal device skips sending the semi-persistent CSI configured on the PUSCH; and/or the terminal device skips sending the CSI on the PUCCH.

Optionally, the eighth multicast service set/the fifteenth cell set is associated with the first DRX/the first cell set.

For example, the eighth multicast service set may include: a multicast/a multicast service that is received by the terminal device and associated with the first cell set/the first DRX and for which no multicast DRX is configured, a multicast/a multicast service that is joined by the terminal device and associated with the first cell set/the first DRX and for which no multicast DRX is configured, or a multicast/a multicast service that is associated with the first cell set/the first DRX and for which no multicast DRX is configured.

For example, the eighth multicast service set may include: any one or more/all multicasts/multicast services that are received by the terminal device and associated with the first cell set/the first DRX and for which no multicast DRX is configured, any one or more/all multicasts/multicast services that are joined by the terminal device and associated with the first cell set/the first DRX and for which no multicast DRX is configured, or any one or more/all multicasts/multicast services that are associated with the first cell set/the first DRX and for which no multicast DRX is configured.

For example, that the eighth multicast service set/the fifteenth cell set is associated with the first DRX/the first cell set may be understood as: Cells included in the fifteenth cell set use a same DRX parameter (for example, the parameter related to the first DRX), and receiving of control information of the cells included in the fifteenth cell set is controlled by a same DRX (for example, the first DRX).

Optionally, the first cell set includes the fifteenth cell set.

For example, the fifteenth cell set is a subset of the first cell set, or the fifteenth cell set is equal to the first cell set.

Optionally, the first cell set includes the ninth cell set and the fifteenth cell set.

For example, the ninth cell set and the fifteenth cell set are equal to the first cell set.

For example, the ninth cell set and the fifteenth cell set have no intersection set.

For example, if an on-duration timer corresponding to a DRX group is not run in the symbol n, for a cell or a cell set other than a cell associated with a multicast for which no multicast DRX is configured in the DRX group, the terminal device skips sending the semi-persistent CSI configured on the PUSCH; and/or the terminal device skips sending the CSI on the PUCCH.

Optionally, the first cell set includes the ninth cell set, the fourteenth cell set, and the fifteenth cell set. Alternatively, optionally, the first cell set includes the ninth cell set and a union set of the fourteenth cell set and the fifteenth cell set.

For example, the ninth cell set, the fourteenth cell set, and the fifteenth cell set are equal to the first cell set.

For example, the ninth cell set and the fifteenth cell set have no intersection set.

For example, the ninth cell set and the union set of the fourteenth cell set and the fifteenth cell set have no intersection set.

It should be noted that, the fourteenth cell set and the fifteenth cell set may have an intersection set, or may have no intersection set. This is not limited in this application.

It should be noted that the fourteenth cell set and the fifteenth cell set may be the same, or may be different. This is not limited in this application.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and the terminal device receives a multicast 2 in the cell 2. A multicast DRX is configured for the multicast 1, and no multicast DRX is configured for the multicast 2. If a timer of the first DRX group is not run at the first time, and the first time is not within active time of the multicast DRX corresponding to the multicast 1, for cells (namely, the cell 1 and the cell 3) other than the cell 2 in the first cell set, the terminal device skips sending the first CSI at the first time. The first timer is the timer of the first DRX group, the fifth DRX set is the multicast DRX corresponding to the multicast 1, the first cell set is the cell 1, the cell 2, and the cell 3, the ninth cell set is the cell 1 and the cell 3, and the fifteenth cell set is the cell 2.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and the terminal device receives a multicast 2 in the cell 2. A multicast DRX is configured for the multicast 1, and no multicast DRX is configured for the multicast 2. If a timer of the first DRX group is not run at the first time, and the first time is within active time of the multicast DRX corresponding to the multicast 1, for a cell (namely, the cell 3) other than both the cell 1 and the cell 2 in the first cell set, the terminal device skips sending the first CSI at the first time. The first timer is the timer of the first DRX group, the fifth DRX set is the multicast DRX corresponding to the multicast 1, the first cell set is the cell 1, the cell 2, and the cell 3, the ninth cell set is the cell 3, the fourteenth cell set is the cell 1, and the fifteenth cell set is the cell 2.

It should be understood that, for a cell set or a cell (for example, the fourteenth cell set and/or a fifteenth cell) other than the ninth cell set, the terminal device may send the first CSI or the CSI at the first time. For example, in the cell or the cell set associated with the eighth multicast service set, the terminal device may send the first CSI at the first time. Alternatively, in a cell or a cell set associated with the twelfth multicast service, the terminal device may send the first CSI at the first time.

In this embodiment of this application, when no multicast DRX is configured in the multicast joined by the terminal device, for the multicast, the terminal device may also report the CSI, so that a network device can obtain the CSI, and this helps the network device perform multicast scheduling.

In some embodiments, that the first time belongs to the active time of the fifth DRX set may be determined by the terminal device.

Optionally, that the first time does not belong to the active time of the fifth DRX set includes: The terminal device determines that the first time does not belong to the active time of the fifth DRX set.

It should be understood that, for a specific implementation in which the terminal device determines that the first time belongs to the active time of the fifth DRX set, refer to the related descriptions of that the terminal device determines that the first time belongs to the active time of the third DRX set. Implementations thereof are similar.

In another embodiment, that the first time does not belong to active time of the first timer and that the first time belongs to the active time of the fifth DRX set include: The terminal device determines that the first time does not belong to the active time of the first timer and that the first time belongs to the active time of the fifth DRX set.

It should be understood that, for the technical solution, refer to the foregoing related descriptions of that the terminal device determines that the first time does not belong to the active time of the first DRX and that the first time belongs to the active time of the third DRX set. For brevity, details are not described again.

Optionally, the preset condition includes the eleventh condition, and the first CSI may be/include/be replaced with ninth CSI.

For the ninth CSI, refer to the related descriptions of the fourth CSI.

Optionally, the preset condition includes the eleventh condition, and "a terminal device skips sending first CSI at first time" may be/include/be replaced with: The terminal device skips sending the ninth CSI at the first time.

It should be understood that, for descriptions of content included in that the terminal device skips sending the eighth CSI at the first time, refer to the foregoing related descriptions of content included in that the terminal device skips sending the fourth CSI at the first time.

Optionally, the preset condition includes the eleventh condition, and the preset condition may further include a condition 5.

Optionally, the preset condition includes the eleventh condition, and the method 400 in this application may further include that a condition 5 is satisfied.

For example, if the eleventh condition and the condition 5 are satisfied, the terminal device skips sending the first CSI or the ninth CSI at the first time.

For example, if the eleventh condition and the condition 5 are satisfied, for a third cell set, the terminal device skips sending the first CSI or the ninth CSI at the first time.

Optionally, the preset condition includes the condition 11, and the preset condition may further include a condition 6.

Optionally, the preset condition includes a condition 11, and the method in this application may further include that a condition 6 is satisfied.

For example, if the condition 11 and the condition 6 are satisfied, the terminal device skips sending the first CSI at the first time.

For example, if the condition 11 and the condition 6 are satisfied, for the ninth cell set, the terminal device skips sending the first CSI at the first time.

Optionally, the preset condition includes the condition 11, and the preset condition may further include a condition 7.

Optionally, the preset condition includes the condition 11, and the method in this application may further include that a condition 7 is satisfied.

For example, if the condition 11 and the condition 7 are satisfied, the terminal device skips sending the first CSI at the first time.

For example, if the condition 11 and the condition 7 are satisfied, for the ninth cell set, the terminal device skips sending the first CSI at the first time.

For example, if the condition 11, the condition 6, and the condition 7 are satisfied, the terminal device skips sending the first CSI at the first time.

For example, if the condition 11, the condition 6, and the condition 7 are satisfied, for the ninth cell set, the terminal device skips sending the first CSI at the first time.

Condition 12: The first time does not belong to active time of a first DRX, and a fourth timer set is not run at the first time.

The fourth timer set may include at least one multicast timer, the at least one multicast timer includes a fifth multicast timer, and during running of the fifth multicast timer, the terminal device monitors control information related to a seventh multicast service.

For example, the fourth timer set may include: a multicast timer corresponding to a multicast/a multicast service received by the terminal device, or a multicast timer corresponding to a multicast/a multicast service joined by the terminal device.

For example, the fourth timer set may include: a multicast timer/multicast timers corresponding to any multicast/multicast service/all multicasts/multicast services received by the terminal device, or a multicast timer/multicast timers corresponding to any multicast/multicast service/all multicasts/multicast services joined by the terminal device.

It should be understood that, that a fourth timer set is not run at the first time may be understood as: Any timer in the fourth timer set is not run at the first time.

For example, the fourth timer set is associated with an eleventh multicast service set, and the eleventh multicast service set may include the seventh multicast service.

For example, the fourth timer set may include: the multicast timer corresponding to the multicast/the multicast service received by the terminal device, or the multicast timer corresponding to the multicast/the multicast service joined by the terminal device.

For example, the fourth timer set may include: the multicast timer/the multicast timers corresponding to the any multicast/multicast service/all the multicasts/multicast services received by the terminal device, or the multicast timer/the multicast timers corresponding to the any multicast/multicast service/all the multicasts/multicast services joined by the terminal device.

For example, the eleventh multicast service set may include: the multicast/the multicast service received by the terminal device, or the multicast/the multicast service joined by the terminal device.

For example, the eleventh multicast service set may include: the any multicast/multicast service/all the multicasts/multicast services received by the terminal device, or the any multicast/multicast service/all the multicasts/multicast services joined by the terminal device.

For example, the seventh multicast service may be understood as: a multicast service associated with a fourteenth G-RNTI and/or a fourteenth G-CS-RNTI, or a multicast associated with the fourteenth G-RNTI and/or the fourteenth G-CS-RNTI.

For example, the control information related to the seventh multicast service may include/be understood as: control information associated with (or scrambled by using) the fourteenth G-RNTI and/or the fourteenth G-CS-RNTI, and/or control information scrambled by using a unicast RNTI (for example, a C-RNTI and/or a CS-RNTI).

It should be noted that, during the running of the fifth multicast timer, the terminal device may alternatively monitor other control information. This is not limited in this application.

The fifth multicast timer may be a timer related to the seventh multicast service, drx-onDurationTimerPTM related to the seventh multicast service, or a timer related to the fourteenth G-RNTI and/or the fourteenth G-CS-RNTI, or drx-onDurationTimerPTM related to the fourteenth G-RNTI and/or the fourteenth G-CS-RNTI.

Optionally, the preset condition includes the twelfth condition, and that a terminal device skips sending first CSI at first time includes: For a first cell set, the terminal device skips sending the first CSI at the first time.

The first cell set includes at least one cell, and the first cell set is associated with the first DRX or a first timer.

It should be understood that, for related descriptions of "for a first cell set, the terminal device skips sending the first CSI at the first time", refer to the foregoing related descriptions. For brevity, details are not described again.

Optionally, the first cell set includes a tenth cell set.

For example, the tenth cell set is a subset of the first cell set, or the tenth cell set is equal to the first cell set.

The tenth cell set is associated with the fourth timer set, and the tenth cell set includes at least one cell.

The fourth timer set is a multicast timer set associated with the first timer or the first DRX, or a multicast timer set corresponding to a multicast service set associated with the first cell set.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1. If the first time is not within active time of the first DRX group, and a timer of a multicast DRX corresponding to the multicast 1 is not run, for the first DRX group/the first cell set, the terminal device skips sending the first CSI at the first time. The first DRX is the first DRX group, the fourth timer set is the timer of the multicast DRX corresponding to the multicast 1, the first cell set is the cell 1, the cell 2, and the cell 3, and the tenth cell set is the cell 1.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and receives a multicast 2 in the cell 2. If the first time is not within active time of the first DRX group, and a timer of a multicast DRX corresponding to the multicast 1 and a timer of a multicast DRX corresponding to the multicast 2 is not run, for the first DRX group/the first cell set, the terminal device skips sending the first CSI at the first time. The first DRX is the first DRX group, the fourth timer set is the timer of the multicast DRX corresponding to the multicast 1 and the timer of the multicast DRX corresponding to the multicast 2, the first cell set is the cell 1, the cell 2, and the cell 3, and the tenth cell set is the cell 1 and the cell 2.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, receives a multicast 2 in the cell 2, and receives a multicast 4 in the cell 4. If the first time is not within active time of the first DRX group, and a timer of a multicast DRX corresponding to the multicast 1 and a timer of a multicast DRX corresponding to the multicast 2 is not run, for the first DRX group/the first cell set, the terminal device skips sending the first CSI at the first time. The first DRX is the first DRX group, the fourth timer set is the timer of the multicast DRX corresponding to the multicast 1 and the timer of the multicast DRX corresponding to the multicast 2, the first cell set is the cell 1, the cell 2, and the cell 3, and the tenth cell set is the cell 1 and the cell 2.

It should be understood that, for other descriptions of the fourth timer set, refer to the foregoing related descriptions of the second timer set.

In some embodiments, that the fourth timer set is not run may be determined by the terminal device.

Optionally, that the fourth timer set is not run includes: The terminal device determines that the fourth timer set is not run.

It should be understood that, for specific explanations of that the terminal device determines that the fourth timer set is not run, refer to the related descriptions of that the terminal device determines that the second timer set is not run. Implementations thereof are similar.

In another embodiment, that the first time does not belong to the active time of the first DRX and that the fourth timer set is not run at the first time include: The terminal device determines that the first time does not belong to the active time of the first DRX and that the fourth timer set is not run at the first time.

It should be understood that, for the technical solution, refer to the foregoing related descriptions of that the terminal device determines that neither the first timer nor the second timer set is run at the first time. For brevity, details are not described again.

Optionally, the preset condition includes the twelfth condition, and the first CSI may be/include/be replaced with tenth CSI.

For the tenth CSI, refer to the related descriptions of the sixth CSI.

Optionally, the preset condition includes the twelfth condition, and "a terminal device skips sending first CSI at first time" may be/include/be replaced with: The terminal device skips sending the tenth CSI at the first time.

It should be understood that, for descriptions of content included in that the terminal device skips sending the tenth CSI at the first time, refer to the foregoing related descriptions of content included in that the terminal device skips sending the sixth CSI at the first time.

Optionally, the preset condition includes the twelfth condition, and the preset condition may further include a condition 5.

Optionally, the preset condition includes the twelfth condition, and the method 400 in this application may further include that a condition 5 is satisfied.

For example, if the twelfth condition and the condition 5 are satisfied, the terminal device skips sending the first CSI or the tenth CSI at the first time.

For example, if the twelfth condition and the condition 5 are satisfied, for the first cell set, the terminal device skips sending the first CSI or the tenth CSI at the first time.

Optionally, the preset condition includes the condition 12, and the preset condition may further include a condition 6.

Optionally, the preset condition includes the condition 12, and the method in this application may further include that a condition 6 is satisfied.

For example, if the condition 12 and the condition 6 are satisfied, the terminal device skips sending the first CSI at the first time.

For example, if the condition 12 and the condition 6 are satisfied, for the first cell set, the terminal device skips sending the first CSI at the first time.

Optionally, the preset condition includes the condition 12, and the preset condition may further include a condition 7.

Optionally, the preset condition includes the condition 12, and the method in this application may further include that a condition 7 is satisfied.

For example, if the condition 12 and the condition 7 are satisfied, the terminal device skips sending the first CSI at the first time.

For example, if the condition 12 and the condition 7 are satisfied, for the first cell set, the terminal device skips sending the first CSI at the first time.

For example, if the condition 12, the condition 6, and the condition 7 are satisfied, the terminal device skips sending the first CSI at the first time.

For example, if the condition 12, the condition 6, and the condition 7 are satisfied, for the first cell set, the terminal device skips sending the first CSI at the first time.

Condition 13: The first time does not belong to active time of a first DRX, and a fifth timer set is run at the first time.

The fifth timer set may include at least one multicast timer, the at least one multicast timer includes a sixth multicast timer, and during running of the sixth multicast timer, the terminal device monitors control information related to an eighth multicast service.

For example, the fifth timer set may include: a multicast timer corresponding to a multicast/a multicast service received by the terminal device, or a multicast timer corresponding to a multicast/a multicast service joined by the terminal device.

For example, the fifth timer set may include: a multicast timer/multicast timers corresponding to any multicast/multicast service/all multicasts/multicast services received by the terminal device, or a multicast timer/multicast timers corresponding to any multicast/multicast service/all multicasts/multicast services joined by the terminal device.

For example, the fifth timer set is associated with a ninth multicast service set, and the ninth multicast service set may include the eighth multicast service.

For example, the fifth timer set may include: the multicast timer corresponding to the multicast/the multicast service received by the terminal device, or the multicast timer corresponding to the multicast/the multicast service joined by the terminal device.

For example, the ninth multicast service set may include: the multicast/the multicast service received by the terminal device, or the multicast/the multicast service joined by the terminal device.

For example, the eighth multicast service may be understood as: a multicast service associated with an eighth G-RNTI and/or an eighth G-CS-RNTI, or a multicast associated with the eighth G-RNTI and/or the eighth G-CS-RNTI.

For example, the control information related to the eighth multicast service may include/be understood as: control information associated with (or scrambled by using) the eighth G-RNTI and/or the eighth G-CS-RNTI, and/or control information scrambled by using a unicast RNTI (for example, a C-RNTI and/or a CS-RNTI).

It should be noted that, during the running of the sixth multicast timer, the terminal device may alternatively monitor other control information. This is not limited in this application.

The sixth multicast timer may be a timer related to the eighth multicast service, drx-onDurationTimerPTM related to the eighth multicast service, a timer related to the eighth G-RNTI and/or the eighth G-CS-RNTI, or drx-onDurationTimerPTM related to the eighth G-RNTI and/or the eighth G-CS-RNTI.

Optionally, the preset condition includes the thirteenth condition, and that a terminal device skips sending first CSI at first time includes: For an eleventh cell set, the terminal device skips sending the first CSI at the first time.

The eleventh cell set includes at least one cell, and the eleventh cell set is not associated with the fifth timer set.

For example, a sixteenth cell set is associated with the fifth timer set or the ninth multicast service set.

The sixteenth cell set includes at least one cell.

It should be understood that, that the eleventh cell set is not associated with the fifth timer set may be understood as: The eleventh cell set is not associated with the ninth multicast service set.

For example, the eleventh cell set may be understood as: a cell/a cell set other than a cell/a cell set associated with the ninth multicast service set, or a cell/a cell set other than the sixteenth cell set.

It should be noted that "for an eleventh cell set, the terminal device skips sending the first CSI at the first time" may include/be understood as any one of the following: The terminal device skips sending the CSI (for example, the first CSI) in the eleventh cell set at the first time; or the terminal device skips sending, at the first time, CSI (for example, the first CSI) specific to the eleventh cell set.

It should be noted that, for "the terminal device skips sending the CSI (for example, the first CSI) in the eleventh cell set at the first time", whether the terminal device sends, in another cell or cell group, the CSI specific to the eleventh cell set is not limited in this application.

It should be noted that, for "the terminal device skips sending, at the first time, CSI (for example, the first CSI) specific to the eleventh cell set", whether the terminal device sends, in the eleventh cell set, CSI specific to another cell or cell set is not limited in this application.

Optionally, the sixteenth cell set is associated with the first DRX.

For example, that the sixteenth cell set is associated with the first DRX may be understood as: Cells included in the sixteenth cell set use a same DRX parameter (for example, a parameter related to the first DRX), and receiving of control information of the cells included in the sixteenth cell set is controlled by a same DRX (for example, the first DRX).

Optionally, the eleventh cell set is associated with a first timer or the first DRX.

For example, cells included in the eleventh cell set use a same DRX parameter (for example, the first timer or the parameter related to the first DRX), and receiving of control information of the cells included in the eleventh cell set is controlled by a same DRX (for example, the first timer or the first DRX).

Optionally, a first cell set includes the eleventh cell set.

For example, the eleventh cell set is a subset of the first cell set, or the eleventh cell set is equal to the first cell set.

Optionally, the eleventh cell set is not associated with a twelfth multicast service set.

The twelfth multicast service set includes at least one multicast service, and the at least one multicast service includes a thirteenth multicast service.

No multicast DRX is configured for the thirteenth multicast service.

It should be understood that, for the twelfth multicast service set, refer to the foregoing related descriptions of the eighth multicast service set.

For example, a seventeenth cell set is associated with the twelfth multicast service set.

The seventeenth cell set includes at least one cell.

For example, that the eleventh cell set is not associated with a twelfth multicast service set may be understood as: The eleventh cell set is not associated with the seventeenth cell set.

For example, the eleventh cell set may be understood as/include: a cell/a cell set other than a cell/a cell set associated with the twelfth multicast service set, or a cell/a cell set other than the seventeenth cell set.

It should be noted that the condition 13 may be replaced with: The first time does not belong to the active time of the first DRX. That is, that the fifth timer set is run at the first time is not necessary. For example, when there is a twelfth multicast service set/a seventeenth cell set, the condition 13 may be: The first time does not belong to the active time of the first DRX. In this way, for/in a cell corresponding to a multicast for which no DRX is configured, the UE can report the CSI.

For example, the terminal device includes/has three cells: a cell 1, a cell 2, and a cell 3. The terminal device receives a multicast 1 in the cell 1, and the terminal device receives a multicast 2 in the cell 2. A multicast DRX is configured for the multicast 1, and no multicast DRX is configured for the multicast 2. If the first time does not belong to active time of a first DRX group, and an on-duration timer corresponding to the multicast 1 is not run, for the cell 3 and the cell 1, the terminal device skips sending the first CSI at the first time. The first DRX is the first DRX group, the fifth timer set is the on-duration timer of the multicast DRX corresponding to the multicast 1, the eleventh cell set is the cell 3, the sixteenth cell set is the cell 1, and the seventeenth cell set is the cell 2.

For example, the terminal device includes/has three cells: a cell 1, a cell 2, and a cell 3. The terminal device receives a multicast 1 in the cell 1, and the terminal device receives a multicast 2 in the cell 2. A multicast DRX is configured for the multicast 1, and no multicast DRX is configured for the multicast 2. If the first time does not belong to active time of a first DRX group, and an on-duration timer corresponding to the multicast 1 is run, for the cell 3 and the cell 1, the terminal device skips sending the first CSI at the first time. The first DRX is the first DRX group, the fifth timer set is the on-duration timer of the multicast DRX corresponding to the multicast 1, the eleventh cell set is the cell 3 and the cell 1, and the seventeenth cell set is the cell 2.

For example, if the symbol n is not within active time of a unicast DRX, for a cell or a cell set other than a cell associated with a multicast for which no multicast DRX is configured, the terminal device skips sending the semi-persistent CSI configured on the PUSCH; and/or the terminal device skips sending the CSI on the PUCCH.

For example, if the symbol n is not within active time of a unicast DRX, but an on-duration timer corresponding to the multicast joined by the terminal device is run, for a cell or a cell set other than both a cell associated with a multicast (for example, a cell associated with a multicast in which the symbol n is within active time of the multicast DRX) and a cell associated with a multicast for which no multicast DRX is configured, the terminal device skips sending the semi-persistent CSI configured on the PUSCH; and/or the terminal device skips sending the CSI on the PUCCH.

Optionally, the twelfth multicast service set/the seventeenth cell set is associated with the first DRX/the first cell set.

For example, the twelfth multicast service set may include: a multicast/a multicast service that is received by the terminal device and associated with the first cell set/the first DRX and for which no multicast DRX is configured, a multicast/a multicast service that is joined by the terminal device and associated with the first cell set/the first DRX and for which no multicast DRX is configured, or a multicast/a multicast service that is associated with the first cell set/the first DRX and for which no multicast DRX is configured.

For example, the twelfth multicast service set may include: any one or more/all multicasts/multicast services that are received by the terminal device and associated with the first cell set/the first DRX and for which no multicast DRX is configured, any one or more/all multicasts/multicast services that are joined by the terminal device and associated with the first cell set/the first DRX and for which no multicast DRX is configured, or any one or more/all multicasts/multicast services that are associated with the first cell set/the first DRX and for which no multicast DRX is configured.

For example, that the twelfth multicast service set/the seventeenth cell set is associated with the first DRX/the first cell set may be understood as: Cells included in the seventeenth cell set use a same DRX parameter (for example, the parameter related to the first DRX), and receiving of control information of the cells included in the seventeenth cell set is controlled by a same DRX (for example, the first DRX).

Optionally, the first cell set includes the seventeenth cell set.

For example, the seventeenth cell set is a subset of the first cell set, or the seventeenth cell set is equal to the first cell set.

Optionally, the first cell set includes the eleventh cell set and the seventeenth cell set.

For example, the eleventh cell set and the seventeenth cell set are equal to the first cell set.

For example, the eleventh cell set and the seventeenth cell set have no intersection set.

For example, if the symbol n is not within active time of a DRX group, for a cell or a cell set other than a cell associated with a multicast for which no multicast DRX is configured in the DRX group, the terminal device skips sending the semi-persistent CSI configured on the PUSCH; and/or the terminal device skips sending the CSI on the PUCCH.

Optionally, the first cell set includes the eleventh cell set, the sixteenth cell set, and the seventeenth cell set. Alternatively, optionally, the first cell set includes the eleventh cell set and a union set of the sixteenth cell set and the seventeenth cell set.

For example, the eleventh cell set, the sixteenth cell set, and the seventeenth cell set are equal to the first cell set.

For example, the eleventh cell set and the seventeenth cell set have no intersection set.

For example, the eleventh cell set and the union set of the sixteenth cell set and the seventeenth cell set have no intersection set.

It should be noted that the sixteenth cell set and the seventeenth cell set may have an intersection set, or may have no intersection set. This is not limited in this application.

It should be noted that the sixteenth cell set and the seventeenth cell set may be the same, or may be different. This is not limited in this application.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and the terminal device receives a multicast 2 in the cell 2. A multicast DRX is configured for the multicast 1, and no multicast DRX is configured for the multicast 2. If the first time does not belong to active time of the first DRX group, and an on-duration timer corresponding to the multicast 1 is not run, for cells (namely, the cell 1 and the cell 3) other than the cell 2 in the first cell set, the terminal device skips sending the first CSI at the first time. The first DRX is the first DRX group, the fifth timer set is the on-duration timer of the multicast DRX corresponding to the multicast 1, the first cell set is the cell 1, the cell 2, and the cell 3, the eleventh cell set is the cell 1 and the cell 3, and the seventeenth cell set is the cell 2.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and the terminal device receives a multicast 2 in the cell 2. A multicast DRX is configured for the multicast 1, and no multicast DRX is configured for the multicast 2. If the first time does not belong to active time of the first DRX group, and an on-duration timer corresponding to the multicast 1 is run, for a cell (namely, the cell 3) other than both the cell 1 and the cell 2 in the first cell set, the terminal device skips sending the first CSI at the first time. The first DRX is the first DRX group, the fifth timer set is the on-duration timer of the multicast DRX corresponding to the multicast 1, the first cell set is the cell 1, the cell 2, and the cell 3, the eleventh cell set is the cell 3, the sixteenth cell set is the cell 1, and the seventeenth cell set is the cell 2.

For example, for a cell set or a cell (for example, the sixteenth cell set and/or the seventeenth cell) other than the eleventh cell set, the terminal device may send the first CSI or the CSI at the first time. For example, in the cell or the cell set associated with the twelfth multicast service set, the terminal device may send the first CSI at the first time. Alternatively, in a cell or a cell set associated with the thirteenth multicast service, the terminal device may send the first CSI at the first time.

In this embodiment of this application, when no multicast DRX is configured in the multicast joined by the terminal device, for the multicast, the terminal device may also report the CSI, so that a network device can obtain the CSI, and this helps the network device perform multicast scheduling.

In some embodiments, that the fifth timer set is run may be determined by the terminal device.

Optionally, that the fifth timer set is run includes: The terminal device determines that the fifth timer set is run.

It should be understood that, for specific explanations of that the terminal device determines that the fifth timer set is run, refer to the related descriptions of that the terminal device determines that the third timer set is run. Implementations thereof are similar.

In another embodiment, that the first time does not belong to the active time of the first DRX and that the fifth timer set is run at the first time include: The terminal device determines that the first time does not belong to the active time of the first DRX and that the fifth timer set is run at the first time.

It should be understood that, for the technical solution, refer to the foregoing related descriptions of that the terminal device determines that the first timer is not run but the third timer set is run at the first time. For brevity, details are not described again.

Optionally, the preset condition includes the thirteenth condition, and the first CSI may be/include/be replaced with eleventh CSI.

For the eleventh CSI, refer to the related descriptions of the seventh CSI.

Optionally, the preset condition includes the thirteenth condition, and "a terminal device skips sending first CSI at first time" may be/include/be replaced with: The terminal device skips sending the eleventh CSI at the first time.

It should be understood that, for descriptions of content included in that the terminal device skips sending the eleventh CSI at the first time, refer to the foregoing related descriptions of content included in that the terminal device skips sending the seventh CSI at the first time.

Optionally, the preset condition includes the thirteenth condition, and the preset condition may further include a condition 5.

Optionally, the preset condition includes the thirteenth condition, and the method 400 in this application may further include that a condition 5 is satisfied.

For example, if the thirteenth condition and the condition 5 are satisfied, the terminal device skips sending the first CSI or tenth CSI at the first time.

For example, if the thirteenth condition and the condition 5 are satisfied, for the eleventh cell set, the terminal device skips sending the first CSI or the eleventh CSI at the first time.

Optionally, the preset condition includes the condition 13, and the preset condition may further include a condition 6.

Optionally, the preset condition includes the condition 13, and the method in this application may further include that a condition 6 is satisfied.

For example, if the condition 13 and the condition 6 are satisfied, the terminal device skips sending the first CSI at the first time.

For example, if the condition 13 and the condition 6 are satisfied, for the eleventh cell set, the terminal device skips sending the first CSI at the first time.

Optionally, the preset condition includes the condition 13, and the preset condition may further include a condition 7.

Optionally, the preset condition includes the condition 13, and the method in this application may further include that a condition 7 is satisfied.

For example, if the condition 13 and the condition 7 are satisfied, the terminal device skips sending the first CSI at the first time.

For example, if the condition 13 and the condition 7 are satisfied, for the eleventh cell set, the terminal device skips sending the first CSI at the first time.

For example, if the condition 13, the condition 6, and the condition 7 are satisfied, the terminal device skips sending the first CSI at the first time.

For example, if the condition 13, the condition 6, and the condition 7 are satisfied, for the eleventh cell set, the terminal device skips sending the first CSI at the first time.

Optionally, the preset condition includes at least one of the condition 1, the condition 3, the condition 10, and the condition 12, and the preset condition may further include a condition 14.

Optionally, the preset condition includes at least one of the condition 1, the condition 3, the condition 10, and the condition 12, and the method 400 in this application may further include that a condition 14 is satisfied.

The fourteenth condition may include: A multicast DRX is configured for a tenth multicast service/a tenth multicast service set.

For example, that a multicast DRX is configured for a tenth multicast service set may be understood as any one or more of the following: The multicast DRX is configured for a multicast service/each multicast service included in the tenth multicast service set; a multicast service/each multicast service included in the tenth multicast service set is associated with the multicast DRX; the terminal device receives a multicast DRX configuration related to a multicast service/each multicast service included in the tenth multicast service set; for a multicast service/each multicast service included in the tenth multicast service set, the multicast DRX is configured for the terminal device; or for a multicast service/each multicast service included in the tenth multicast service set, the network device configures the multicast DRX.

For example, that a multicast DRX is configured for a tenth multicast service may be understood as any one or more of the following: The tenth multicast service is associated with the multicast DRX; the terminal device receives a multicast DRX configuration related to the tenth multicast service; for the tenth multicast service, the multicast DRX is configured for the terminal device; or for the tenth multicast service, the network device configures the multicast DRX.

For example, the tenth multicast service/the tenth multicast service set may include: the multicast/the multicast service received by the terminal device, or the multicast/the multicast service joined by the terminal device.

For example, the tenth multicast service set may include the tenth multicast service.

For example, the tenth multicast service/the tenth multicast service set may include: the any multicast/multicast service/all the multicasts/multicast services received by the terminal device, or any one or more multicasts/multicast services/all the multicasts/multicast services joined by the terminal device.

For example, the tenth multicast service may be understood as: a multicast service associated with a tenth G-RNTI and/or a tenth G-CS-RNTI, or a multicast associated with the tenth G-RNTI and/or the tenth G-CS-RNTI.

Optionally, the tenth multicast service/the tenth multicast service set is associated with a first DRX/a first cell set.

Optionally, the first cell set includes an eighteenth cell set.

For example, the eighteenth cell set is a subset of the first cell set, or the eighteenth cell set is equal to the first cell set.

The eighteenth cell set is associated with the tenth multicast service set, and the eighteenth cell set includes at least one cell.

For example, the tenth multicast service set may include: a multicast/a multicast service received by the terminal device and associated with the first cell set/the first DRX, a multicast/multicast service joined by the terminal device and associated with the first cell set/the first DRX, or a multicast/a multicast service associated with the first cell set/the first DRX.

For example, the tenth multicast service set may include: any one or more/all multicasts/multicast services received by the terminal device and associated with the first cell set/the first DRX, any one or more/all multicasts/multicast services joined by the terminal device and associated with the first cell set/the first DRX, or any one or more/all multicasts/multicast services associated with the first cell set/the first DRX.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. The terminal device receives a multicast 1 in the cell 1, and the terminal device receives a multicast 2 in the cell 2. Multicast DRXes are configured for the multicast 1 and the multicast 2. If the first time is within neither active time of the first DRX group nor active time of the multicast DRX corresponding to the multicast 1 and active time of the multicast DRX corresponding to the multicast 2, for the first DRX group/the first cell set, the terminal device skips sending the first CSI at the first time. The first DRX is the first DRX group, the tenth multicast service set is the multicast 1 and the multicast 2, the first cell set is the cell 1, the cell 2, and the cell 3, and the eighteenth cell set is the cell 1 and the cell 2.

For example, if the condition 1 and the condition 14 are satisfied, the terminal device skips sending the first CSI, second CSI, or third CSI at the first time.

For example, if the condition 1 and the condition 14 are satisfied, for the first cell set, the terminal device skips sending the first CSI, second CSI, or third CSI at the first time.

For example, if the condition 1, a condition 5, and the condition 14 are satisfied, the terminal device skips sending the first CSI or second CSI at the first time.

For example, if the condition 1, a condition 5, and the condition 14 are satisfied, for the first cell set, the terminal device skips sending the first CSI or second CSI at the first time.

For example, if the condition 1, a condition 6, and the condition 14 are satisfied, the terminal device skips sending the first CSI or third CSI at the first time.

For example, if the condition 1, a condition 6, and the condition 14 are satisfied, for the first cell set, the terminal device skips sending the first CSI or third CSI at the first time.

For example, if the condition 1, a condition 7, and the condition 14 are satisfied, the terminal device skips sending the first CSI or third CSI at the first time.

For example, if the condition 1, a condition 7, and the condition 14 are satisfied, for the first cell set, the terminal device skips sending the first CSI or third CSI at the first time.

For example, if the condition 1, a condition 6, a condition 7, and the condition 14 are satisfied, the terminal device skips sending the first CSI or third CSI at the first time.

For example, if the condition 1, a condition 6, a condition 7, and the condition 14 are satisfied, for the first cell set, the terminal device skips sending the first CSI or third CSI at the first time.

For example, if no DCP is configured for the terminal device, the symbol n is not within duration of an on-duration timer corresponding to a unicast, or an on-duration timer corresponding to a unicast is started or restarted; and the symbol n is within neither active time of a DRX group nor active time of a multicast DRX associated with the DRX group, and a multicast DRX is configured for each multicast joined by the UE and associated with the DRX group, for the DRX group or in the DRX group, the terminal device skips sending the semi-persistent CSI configured on the PUSCH; and/or the terminal device skips sending the CSI on the PUCCH.

For example, if DCP is configured for the terminal device, the symbol n is within duration of an on-duration timer corresponding to a unicast, the on-duration timer corresponding to the unicast is not started or not restarted, the symbol n is within neither active time of a unicast DRX nor active time of the multicast DRX, and a multicast DRX is configured for each multicast joined by the UE, the terminal device performs any one or more of the following:
The terminal device skips sending the semi-persistent CSI configured on the PUSCH;
if the terminal device is not configured to need to report the periodic CSI that is the L1-RSRP or the CSI that is the L1-RSRP, the terminal device skips sending, on the PUCCH, the periodic CSI that is the L1-RSRP; or
if the terminal device is not configured to need to report the periodic CSI that is not the L1-RSRP or the CSI that is not the L1-RSRP, the terminal device skips sending, on the PUCCH, the periodic CSI that is not the L1-RSRP.

For example, if the condition 3 and the condition 14 are satisfied, the terminal device skips sending the first CSI or sixth CSI at the first time.

For example, if the condition 3 and the condition 14 are satisfied, for the first cell set, the terminal device skips sending the first CSI or sixth CSI at the first time.

For example, if the condition 3, a condition 5, and the condition 14 are satisfied, the terminal device skips sending the first CSI or sixth CSI at the first time.

For example, if the condition 3, a condition 5, and the condition 14 are satisfied, for the first cell set, the terminal device skips sending the first CSI or sixth CSI at the first time.

For example, if the condition 3, a condition 8, and the condition 14 are satisfied, the terminal device skips sending the first CSI or sixth CSI at the first time.

For example, if the condition 3, a condition 8, and the condition 14 are satisfied, for the first cell set, the terminal device skips sending the first CSI or sixth CSI at the first time.

For example, if the condition 3, a condition 5, a condition 8, and the condition 14 are satisfied, the terminal device skips sending the first CSI or sixth CSI at the first time.

For example, if the condition 3, a condition 5, a condition 8, and the condition 14 are satisfied, for the first cell set, the terminal device skips sending the first CSI or sixth CSI at the first time.

For example, if no DCP is configured for the terminal device, the symbol n is not within duration of an on-duration timer corresponding to a unicast, or an on-duration timer corresponding to a unicast is started or restarted; CSI masking is configured for the terminal device; neither an on-duration timer corresponding to a DRX group nor an on-duration timer corresponding to a multicast associated with the DRX group is run in the symbol n; and a multicast DRX is configured for each multicast joined by the UE and associated with the DRX group, for the DRX group or in the DRX group, the terminal device skips sending the CSI on the PUCCH.

A combination of the condition 10/the condition 12 and the condition 14, and a combination of the condition 10/the condition 12, the condition 14, and another condition are similar to the foregoing descriptions. Details are not described herein again.

Optionally, the preset condition includes at least one of the condition 3, the condition 4, the condition 12, and the condition 13, and the preset condition may further include a condition 15.

Optionally, the preset condition includes at least one of the condition 3, the condition 4, the condition 12, and the condition 13, and the method 400 in this application may further include that a condition 15 is satisfied.

Optionally, the preset condition includes at least one of the condition 12 and the condition 13, and the method 400 in this application may further include that a condition 8/a condition 16 is not satisfied.

"A condition 8/a condition 16 is not satisfied" may be understood as: The terminal device does not obtain first information or ninth information.

For example, the first information may indicate any one or more of the following: The terminal device is to send the CSI during running of a unicast timer (for example, a first timer); or the terminal device is to be limited to sending the CSI during running of a unicast timer (for example, a first timer).

The condition 15 may include: The terminal device obtains eighth information.

The eighth information may indicate any one or more of the following: The terminal device is to send the CSI during running of a multicast timer; or the terminal device is to be limited to sending the CSI during running of a multicast timer.

"Send the CSI during running of a multicast timer" may include/be understood as any one or more of the following: sending the CSI on the PUCCH during the running of the multicast timer.

For example, the eighth information may be sent by a network device. For example, the network device may send the eighth information to the terminal device by using an RRC message.

For example, the eighth information may be multicast-related CSI-mask information (which is also referred to as multicast-related CSI masking information or multicast-related CSI-masking information). The multicast-related CSI-mask information may indicate the terminal device to send the CSI during running of drx-onDurationTimerPTM.

It should be noted that "the terminal device obtains eighth information" may include/be replaced with: A multicast-related CSI-mask is configured for the terminal device.

It should be noted that "the terminal device does not obtain the eighth information" may include/be replaced with: No multicast-related CSI-mask is configured for the terminal device.

Optionally, the preset condition includes at least one of the condition 3, the condition 4, the condition 10, and the condition 11, and the preset condition may further include a condition 8/a condition 16.

Optionally, the preset condition includes at least one of the condition 3, the condition 4, the condition 10, and the condition 11, and the method 400 in this application may further include that a condition 8/a condition 16 is satisfied.

Optionally, the preset condition includes at least one of the condition 10 and the condition 11, and the method 400 in this application may further include that a condition 15 is not satisfied.

"A condition 15 is not satisfied" may be understood as: The terminal device does not obtain the eighth information.

For example, first information may indicate any one or more of the following: The terminal device is to send the CSI during running of a unicast timer (for example, a first timer); or the terminal device is to be limited to sending the CSI during running of a unicast timer (for example, a first timer).

The condition 16 may include: The terminal device obtains ninth information.

The ninth information may indicate any one or more of the following: The terminal device is to send the CSI during running of a unicast timer (for example, a first timer); or the terminal device is to be limited to sending the CSI during running of a unicast timer (for example, a first timer).

For example, the unicast timer may include/be an on-duration timer (for example, drx-onDurationTimer) corresponding to a unicast, and/or an on-duration timer (for example, drx-onDurationTimer) corresponding to a DRX group.

"Send the CSI during running of a unicast timer (for example, a first timer)" may include/be understood as any one or more of the following: sending the CSI on the PUCCH during the running of the unicast timer (for example, the first timer).

For example, the ninth information may be sent by a network device. For example, the network device may send the ninth information to the terminal device by using an RRC message.

For example, the ninth information may be unicast-related CSI-mask information (which is also referred to as unicast-related CSI masking information or unicast-related CSI-masking information). The unicast-related CSI-mask information may indicate the terminal device to send the CSI during running of drx-onDurationTimer.

It should be noted that "the terminal device obtains ninth information" may include/be replaced with: A unicast-related CSI-mask is configured for the terminal device.

It should be noted that "the terminal device does not obtain the ninth information" may include/be replaced with: No unicast-related CSI-mask is configured for the terminal device.

Optionally, the preset condition may further include step 430/a condition 9.

Optionally, the method 400 may further include step 430.

430: The terminal device obtains fifth information, where the fifth information indicates the terminal device to send the CSI based on the multicast DRX (for example, the active time of the multicast DRX and/or an on-duration timer of the multicast DRX).

The condition 9 may include: The terminal device obtains the fifth information, where the fifth information indicates the terminal device to send the CSI based on the multicast DRX (for example, the active time of the multicast DRX and/or the on-duration timer of the multicast DRX).

"Send the CSI based on the multicast DRX (for example, the active time of the multicast DRX and/or an on-duration timer of the multicast DRX)" may include/be understood as any one or more of the following: sending the CSI based on the unicast DRX (for example, the active time of the unicast DRX/the DRX group and/or the on-duration timer of the unicast DRX/the DRX group) and the multicast DRX (for example, the active time of the multicast DRX and/or the on-duration timer of the multicast DRX); sending the CSI with a need to consider the multicast DRX (for example, the active time of the multicast DRX and/or the on-duration timer of the multicast DRX); or sending the CSI with a need to consider the unicast DRX (for example, the active time of the unicast DRX/the DRX group and/or the on-duration timer of the unicast DRX/the DRX group) and the multicast DRX (for example, the active time of the multicast DRX and/or the on-duration timer of the multicast DRX).

Optionally, the step may be performed before step 410.

The terminal device may obtain the fifth information based on the method step in the foregoing embodiment.

Optionally, the fifth information may be sent by the network device to the terminal device. Optionally, a granularity of the fifth information may be per terminal device, or may be per multicast/multicast service (for example, per G-RNTI and/or G-CS-RNTI). This is not limited in this application.

It may be understood that, if the condition 9 is not satisfied, the terminal device does not consider one or more of the following when determining whether to send the CSI: whether the multicast DRX is within the active time, whether the multicast timer is run, or whether the multicast DRX is configured for the multicast.

For example, if the condition 9 is not satisfied, the condition 1/2/12/13 may be replaced with: The first time does not belong to the active time of the first discontinuous reception DRX. For example, if the condition 9 is not satisfied, the condition 3/4/10/11 may be replaced with: The first timer is not run at the first time.

Optionally, the method 400 may further include step 440.

440: The terminal device sends sixth information to the network device, where the sixth information indicates that the terminal device can or cannot send the CSI based on the multicast DRX (for example, the active time of the multicast DRX and/or the on-duration timer of the multicast DRX); and/or the terminal device sends seventh information to the network device, where the seventh information indicates that the terminal device prefers or does not prefer sending the CSI based on the multicast DRX (for example, the active time of the multicast DRX and/or the on-duration timer of the multicast DRX).

The sixth information is used by the terminal device to report, to the network device, a capability that the CSI can or cannot be sent based on the multicast DRX (for example, the active time of the multicast DRX and/or the on-duration timer of the multicast DRX), and the seventh information is used by the terminal device to report, to the network device, preferring or not preferring of sending the CSI based on the multicast DRX (for example, the active time of the multicast DRX and/or the on-duration timer of the multicast DRX). This helps the network device select a mode.

Optionally, the step may be performed before step 410.

It should be noted that a sequence of the steps in this embodiment of this application is not limited in this application.

It should be noted that a sequence of determining different conditions in this embodiment of this application is not limited in this application.

It should be noted that, in the method provided in this embodiment of this application, in some limited cases, the terminal device skips sending the CSI (for example, the first CSI). It may be understood that the terminal device may send the CSI in a case other than the cases limited in this embodiment of this application.

In this embodiment of this application, if the preset condition is satisfied, the terminal device skips sending the first CSI at the first time. A problem of how the UE reports the CSI in a scenario in which the unicast DRX and the multicast DRX coexist is resolved, and a feasible method is provided. Both the unicast DRX and the multicast DRX are considered when the terminal device reports the CSI, so that the terminal device can also report the CSI when performing multicast receiving, and the network device can adjust a transmission parameter (for example, adjust a multicast sending parameter or adjust/select a multicast sending mode (for example, PTP or PTM, the unicast manner, or the multicast manner)) for the terminal device. This helps improve communication quality (for example, improve reliability). The terminal device does not need to always report the CSI. This facilitates power saving of the terminal device. In this way, the network device can also use a PUCCH resource on which the CSI is not sent. This helps improve resource utilization.

In this embodiment of this application, if the preset condition is satisfied, the terminal device skips sending the first CSI at the first time. This resolves a problem of how the terminal device reports the CSI in a scenario in which no multicast DRX is configured for a part or all of multicasts received or joined by the terminal device. This resolves a problem that the UE does not report the CSI in the scenario in which no multicast DRX is configured for the part or all of the multicasts received or joined by the terminal device and the network device cannot correctly/effectively perform multicast scheduling. In this way, when no multicast DRX is configured in the multicast joined by the terminal device, for the multicast, the terminal device may also report the CSI, so that the base station can obtain the CSI, and this helps the base station perform multicast scheduling. This helps improve transmission efficiency/save a resource, and the like.

In this embodiment of this application, a problem of how the terminal device reports the CSI when the CSI-masking is separately configured for the multicast is further resolved. CSI reporting can be controlled more precisely, and the base station can also better use a resource, to improve resource utilization.

It should be understood that the method provided in embodiments of this application is not only applicable to the network device and the terminal device, but also applicable to another device. FIG. 5 is a schematic diagram of another communication method according to an embodiment of this application. As shown in FIG. 5, the method 500 may include step 510.

510: If a preset condition is satisfied, a network device skips receiving first CSI at first time.

It should be understood that, for step 510, refer to the related descriptions in step 410. That is, in the technical solution of step 410, in some cases, the terminal device skips sending the CSI. Accordingly, the network device skips receiving the CSI. Alternatively, in some cases, the terminal device sends the CSI. Accordingly, the network device receives the CSI. Alternatively, the terminal device obtains some information, for example, the first information, the second information, the fifth information, the eighth information, and the ninth information in the foregoing descriptions. Accordingly, the network device sends the information. Alternatively, the terminal device does not obtain some information, for example, the third information and the fourth information in the foregoing descriptions. Accordingly, the network device does not send the information. Alternatively, the terminal device sends some information, for example, the sixth information and the seventh information in the foregoing descriptions. Accordingly, the network device receives the information. For brevity, details are not described herein again.

It should be noted that "skips receiving first CSI" may include/be understood as any one or more of the following: skipping decoding/parsing the CSI (for example, the first CSI).

It should be noted that "a network device skips receiving first CSI at first time" may include/be understood as any one or more of the following: The network device skips receiving the CSI (for example, the first CSI) on a PUCCH at the first time; the network device skips decoding the CSI (for example, the first CSI) on a PUSCH at the first time; the network device determines not to receive the first CSI at the first time; or the network device determines that the terminal device is not to send the first CSI at the first time.

In this embodiment of this application, if the preset condition is satisfied, the network device skips receiving the first CSI at the first time. A problem of how the network device receives the CSI in a scenario in which a unicast DRX and a multicast DRX coexist is resolved, and a feasible method is provided. Both the unicast DRX and the multicast DRX are considered when the network device receives the CSI, so that when receiving the CSI or decoding/parsing data/the CSI, the network device can correctly determine whether there is CSI. This helps improve decoding correctness and improve communication quality (for example, improve reliability). The network device does not need to always receive the CSI. This facilitates power saving of the network device. In this way, the network device can also use a PUCCH resource on which the CSI is not sent. This helps improve resource utilization.

It should be noted that, in the embodiments shown in FIG. 4 and FIG. 5, the first CSI may be replaced with a first SRS (Sounding Reference Signal), and the CSI may be replaced with an SRS.

It should be noted that, in the embodiment shown in FIG. 4 and/or the embodiment shown in FIG. 5, replacing the first CSI with the first SRS (Sounding Reference Signal, sounding reference signal) and replacing the CSI with the SRS may be used as another embodiment or two other embodiments. The another embodiment or the two other embodiments may be combined with the embodiment shown in FIG. 4 and/or the embodiment shown in FIG. 5, or each may be used as an independent embodiment.

Optionally, the first SRS may include a periodic SRS and/or a semi-persistent SRS.

For example, if the preset condition is satisfied, the terminal device skips sending the first CSI and/or the first SRS at the first time. This is not limited in this embodiment of this application.

It should be noted that different embodiments of this application or some steps in the different embodiments may be combined with each other to form a new embodiment. It should be noted that, unless otherwise stated or there is a logic conflict, terms and/or descriptions in the different embodiments are consistent, and may be mutually referenced.

It should be noted that a sequence of the steps in embodiments of this application is not limited in this application.

It should be noted that a sequence of determining different conditions in embodiments of this application is not limited in this application.

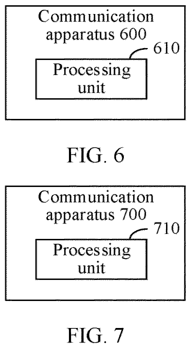

FIG. 6 is a schematic diagram of a communication apparatus according to an embodiment of this application. As shown in FIG. 6, the communication apparatus 600 may include a processing unit 610.

The processing unit 610 may be configured to support the communication apparatus 600 in performing steps 410, 420, 430, and 440, and the like, and/or configured to support the communication apparatus 600 in performing another process of the technology in this specification.

It should be noted that all related content of the steps in the foregoing method embodiments may be cited in function descriptions of corresponding function modules. Details are not described herein again.

FIG. 7 is a schematic diagram of another communication apparatus according to an embodiment of this application. As shown in FIG. 7, the communication apparatus 700 may include a processing unit 710.

The processing unit 710 may be configured to support the communication apparatus 700 in performing step 510 and the like, and/or configured to support the communication apparatus 700 in performing another process of the technology in this specification.

It should be noted that all related content of the steps in the foregoing method embodiments may be cited in function descriptions of corresponding function modules. Details are not described herein again.

An embodiment of this application further provides a communication apparatus, including at least one processor. The at least one processor is coupled to at least one memory, and the at least one processor is configured to execute a computer program or instructions stored in the at least one memory, to enable the communication method according to any one of the foregoing embodiments to be performed.

An embodiment of this application further provides a computer storage medium. The computer storage medium stores computer instructions. When the computer instructions are run on a computer, the communication methods in the foregoing related methods are enabled to be implemented.

An embodiment of this application further provides a computer program product. When the computer program product is run on a computer, the computer is enabled to perform the foregoing related steps, so that the communication methods in the foregoing related methods are implemented.

An embodiment of this application further provides a chip. The chip includes a processor and a communication interface. The communication interface is configured to receive a signal, and transmit the signal to the processor. The processor processes the signal, so that the communication methods in the foregoing embodiments are performed.

In addition, an embodiment of this application further provides an apparatus. The apparatus may be specifically a chip, a component, or a module. The apparatus may include a processor and a memory that are connected. The memory is configured to store computer-executable instructions. When the apparatus is run, the processor may execute the computer-executable instructions stored in the memory, to enable the chip to perform the methods in the foregoing method embodiments.

The communication apparatus, the computer storage medium, the computer program product, or the chip provided in embodiments is configured to perform a corresponding method provided above. Therefore, for beneficial effects that can be achieved by the communication apparatus, the computer storage medium, the computer program product, or the chip, refer to beneficial effects of the corresponding method provided above. Details are not described herein again.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes: any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
if a preset condition is satisfied, skipping, by a terminal device, sending first channel state information CSI at first time, wherein the preset condition comprises any one or more of the following:
a first condition, wherein the first condition is that the first time does not belong to active time of a first discontinuous reception DRX and that the first time does not belong to active time of a second DRX set;
a second condition, wherein the second condition is that the first time does not belong to active time of a first DRX and that the first time belongs to active time of a third DRX set;
a third condition, wherein the third condition is that neither a first timer nor a second timer set is run at the first time;
a fourth condition, wherein the fourth condition is that a first timer is not run but a third timer set is run at the first time;
a tenth condition, wherein the tenth condition is that a first timer is not run at the first time and that the first time does not belong to active time of a fourth DRX set;
an eleventh condition, wherein the eleventh condition is that a first timer is not run at the first time and that the first time belongs to active time of a fifth DRX set;
a twelfth condition, wherein the twelfth condition is that the first time does not belong to active time of a first DRX and that a fourth timer set is not run; or
a thirteenth condition, wherein the thirteenth condition is that the first time does not belong to active time of a first DRX and that a fifth timer set is run, wherein
the first DRX is for controlling monitoring of control information specific to the terminal device;
the second DRX set comprises at least one multicast DRX, the at least one multicast DRX comprises a first multicast DRX, and the first multicast DRX is for controlling monitoring of control information related to a first multicast service;
the third DRX set comprises at least one multicast DRX, the at least one multicast DRX comprises a second multicast DRX, and the second multicast DRX is for controlling monitoring of control information related to a second multicast service;
the fourth DRX set comprises at least one multicast DRX, the at least one multicast DRX comprises a fourth multicast DRX, and the fourth multicast DRX is for controlling monitoring of control information related to a fifth multicast service;
the fifth DRX set comprises at least one multicast DRX, the at least one multicast DRX comprises a fifth multicast DRX, and the fifth multicast DRX is for controlling monitoring of control information related to a sixth multicast service;
during running of the first timer, the terminal device monitors the control information specific to the terminal device;
the second timer set comprises at least one multicast timer, the at least one multicast timer comprises a third multicast timer, and during running of the third multicast timer, the terminal device monitors control information related to a third multicast service;
the third timer set comprises at least one multicast timer, the at least one multicast timer comprises a fourth multicast timer, and during running of the fourth multicast timer, the terminal device monitors control information related to a fourth multicast service;
the fourth timer set comprises at least one multicast timer, the at least one multicast timer comprises a fifth multicast timer, and during running of the fifth multicast timer, the terminal device monitors control information related to a seventh multicast service; and
the fifth timer set comprises at least one multicast timer, the at least one multicast timer comprises a sixth multicast timer, and during running of the sixth multicast timer, the terminal device monitors control information related to an eighth multicast service.

2. The communication method according to claim 1, wherein the preset condition comprises the first condition, and the skipping, by a terminal device, sending first CSI at first time comprises:
for a first cell set, skipping, by the terminal device, sending the first CSI at the first time, wherein
the first cell set comprises at least one cell, and the first cell set is associated with the first DRX.

3. The communication method according to claim 2, wherein the first cell set comprises a second cell set, wherein
the second cell set is associated with the second DRX set, and the second cell set comprises at least one cell.

4. The communication method according to any one of claims 1 to 3, wherein the preset condition comprises the second condition, and the skipping, by a terminal device, sending first CSI at first time comprises:
for a third cell set, skipping, by the terminal device, sending the first CSI at the first time, wherein
the third cell set comprises at least one cell, and the third cell set is not associated with the third DRX set.

5. The communication method according to claim 4, wherein the third cell set is associated with the first DRX.

6. The communication method according to claim 4 or 5, wherein the first cell set comprises the third cell set.

7. The communication method according to any one of claims 4 to 6, wherein the third cell set is not associated with a fifth multicast service set, wherein
the fifth multicast service set comprises at least one multicast service, the at least one multicast service comprises a ninth multicast service, and no multicast DRX is configured for the ninth multicast service.

8. The communication method according to claim 7, wherein the fifth multicast service set is associated with the first DRX.

9. The communication method according to any one of claims 1 to 8, wherein the preset condition comprises the third condition, and the skipping, by a terminal device, sending first CSI at first time comprises:
for the first cell set, skipping, by the terminal device, sending the first CSI at the first time.

10. The communication method according to claim 9, wherein the first cell set comprises a fourth cell set, wherein
the fourth cell set is associated with the second timer set, and the fourth cell set comprises at least one cell.

11. The communication method according to any one of claims 1 to 10, wherein
the preset condition comprises at least one of the first condition, the third condition, the tenth condition, and the twelfth condition, and the preset condition further comprises:
a multicast DRX is configured for a tenth multicast service, wherein the tenth multicast service comprises a multicast service joined by the terminal device.

12. The communication method according to claim 11, wherein the tenth multicast service is associated with the first DRX.

13. The communication method according to any one of claims 1 to 12, wherein the preset condition comprises the fourth condition, and the skipping, by a terminal device, sending first CSI at first time comprises:
for a fifth cell set, skipping, by the terminal device, sending the first CSI at the first time, wherein
the fifth cell set comprises at least one cell, and the fifth cell set is not associated with the third timer set.

14. The communication method according to claim 13, wherein the fifth cell set is associated with the first timer or the first DRX.

15. The communication method according to claim 13 or 14, wherein the first cell set comprises the fifth cell set.

16. The communication method according to any one of claims 9 to 15, wherein the fifth cell set is not associated with a seventh multicast service set, wherein
the seventh multicast service set comprises at least one multicast service, the at least one multicast service comprises an eleventh multicast service, and no multicast DRX is configured for the eleventh multicast service.

17. The communication method according to claim 16, wherein the seventh multicast service set is associated with the first DRX.

18. The communication method according to any one of claims 1 to 17, wherein the preset condition comprises the tenth condition, and the skipping, by a terminal device, sending first CSI at first time comprises:
for the first cell set, skipping, by the terminal device, sending the first CSI at the first time, wherein
the first cell set comprises the at least one cell, and the first cell set is associated with the first DRX.

19. The communication method according to claim 18, wherein the first cell set comprises an eighth cell set, wherein
the eighth cell set is associated with the fourth DRX set, and the eighth cell set comprises at least one cell.

20. The communication method according to any one of claims 1 to 19, wherein the preset condition comprises the eleventh condition, and the skipping, by a terminal device, sending first CSI at first time comprises:
for a ninth cell set, skipping, by the terminal device, sending the first CSI at the first time, wherein
the ninth cell set comprises at least one cell, and the ninth cell set is not associated with the fifth DRX set.

21. The communication method according to claim 20, wherein the ninth cell set is associated with the first DRX.

22. The communication method according to claim 20 or 21, wherein the first cell set comprises the ninth cell set.

23. The communication method according to any one of claims 20 to 22, wherein the ninth cell set is not associated with an eighth multicast service set, wherein
the eighth multicast service set comprises at least one multicast service, the at least one multicast service comprises a twelfth multicast service, and no multicast DRX is configured for the twelfth multicast service.

24. The communication method according to claim 23, wherein the eighth multicast service set is associated with the first DRX.

25. The communication method according to any one of claims 1 to 24, wherein the preset condition comprises the twelfth condition, and the skipping, by a terminal device, sending first CSI at first time comprises:
for the first cell set, skipping, by the terminal device, sending the first CSI at the first time.

26. The communication method according to claim 25, wherein the first cell set comprises a tenth cell set, wherein
the tenth cell set is associated with the fourth timer set, and the tenth cell set comprises at least one cell.

27. The communication method according to any one of claims 1 to 26, wherein the preset condition comprises the thirteenth condition, and the skipping, by a terminal device, sending first CSI at first time comprises:
for an eleventh cell set, skipping, by the terminal device, sending the first CSI at the first time, wherein
the eleventh cell set comprises at least one cell, and the eleventh cell set is not associated with the fifth timer set.

28. The communication method according to claim 27, wherein the eleventh cell set is associated with the first timer or the first DRX.

29. The communication method according to claim 27 or 28, wherein the first cell set comprises the eleventh cell set.

30. The communication method according to any one of claims 27 to 29, wherein the eleventh cell set is not associated with a ninth multicast service set, wherein
the ninth multicast service set comprises at least one multicast service, the at least one multicast service comprises a thirteenth multicast service, and no multicast DRX is configured for the thirteenth multicast service.

31. The communication method according to claim 30, wherein the ninth multicast service set is associated with the first DRX.

32. The communication method according to any one of claims 1 to 31, wherein the first CSI comprises any one or more of the following:
semi-persistent CSI;
periodic CSI;
CSI configured on a physical uplink shared channel PUSCH;
semi-persistent CSI configured on a PUSCH;
CSI configured on a physical uplink control channel PUCCH;
periodic CSI configured on a PUCCH;
semi-persistent CSI configured on a PUCCH;
CSI that is layer 1 reference signal received power L1-RSRP;
CSI that is not L1-RSRP;
periodic CSI that is L1-RSRP;
periodic CSI that is not L1-RSRP;
CSI that is configured on a PUCCH and that is L1-RSRP;
CSI that is configured on a PUCCH and that is not L1-RSRP;
periodic CSI that is configured on a PUCCH and that is L 1-RSRP; or
periodic CSI that is configured on a PUCCH and that is not L1-RSRP.

33. The communication method according to any one of claims 1 to 32, wherein the skipping, by a terminal device, sending first CSI at first time comprises any one or more of the following:
skipping, by the terminal device, sending CSI on the PUCCH;
skipping, by the terminal device, sending the periodic CSI on the PUCCH;
skipping, by the terminal device, sending the semi-persistent CSI on the PUCCH;
skipping, by the terminal device, sending CSI on the PUSCH;
skipping, by the terminal device, sending the semi-persistent CSI on the PUSCH;
skipping, by the terminal device, sending, on the PUCCH, the CSI that is the L1-RSRP;
skipping, by the terminal device, sending, on the PUCCH, the CSI that is not the L1-RSRP;
skipping, by the terminal device, sending, on the PUCCH, the periodic CSI that is the L1-RSRP; or
skipping, by the terminal device, sending, on the PUCCH, the periodic CSI that is not the L1-RSRP.

34. The communication method according to any one of claims 1 to 33, wherein the preset condition comprises the third condition and/or the fourth condition, and the method and/or the preset condition further comprise/comprises:
obtaining, by the terminal device, first information, wherein the first information indicates the terminal device to send the CSI during running of a unicast timer and/or during running of a multicast timer.

35. The communication method according to any one of claims 1 to 34, wherein the preset condition comprises at least one of the third condition, the fourth condition, the twelfth condition, and the thirteenth condition, and the method and/or the preset condition further comprise/comprises:
obtaining, by the terminal device, eighth information, wherein the eighth information indicates the terminal device to send the CSI during the running of the multicast timer.

36. The communication method according to any one of claims 1 to 33, wherein the preset condition comprises the tenth condition and/or the eleventh condition, and the method and/or the preset condition further comprise/comprises:
obtaining, by the terminal device, first information, wherein the first information indicates the terminal device to send the CSI during running of a unicast timer.

37. The communication method according to any one of claims 1 to 36, wherein the preset condition further comprises any one or more of the following:
the terminal device does not obtain second information, wherein the second information comprises information related to a wake-up signal;
the first time is not within duration corresponding to the first timer; or
the first timer is started or restarted.

38. The communication method according to any one of claims 1 to 36, wherein the preset condition comprises the first condition and/or the second condition, and the preset condition further comprises any one or more of the following:
the terminal device obtains second information, wherein the second information comprises information related to a wake-up signal;
the first time is within duration corresponding to the first timer; or
the first timer is not started or not restarted.

39. The communication method according to claim 38, wherein the preset condition further comprises:
the terminal device does not obtain third information; and/or
the terminal device does not obtain fourth information, wherein
the third information indicates to report the periodic CSI that is the L1-RSRP or the CSI that is the L1-RSRP, and the fourth information indicates to report the periodic CSI that is not the L1-RSRP or the CSI that is not the L1-RSRP.

40. The communication method according to any one of claims 1 to 39, wherein the method and/or the preset condition further comprise/comprises:
obtaining, by the terminal device, fifth information, wherein the fifth information indicates the terminal device to send the CSI based on a multicast DRX.

41. The communication method according to any one of claims 1 to 40, wherein the method and/or the preset condition further comprise/comprises:
sending, by the terminal device, sixth information to a network device, wherein the sixth information indicates that the terminal device is capable of or not capable of sending the CSI based on the multicast DRX; and/or
sending, by the terminal device, seventh information to the network device, wherein the seventh information indicates that the terminal device prefers or does not prefer sending the CSI based on the multicast DRX.

42. A communication method, comprising:
if a preset condition is satisfied, skipping, by a network device, receiving first CSI at first time, wherein the preset condition comprises any one or more of the following:
a first condition, wherein the first condition is that the first time does not belong to active time of a first DRX and that the first time does not belong to active time of a second DRX set;
a second condition, wherein the second condition is that the first time does not belong to active time of a first DRX and that the first time belongs to active time of a third DRX set;
a third condition, wherein the third condition is that neither a first timer nor a second timer set is run at the first time;
a fourth condition, wherein the fourth condition is that a first timer is not run but a third timer set is run at the first time;
a tenth condition, wherein the tenth condition is that a first timer is not run at the first time and that the first time does not belong to active time of a fourth DRX set;
an eleventh condition, wherein the eleventh condition is that a first timer is not run at the first time and that the first time belongs to active time of a fifth DRX set;
a twelfth condition, wherein the twelfth condition is that the first time does not belong to active time of a first DRX and that a fourth timer set is not run; or
a thirteenth condition, wherein the thirteenth condition is that the first time does not belong to active time of a first DRX and that a fifth timer set is run, wherein
the first DRX is for controlling monitoring of control information specific to a terminal device;
the second DRX set comprises at least one multicast DRX, the at least one multicast DRX comprises a first multicast DRX, and the first multicast DRX is for controlling monitoring of control information related to a first multicast service;
the third DRX set comprises at least one multicast DRX, the at least one multicast DRX comprises a second multicast DRX, and the second multicast DRX is for controlling monitoring of control information related to a second multicast service;
the fourth DRX set comprises at least one multicast DRX, the at least one multicast DRX comprises a fourth multicast DRX, and the fourth multicast DRX is for controlling monitoring of control information related to a fifth multicast service;
the fifth DRX set comprises at least one multicast DRX, the at least one multicast DRX comprises a fifth multicast DRX, and the fifth multicast DRX is for controlling monitoring of control information related to a sixth multicast service;
during running of the first timer, the terminal device monitors the control information specific to the terminal device;
the second timer set comprises at least one multicast timer, the at least one multicast timer comprises a third multicast timer, and during running of the third multicast timer, the terminal device monitors control information related to a third multicast service;
the third timer set comprises at least one multicast timer, the at least one multicast timer comprises a fourth multicast timer, and during running of the fourth multicast timer, the terminal device monitors control information related to a fourth multicast service;
the fourth timer set comprises at least one multicast timer, the at least one multicast timer comprises a fifth multicast timer, and during running of the fifth multicast timer, the terminal device monitors control information related to a seventh multicast service; and
the fifth timer set comprises at least one multicast timer, the at least one multicast timer comprises a sixth multicast timer, and during running of the sixth multicast timer, the terminal device monitors control information related to an eighth multicast service.

43. The communication method according to claim 42, wherein the preset condition comprises the first condition, and the skipping, by a network device, receiving first CSI at first time comprises:
for a first cell set, skipping, by the network device, receiving the first CSI at the first time, wherein
the first cell set comprises at least one cell, and the first cell set is associated with the first DRX.

44. The communication method according to claim 43, wherein the first cell set comprises a second cell set, wherein
the second cell set is associated with the second DRX set, and the second cell set comprises at least one cell.

45. The communication method according to any one of claims 42 to 44, wherein the preset condition comprises the second condition, and the skipping, by a network device, receiving first CSI at first time comprises:
for a third cell set, skipping, by the network device, receiving the first CSI at the first time, wherein
the third cell set comprises at least one cell, and the third cell set is not associated with the third DRX set.

46. The communication method according to claim 45, wherein the third cell set is associated with the first DRX.

47. The communication method according to claim 45 or 46, wherein the first cell set comprises the third cell set.

48. The communication method according to any one of claims 45 to 47, wherein the third cell set is not associated with a fifth multicast service set, wherein
the fifth multicast service set comprises at least one multicast service, the at least one multicast service comprises a ninth multicast service, and no multicast DRX is configured for the ninth multicast service.

49. The communication method according to claim 48, wherein the fifth multicast service set is associated with the first DRX.

50. The communication method according to any one of claims 42 to 49, wherein the preset condition comprises the third condition, and the skipping, by a network device, receiving first CSI at first time comprises:
for the first cell set, skipping, by the network device, receiving the first CSI at the first time.

51. The communication method according to claim 50, wherein the first cell set comprises a fourth cell set, wherein
the fourth cell set is associated with the second timer set, and the fourth cell set comprises at least one cell.

52. The communication method according to any one of claims 42 to 51, wherein the preset condition comprises at least one of the first condition, the third condition, the tenth condition, and the twelfth condition, and the preset condition further comprises:
a multicast DRX is configured for a tenth multicast service, wherein the tenth multicast service comprises a multicast service joined by the terminal device.

53. The communication method according to claim 52, wherein the tenth multicast service is associated with the first DRX.

54. The communication method according to any one of claims 42 to 53, wherein the preset condition comprises the fourth condition, and the skipping, by a network device, receiving first CSI at first time comprises:
for a fifth cell set, skipping, by the network device, receiving the first CSI at the first time, wherein
the fifth cell set comprises at least one cell, and the fifth cell set is not associated with the third timer set.

55. The communication method according to claim 54, wherein the fifth cell set is associated with the first timer or the first DRX.

56. The communication method according to claim 54, wherein the first cell set comprises the fifth cell set.

57. The communication method according to any one of claims 50 to 56, wherein the fifth cell set is not associated with a seventh multicast service set, wherein
the seventh multicast service set comprises at least one multicast service, the at least one multicast service comprises an eleventh multicast service, and no multicast DRX is configured for the eleventh multicast service.

58. The communication method according to claim 57, wherein the seventh multicast service set is associated with the first DRX.

59. The communication method according to any one of claims 42 to 58, wherein the preset condition comprises the tenth condition, and skipping, by the terminal device, sending the first CSI at the first time comprises:
for the first cell set, skipping, by the terminal device, sending the first CSI at the first time, wherein
the first cell set comprises the at least one cell, and the first cell set is associated with the first DRX.

60. The communication method according to claim 59, wherein the first cell set comprises an eighth cell set, wherein
the eighth cell set is associated with the fourth DRX set, and the eighth cell set comprises at least one cell.

61. The communication method according to any one of claims 42 to 60, wherein the preset condition comprises the eleventh condition, and skipping, by the terminal device, sending the first CSI at the first time comprises:
for a ninth cell set, skipping, by the terminal device, sending the first CSI at the first time, wherein
the ninth cell set comprises at least one cell, and the ninth cell set is not associated with the fifth DRX set.

62. The communication method according to claim 61, wherein the ninth cell set is associated with the first DRX.

63. The communication method according to claim 61 or 62, wherein the first cell set comprises the ninth cell set.

64. The communication method according to any one of claims 60 to 63, wherein the ninth cell set is not associated with an eighth multicast service set, wherein
the eighth multicast service set comprises at least one multicast service, the at least one multicast service comprises a twelfth multicast service, and no multicast DRX is configured for the twelfth multicast service.

65. The communication method according to claim 64, wherein the eighth multicast service set is associated with the first DRX.

66. The communication method according to any one of claims 42 to 65, wherein the preset condition comprises the twelfth condition, and skipping, by the terminal device, sending the first CSI at the first time comprises:
for the first cell set, skipping, by the terminal device, sending the first CSI at the first time.

67. The communication method according to claim 66, wherein the first cell set comprises a tenth cell set, wherein
the tenth cell set is associated with the fourth timer set, and the tenth cell set comprises at least one cell.

68. The communication method according to any one of claims 42 to 67, wherein the preset condition comprises the thirteenth condition, and skipping, by the terminal device, sending the first CSI at the first time comprises:
for an eleventh cell set, skipping, by the terminal device, sending the first CSI at the first time, wherein
the eleventh cell set comprises at least one cell, and the eleventh cell set is not associated with the fifth timer set.

69. The communication method according to claim 68, wherein the eleventh cell set is associated with the first timer or the first DRX.

70. The communication method according to claim 68 or 69, wherein the first cell set comprises the eleventh cell set.

71. The communication method according to any one of claims 68 to 70, wherein the eleventh cell set is not associated with a ninth multicast service set, wherein
the ninth multicast service set comprises at least one multicast service, the at least one multicast service comprises a thirteenth multicast service, and no multicast DRX is configured for the thirteenth multicast service.

72. The communication method according to claim 71, wherein the ninth multicast service set is associated with the first DRX.

73. The communication method according to any one of claims 42 to 72, wherein the first CSI comprises any one or more of the following:
semi-persistent CSI;
periodic CSI;
CSI configured on a physical uplink shared channel PUSCH;
semi-persistent CSI configured on a PUSCH;
CSI configured on a physical uplink control channel PUCCH;
periodic CSI configured on a PUCCH;
semi-persistent CSI configured on a PUCCH;
CSI that is layer 1 reference signal received power L1-RSRP;
CSI that is not L1-RSRP;
periodic CSI that is L1-RSRP;
periodic CSI that is not L1-RSRP;
CSI that is configured on a PUCCH and that is L1-RSRP;
CSI that is configured on a PUCCH and that is not L1-RSRP;
periodic CSI that is configured on a PUCCH and that is L 1-RSRP; or
periodic CSI that is configured on a PUCCH and that is not L1-RSRP.

74. The communication method according to any one of claims 42 to 72, wherein the skipping, by a network device, receiving first CSI at first time comprises any one or more of the following:
skipping, by the network device, receiving CSI on a PUCCH;
skipping, by the network device, receiving periodic CSI on a PUCCH;
skipping, by the network device, receiving semi-persistent CSI on a PUCCH;
skipping, by the network device, receiving CSI on a PUSCH;
skipping, by the network device, receiving semi-persistent CSI on a PUSCH;
skipping, by the network device, receiving, on a PUCCH, CSI that is L1-RSRP;
skipping, by the network device, receiving, on a PUCCH, CSI that is not L1-RSRP;
skipping, by the network device, receiving, on a PUCCH, periodic CSI that is L1-RSRP; or
skipping, by the network device, receiving, on a PUCCH, periodic CSI that is not L 1-RSRP.

75. The communication method according to any one of claims 42 to 74, wherein the preset condition comprises the third condition and/or the fourth condition, and the method and/or the preset condition further comprise/comprises:
sending, by the network device, first information, wherein the first information indicates the terminal device to send the CSI during running of a unicast timer and/or during running of a multicast timer.

76. The communication method according to any one of claims 42 to 75, wherein the preset condition comprises at least one of the third condition, the fourth condition, the twelfth condition, and the thirteenth condition, and the method and/or the preset condition further comprise/comprises:
obtaining, by the terminal device, eighth information, wherein the eighth information indicates the terminal device to send the CSI during the running of the multicast timer.

77. The communication method according to any one of claims 42 to 74, wherein the preset condition comprises the tenth condition and/or the eleventh condition, and the method and/or the preset condition further comprise/comprises:
obtaining, by the terminal device, first information, wherein the first information indicates the terminal device to send the CSI during running of a unicast timer.

78. The communication method according to any one of claims 42 to 77, wherein the preset condition further comprises any one or more of the following:
the network device does not send second information, wherein the second information comprises information related to a wake-up signal;
the first time is not within duration corresponding to the first timer; or
the first timer is started or restarted.

79. The communication method according to any one of claims 42 to 77, wherein the preset condition comprises the first condition and/or the second condition, and the preset condition further comprises any one or more of the following:
the network device sends second information, wherein the second information comprises information related to a wake-up signal;
the first time is within duration corresponding to the first timer; or
the first timer is not started or not restarted.

80. The communication method according to claim 79, wherein the preset condition further comprises:
the network device does not send third information; and/or
the network device does not send fourth information, wherein
the third information indicates the terminal device to report the periodic CSI that is the L1-RSRP or the CSI that is the L1-RSRP, and the fourth information indicates the terminal device to report the periodic CSI that is not the L1-RSRP or the CSI that is not the L1-RSRP.

81. The communication method according to any one of claims 42 to 80, wherein the method and/or the preset condition further comprise/comprises:
sending, by the network device, fifth information, wherein the fifth information indicates the terminal device to send the CSI based on a multicast DRX.

82. The communication method according to any one of claims 42 to 81, wherein the method and/or the preset condition further comprise/comprises:
receiving, by the network device, sixth information sent by the terminal device, wherein the sixth information indicates that the terminal device is capable of or not capable of sending the CSI based on the multicast DRX; and/or
receiving, by the network device, seventh information sent by the terminal device, wherein the seventh information indicates that the terminal device prefers or does not prefer sending the CSI based on the multicast DRX.

83. A communication apparatus, comprising a module configured to implement the communication method according to any one of claims 1 to 41 or 42 to 82.

84. A communication apparatus, comprising at least one processor, wherein the at least one processor is coupled to at least one memory, and the at least one processor is configured to execute a computer program or instructions stored in the at least one memory, to enable the communication method according to any one of claims 1 to 41 or 42 to 82 to be performed.

85. A computer-readable storage medium, wherein the storage medium stores a computer program or instructions; and when the computer program or instructions are executed by a communication apparatus, the communication method according to any one of claims 1 to 41 or 42 to 82 is enabled to be performed.
